(19) **Europäisches Patentamt / European Patent Office / Office européen des brevets**

(11) **EP 2 830 314 A1**

(12) **EUROPEAN PATENT APPLICATION**
published in accordance with Art. 153(4) EPC

(43) Date of publication:
**28.01.2015 Bulletin 2015/05**

(51) Int Cl.:
**H04N 9/64** (2006.01)

(21) Application number: **13763708.8**

(22) Date of filing: **15.03.2013**

(86) International application number:
**PCT/CN2013/072711**

(87) International publication number:
**WO 2013/139238 (26.09.2013 Gazette 2013/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.03.2012 CN 201210073220**
**06.07.2012 CN 201210236550**

(71) Applicant: **Typonteq Co. Ltd**
**Beijing 100081 (CN)**

(72) Inventor: **JIA, Wei**
**Beijing 100081 (CN)**

(74) Representative: **Engdahl, Stefan**
**AWAPATENT AB**
**P.O. Box 45086**
**104 30 Stockholm (SE)**

(54) **METHOD FOR MANAGING COLOR DATA OF COLOR IMAGE**

(57)    The invention discloses a method of managing color data based on color data in an HSaln format in an HSaln color space, comprising: acquiring color data in an XYZ format at an input device side; converting the acquired color data in the XYZ format at the input device side into color data in an HSaln format. The method can further comprise mapping the color data in the HSaln format at the input device side to obtain color data in an HSaln format at an output device side; converting the color data in the HSaln format at the output device side into color data in an XYZ format; converting the color data in the XYZ format at the output device side into one in a format of the color data of the output device. Since a conversion of chromatic color data independent of the device into chromatic color data dependent on the output device is achieved in this method, the output chromatic image is not influenced by color characteristics of the output device; and the analytical matrix operation adopted in the managing process is easily achieved, so the calculating process for the conversion is simple, the conversion accuracy and efficiency are improved, and the conversion speed is accelerated.

Fig. 2

EP 2 830 314 A1

**Description**

**TECHNICAL FIELD**

The invention relates to the input and output processing technology of chromatic images, and in particular to the technology for achieving color consistency between input and output chromatic images.

**BACKGROUND ART**

Along with the development of the computer science and the color input and output technology, the chromatic image, as an information carrier, has been more and more widely applied in multiple fields such as printing, screenage, advertising, film and television, electronic commerce, and digital entertainment, and the people also have higher and higher demands for the color reproduction quality. But due to the impacts of the factors such as the imaging mechanism, the color space, the element performance, the consumptive material characteristic, and the machining accuracy, the difference between the chromatic characteristics of the input and output devices is very significant, which makes it possible that a color deviation occurs when a cross-medium or cross-platform display of the chromatic image is performed.

For example, cameras of different brands produced by different manufacturers are used to shoot the same scene at the same time and at the same place. Due to the element performances and the consumptive material characteristics of the camera devices themselves, a color deviation occurs when the images of the pictures taken by the two cameras are displayed on the computer. That is to say, if the picture of the same scene is taken by different cameras, different color effects may be displayed on the computer.

Another example is that if the same picture stored in the computer is printed using printers of different brands produced by different manufacturers, different printing effects may occur, and two printed images with a color deviation are presented.

In order to remove the color deviation phenomenon caused by the device to achieve the object "what you see is what you get", ICC (International Color Consortium) introduces a color space model (CIELab color space model) independent of the device to uniformly describe the chromatic characteristics of the device, performs a nonlinear correction by means of a gamut mapping and a relationship between the input and the output of the device, establishes a color mapping relationship with the relevant color space (RGB, CMY, etc.) of the device, and achieves an accurate conversion of color information from the input device to the color space independent of the device and then to the color space of the output device.

But the CIELab color space model adopted in the prior art is a color space model based on an opponent color space model, and the basis of dependency thereof is that red and green serve as the a axis of CIELab, yellow and blue serve as the b axis of CIELab, black and white serve as the L axis of CIELab, and the three axes a, b, L are perpendicular to one another. This basis of construction of the model just decides that CIELab has an nonuniformity, i.e., the perpendicular setting of the red and green axes to the yellow and blue axes makes the red-yellow hue difference, the yellow-green hue difference and the green-blue hue difference be forcibly set to 90 degrees. As we all know, according to the Munsell color space model recognized as the most uniform one, the hue difference among red (5R), green (10G) and blue (10B) is substantially 120°, and yellow (10YR) is between red (5R) and green (10G) and the difference among the three colors is 60° , so the construction of the CIELab color space model has a comparatively large nonuniformity, so that the color of the converted chromatic image based on the CIELab color space model also has a comparatively large nonuniformity.

The CIELAB color space and the color space and color appearance space JCh based on CIELAB all have the following defects:

1. The color adaptation and transformation are inaccurate;
2. The hue is nonuniform, in particular in the blue area, the Iso-hue plane is a complicated curved surface, and the curved surface equations at different hues are different; and the hue of HGICl takes on a distribution similar to the Munsell hue ring, which is a recognized uniform hue distribution, and the Iso-hue plane is an absolute plane;
3. The luminance and chrominance are not independent.

The HSaln color space and the color appearance space based on HSaln have the following advantages of overcoming the defects of the CIEALB color space:

1. The Iso-hue plane is a plane passing through the HSaln gray axis, and the hue angle is unique in the system of polar coordinates, so that it becomes possible that the color gamut transformation undergoes a one-dimensional change within the Iso-hue plane, and the color gamut mapping takes on a simple and accurate one-dimensional change;

2. The luminance In, the chromatic vector $\overline{Cl}$, and the gray GI are all orthogonal to the hue, so that the one-dimensional color gamut mapping is simple and feasible.

In addition, when converting the chromatic image of the input device into a chromatic image based on a CIELab color space model, the calculating method is complicated, which renders the low conversion efficiency. The conversion of the chromatic image based on the CIEXYZ color space model of the input device into a chromatic image based on the CIELab color space model can be specifically performed according to the following formulae:

$$\begin{cases} L = 116\left(\dfrac{Y}{Y_0}\right)^{\frac{1}{3}} - 161 \\[2mm] a = 500\left[\left(\dfrac{X}{X_0}\right)^{\frac{1}{3}} - \left(\dfrac{Y}{Y_0}\right)^{\frac{1}{3}}\right] \\[2mm] b = 200\left[\left(\dfrac{Y}{Y_0}\right)^{\frac{1}{3}} - \left(\dfrac{Z}{Z_0}\right)^{\frac{1}{3}}\right] \end{cases} ; \text{under a light source} D_{65} \begin{cases} X_0 = 95.045 \\ Y_0 = 100 \\ Z_0 = 108.255 \end{cases}$$

In the above formulae, $X_0$, $Y_0$ and $Z_0$ are respectively the color deviation data of the input device, and $X$, $Y$ and $Z$ are the color data of the chromatic image based on the CIEXYZ color space model of the input device; $L$, $a$ and $b$ are the data of the pixels of the converted chromatic image based on the CIELab color space model.

It can be seen from the above formulae that there are several calculations of extracting a cube root, and on the contrary, there will be several calculations of obtaining a third power in the calculating process of the chromatic image based on the CIEXYZ color space model; further, it will be more complicated if the calculation for conversion is directly performed at the CIELab color space model and at the RGB color space model in the physical space by stepping over the CIEXYZ color space model. Thus, the method of the prior art is comparatively complicated in the calculating and is low in the conversion efficiency.

Further, the conversion formulae of CIELab and XYZ in the above formulae are results concluded by means of a test fitting, and thus will bring calculation errors in the image input, processing and output with high accuracies, which renders the low accuracy of the chromatic color data obtained by calculation comparatively.

To sum up, the method of adopting the CIELab color space model to remove such color deviation phenomenon caused by the device in the prior art will make the color of the converted chromatic image based on the CIELab color space model also have a comparatively large nonuniformity; further, the calculating method is comparatively complicated, which renders the low conversion efficiency, the low conversion speed, and the low accuracy of the result obtained by calculation.

## SUMMARY OF THE INVENTION

The embodiments of the invention provide a management method of color data of a chromatic image, which has a better uniformity and is simple in calculation.

According to one aspect of the invention, a method of managing color data based on color data in an HSaIn format in an HSaIn color space is provided, the method comprising: acquiring color data in an XYZ format at an input device side; converting the acquired color data in the XYZ format at the input device side into color data in an HSaIn format.

According to another aspect of the invention, a method of managing color data based on color data in an HSaIn format in an HSaIn color space is provided, the method comprising: acquiring color data in an HSaIn format; converting the color data in the HSaIn format into color data in an XYZ format at an output device side.

In the above two methods provided by the invention, the HSaIn color space is a color space based on a CIEXYZ Cartesian color space, of a color appearance attribute, and described by a cylindrical coordinate system, and is composed of a chromatic plane and a gray axis passing through the origin of the chromatic plane and perpendicular to the chromatic plane;

wherein the chromatic plane is a plane of the CIEXYZ Cartesian color space X+Y+Z=K, where K is a real constant; an XYZ axis of the CIEXYZ Cartesian color space performs a projection along a direction of a straight line X=Y=Z on a plane X+Y+Z=K to obtain three projection axes that are 120° with respect to one another within the chromatic plane, and unit vectors in the directions of the projection axes are $\vec{i}$, $\vec{j}$ and $\vec{k}$;

wherein the gray axis is a number axis composed of the straight line X=Y=Z of the CIEXYZ Cartesian color space, a numerical value on the number axis represents a gray GI value in the HSaIn color space, a length of a chromatic vector parallel to the chromatic plane represents a chromatic CI value in the HSaIn color space, and a polar angle of the chromatic vector represents a hue angle H in the HSaIn color space;

wherein the color data in the HSaIn format is in a format of the color data in the HSaIn color space, and comprises a hue H, a saturation Sa, and an intensity In in the HSaIn color space.

According to another aspect of the invention, a method of managing color data based on color data in an HSaIn format in an HSaIn color appearance color space is further provided, the method comprising: acquiring color data in an XYZ format in a CIEXYZ color space at an input device side; converting the acquired color data in the XYZ format into color data in an XYZ format in a CIEXYZ color appearance color space; converting the color data in the XYZ format in the CIEXYZ color appearance color space into color data in an HSaIn format in an HSaIn color appearance color space at the input device side.

According to a further aspect of the invention, a method of managing color data based on color data in an HSaIn format in an HSaIn color appearance color space is provided, the method comprising: acquiring color data in an HSaIn format in an HSaIn color appearance color space at an output device side; converting the color data in the HSaIn format in the HSaIn color appearance color space into color data in an XYZ format in a CIEXYZ color appearance color space at the output device side; converting the color data in the XYZ format in the CIEXYZ color appearance color space into color image data in an XYZ format at the output device side.

In the above two methods provided by the invention, the HSaIn color appearance color space is a color space based on a CIEXYZ Cartesian color appearance color space, of a color appearance attribute, and described by a cylindrical coordinate system, and is composed of a chromatic plane and a gray axis passing through the origin of the chromatic plane and perpendicular to the chromatic plane;

wherein the chromatic plane is a plane of the CIEXYZ Cartesian color appearance color space X+Y+Z=K, where K is a real constant; an XYZ axis of the CIEXYZ Cartesian color appearance color space performs a projection along a direction of a straight line X=Y=Z on a plane X+Y+Z=K to obtain three projection axes that are 120° with respect to one another within the chromatic plane, and unit vectors in the directions of the projection axes are $\vec{i}$, $\vec{j}$ and $\vec{k}$;

wherein the gray axis is a number axis composed of the straight line X=Y=Z of the CIEXYZ Cartesian color appearance color space, a numerical value on the number axis represents a gray GI value in the HSaIn color appearance color space, a length of a chromatic vector parallel to the chromatic plane represents a chromatic CI value in the HSaIn color appearance color space, and a polar angle of the chromatic vector represents a hue angle H in the HSaIn color appearance color space;

wherein the color data in the HSaIn format is in a format of the color data in the HSaIn color appearance color space, and comprises a hue H, a saturation Sa, and an intensity In in the HSaIn color space.

According to another aspect of the invention, a method of managing color data between a color space of a device and a CIEXYZ Cartesian color space is provided, the method comprising: acquiring color data of a chromatic image of a chromatic scene from an input device; converting the acquired color data into color data in an XYZ format at an input device side according to color characteristic data of the input device.

According to a further aspect of the invention, a method of managing color data between a CIEXYZ Cartesian color space and a color space of a device is provided, the method comprising: acquiring color data in an XYZ format; converting the acquired color data in the XYZ format into color data in an image format in a color space of an output device according to color characteristic data of the output device.

According to a further aspect of the invention, a method of performing a mapping based on color data in an HSaIn format between a color gamut of an input device and a color gamut of an output device is further provided, the method comprising:

acquiring the color data in the HSaIn format at the input device side;
mapping the color data in the HSaIn format at the input device side according to a mapping relationship between the color gamut of the input device and the color gamut of the output device to obtain the color data in the HSaIn format at the output device side, which comprises:

determining an intensity mapping relationship $In_{LUT}$ and a saturation mapping relationship $Sa_{LUT}$ under an Iso-hue plane according to the gamuts of the input device and the output device, a color distribution range of an image and a color representation intention;

performing a color data mapping of the image from the input device side to the output device side according to the intensity mapping relationship $In_{LUT}$ and the saturation mapping relationship $Sa_{LUT}$ to obtain the color data in the HSaIn format at the output device side.

Since the embodiments of the invention convert the chromatic image acquired from the input device into one in an XYZ format and then into one in an HSaIn format, in the case that the accuracies of the color characteristic data of the input and output devices are ensured, such conversion is a completely analyzing method, and removes the impacts of the input device on the chromatic image with a high accuracy in the conversion. Thus, the acquired chromatic image will not be influenced by the color attribute of the input device itself; further, the analytical matrix operation adopted in the calculating process for the conversion in the HSaIn format is easily achieved, which greatly simplifies the calculating process for the conversion, improves the conversion accuracy and efficiency, and accelerates the conversion speed.

Since the embodiments of the invention achieve the conversion from the chromatic color data independent of the device into chromatic color data dependent on a specific output device in the process of converting an HSaIn format into an XYZ format and then into an output format that can be identified and processed by the output device, the output chromatic image will be not influenced by the color characteristics of the output device itself; further, the analytical matrix operation adopted in the calculating process for the conversion of the color data from the HSaIn format into one in an output format is easily achieved, which greatly simplifies the calculating process for the conversion, improves the conversion accuracy and efficiency, and accelerates the conversion speed. Further, the conversion formulae for the conversion into color data in an HSaIn format provided in the embodiments of the invention are theoretical formulae and will not have accumulative errors in the multiple calculations, so the color data obtained by these calculations with the conversion formulae will provide higher accuracies of the color data than the conversion formulae in the prior art.

Especially, with respect to a color space of a new device that may appear in the future, the conversion between the color space of this new device and the HSaIn color space, and the conversion between the color space of this new device and the CIEXYZ color space can both undergo the processing of the data image according to the principle in the invention, and only the conversion angles of the color characteristics are different.

**BRIEF DESCRIPTION OF THE DRAWINGS**

Fig. 1 is a schematic diagram of the chromatic plane of an embodiment of the invention;

Fig. 2 shows a flow chart of the method of managing color data based on color data in an HSaIn format in an HSaIn color space provided by an embodiment of the invention;

Fig. 3 shows a flow chart of the method of managing color data based on color data in an HSaIn format in an HSaIn color appearance color space of another embodiment of the invention;

Fig. 4 shows a flow chart of the method of managing color data based on a CIEXYZ color space of another embodiment of the invention;

Fig. 5 is a schematic diagram of the deviation angles between the color characteristic data of the input device and $\vec{i}$, $\vec{j}$ and $\vec{k}$ of an embodiment of the invention;

Fig. 6 is a schematic diagram of the relationship among the HSaIn color space, the chromatic plane, the HSaIn format and the XYZ format in the invention;

Figs. 7-9 are schematic diagrams of the color gamut mapping within the chromatic plane;

Fig. 10 is a schematic diagram of performing a mapping along the iso-Sa line under the Iso-hue plane in the HSaIn space according to the agreed $In_{LUT}$;

Fig. 11 is a schematic diagram of performing a mapping along the incremental Sa line under the Iso-hue plane in the HSaIn space according to the agreed intensity $In_{LUT}$;

Fig. 12 is a schematic diagram of the curve of the intensity In mapping $In_{LUT}$;

Fig. 13 is a schematic diagram of the curve of the saturation Sa mapping $Sa_{LUT}$;

**DETAILED DESCRIPTION**

In order to make objects, technical solutions and advantages of the invention clearer, the invention is further described in detail below by referring to the figures and listing preferred embodiments. But it should be noted that many details are only listed in the Description for making the readers thoroughly understand one or more aspects of the invention, and these aspects of the invention can be also achieved even without these specific details.

The invention puts forward an HSaIn color space model of color data in an HSaIn format. The HSaIn color space is a color space based on a CIEXYZ Cartesian color space, of a color appearance attribute, and described by a cylindrical coordinate system, and is composed of a chromatic plane and a gray axis passing through the origin of the chromatic plane and perpendicular to the chromatic plane;

wherein the chromatic plane is a plane of the CIEXYZ Cartesian color space X+Y+Z=K, where K is a real constant; an XYZ axis of the CIEXYZ Cartesian color space performs a projection along a direction of a straight line X=Y=Z on a plane X+Y+Z=K to obtain three projection axes that are 120° with respect to one another within the chromatic plane, and unit vectors in the directions of the projection axes are $\vec{i}$, $\vec{j}$ and $\vec{k}$;

wherein the gray axis is a number axis composed of the straight line X=Y=Z of the CIEXYZ Cartesian color space, a numerical value on the number axis represents a gray GI value in the HSaIn color space, a length of a chromatic vector $\overline{Cl}$ parallel to the chromatic plane represents a chromatic Cl value in the HSaIn color space, and a polar angle of the chromatic vector represents a hue angle H in the HSaIn color space;

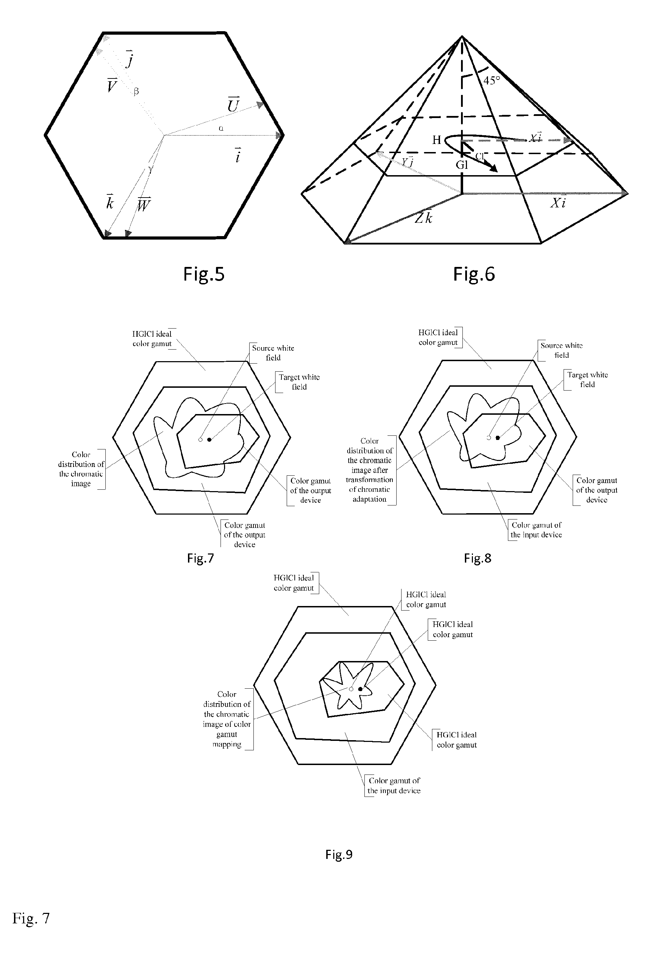

the HSaIn color space is an equivalent form of the HGICl color space, and Fig. 6 is a color space where the HSaIn color space is composed of a gray GI axis and a chromatic plane, wherein the color data in the HSaIn format is in a format of the color data in the HSaIn color space, and comprises a hue H, a saturation Sa, and an intensity In in the HSaIn color space.

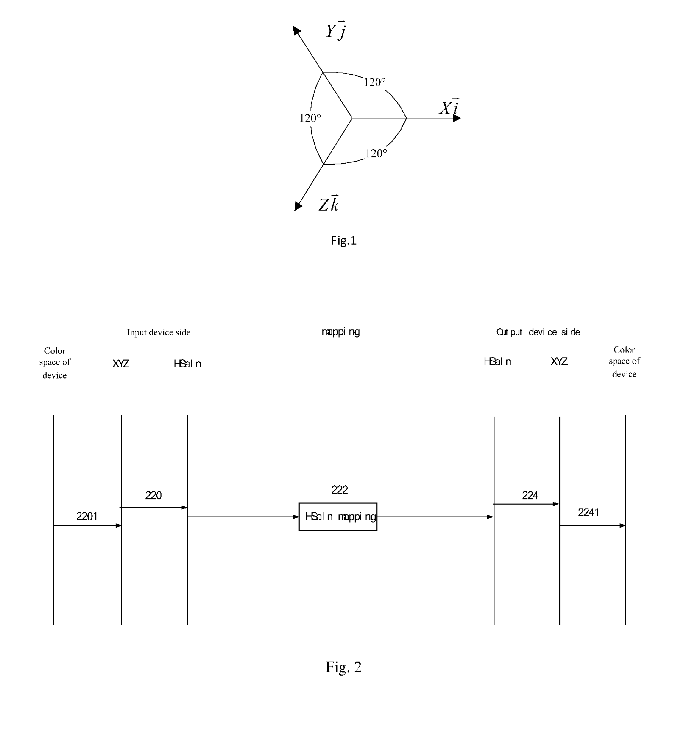

As shown in Figs. 1 and 6, Fig. 1 is the chromatic plane in the HSaIn space, and is a medium plane for the conversion between the CIEXYZ color space and the HSaIn color space, which medium plane is also the plane of the CIEXYZ space X+Y+Z=K (K is a real constant). The three unit vectors $\vec{i}$, $\vec{j}$, $\vec{k}$ within the chromatic plane are unit vectors of three vector axes that are 120° with respect to one another obtained by three coordinate axes XYZ perpendicular to one another in the CIEXYZ space performing a projection along a direction of a straight line X=Y=Z on a plane X+Y+Z=K. After a normalized corresponding processing of the unit coordinates and the unit vectors $\vec{i}$, $\vec{j}$, $\vec{k}$ in the CIEXYZ color space, one color C (X, Y, Z) in the CIEXYZ color space just corresponds to the data C ($X\vec{i}$, $Y\vec{j}$, $Z\vec{k}$) within the chromatic plane, wherein X, Y and Z are respectively the modules of $\vec{i}$, $\vec{j}$ and $\vec{k}$, and the polar angles of $\vec{i}$, $\vec{j}$ and $\vec{k}$ are respectively 0°, 120° and 240°.

The data format in the CIEXYZ color space is an XYZ data format, and is described by the tristimulus values X, Y, Z, which respectively represent numerical values on the X, Y and Z coordinate axes in the CIEXYZ color space.

The hue H in the HSaIn color space can be acquired by the following formula:

$$H = \begin{cases} \arccos\left(\dfrac{2X-Y-Z}{2\sqrt{(X-Y)^2+(Y-Z)^2+(X-Y)(Y-Z)}}\right), & Y \geq Z \\ 2\pi - \arccos\left(\dfrac{2X-Y-Z}{2\sqrt{(X-Y)^2+(Y-Z)^2+(X-Y)(Y-Z)}}\right), & Y < Z \\ \text{undefined}, & X=Y=Z \end{cases} \qquad \text{(Formula 1)}$$

The saturation Sa and the intensity In in the HSaIn color space can be acquired by the following formulae:

$$Gl = K_m\left[Min(X,Y,Z)\right]^p + A, \quad In = K_M\left[Max(X,Y,Z)\right]^q + B, \quad Cl = In - Gl, \quad Sa = \frac{Cl}{In}$$

$K_m$ and $K_M$ are positive real numbers, $In \geq Gl \geq 0$, $A \geq 0$, $B \geq 0$, $p$ and $q$ are nonzero real numbers

or

$$Gl = K_m \left[ Min\left(X, Y, Z\right) \right]^p + A, \quad In = \frac{1}{3} K_M \left(X + Y + Z\right)^q + B, \quad Cl = In - Gl, \quad Sa = \frac{Cl}{In}$$

$K_m$ and $K_M$ are positive real numbers, $K_M > K_m$, $In \geq Gl \geq 0$, $A \geq 0$, $B \geq 0$, $p$ and $q$ are nonzero real numbers

or

$$Gl = K_m Min(X, Y, Z)^p + A, \quad In = \frac{1}{2} K_M \left[ Max(X, Y, Z) + Min(X, Y, Z) \right]^q + B, \quad Cl = In - Gl, \quad Sa = \frac{Cl}{In}$$

$K_m$ and $K_M$ are positive real numbers, $K_M > K_m$, $In \geq Gl \geq 0$, $A \geq 0$, $B \geq 0$, $p$ and $q$ are nonzero real numbers

or

$$Gl = K_m Min(X, Y, Z)^p + A, \quad Cl = K_M \left| X\vec{i} + Y\vec{j} + Z\vec{k} \right|^m + B, \quad In = Gl + Cl, \quad Sa = \frac{Cl}{In}$$

$K_m$ and $K_M$ are positive real numbers, $p$ and $m$ are nonzero real numbers, $In \geq Gl \geq 0$, $A \geq 0$, $B \geq 0$

or

$$Gl = K_m Min(X, Y, Z)^r + A, \quad In = K_M \left[ X^p + Y^p + Z^p \right]^{\frac{1}{q}} + B, \quad Cl = In - Gl, \quad Sa = \frac{Cl}{In}$$

$K_m$ and $K_M$ are positive real numbers, $K_M > K_m > 0$, $p$, $q$ and $r$ are nonzero real numbers, $In \geq Gl \geq 0$, $A \geq 0$, $B \geq 0$

or

$$Gl = K_m Min(X, Y, Z)^r + A, \quad Cl = K_M \left[ (X - Gl)^p + (Y - Gl)^p + (Z - Gl)^p \right]^{\frac{1}{q}} + B, \quad In = Cl + Gl, \quad Sa = \frac{Cl}{In}$$

$K_m$ and $K_M$ are positive real numbers, $K_M > K_m > 0$, $p$, $q$ and $r$ are nonzero real numbers, $In \geq Gl \geq 0$, $A \geq 0$, $B \geq 0$

wherein X, Y and Z are color data in the XYZ format, i.e., the color data in the CIEXYZ Cartesian color space, and respectively represent numerical values on the X, Y and Z coordinate axes in the CIEXYZ Cartesian color space. In the process of converting the data in the CIEXYZ format into data in an HSaIn format, parameters, e.g., $K_M$, $K_m$, p, q, r, m, A, B, etc., in each acquiring manner can be selected within their defined ranges and are feasible in the implementation, but the preferred selection is that $K_M = K_m = 1$, p=q=r=m-1, and A=B=0.

The color characteristic data of the device will be involved in the following embodiments, and are the hue deviations brought by the process accuracy problems of the color materials of the respective channels of the device and the like, and after the hue characteristics and the intensity data of these channels are characterized, these color data are represented as chromatic vectors within the chromatic plane, and the hue deviation angles between these chromatic vectors and the adjacent vectors $\vec{i}$, $\vec{j}$, $\vec{k}$ are represented as $\alpha$, $\beta$ and $\gamma$, i.e., the color characteristic data.

Fig. 2 shows a flow chart of the method of managing color data based on color data in an HSaIn format in an HSaIn color space provided by an embodiment of the invention.

As shown in Fig. 2, firstly, color data in an XYZ format at an input device side is acquired. There are several manners of acquiring the color data in the XYZ format at the input device side, which will be described in detail below. In the step 220, the acquired color data in the XYZ format at the input device side is converted into color data in an HSaIn format.

In this embodiment, the acquiring color data in an XYZ format at in input device side can comprise: acquiring color data of a chromatic image of a chromatic scene from the input device; converting the acquired color data into color data in an XYZ format at the input device side according to color characteristic data of the input device (the step 2201). Another manner of acquiring color data in an XYZ format at an input side is to directly select color data in an XYZ format in a CIEXYZ color space at the input device side.

The input device can be a camera, a pickup camera, a video camera and the like, or the input device can be also a scanner and the like. A chromatic image stored in a digital format is acquired from the input device. Generally, the color data of the acquired chromatic image is stored in a manner of a pixel dot matrix. In the invention, color data in a UVW format of the device includes but is not limited to color data in an RGB format of the device and color data in a CMYe format of the device. With respect to the input device, the color data thereof is generally in an RGB format, and with respect to the output device such as a printer, the format of the color data of the chromatic image is generally CMYe.

The color data acquired from the input device can be in a three-channel format UVW or in a multichannel format.

If the color data is in the UVW format, in the step 2201, the color data in the UVW format acquired from the input device is converted into color data based on a CIEXYZ color space at the input device side.

Specifically, the color data of the chromatic image in the UVW format acquired from the input device is converted into color data of a chromatic image in an XYZ format according to color characteristic data of the input device. That is, the impacts of the input device on the chromatic image are removed in the conversion process according to color characteristic data of the input device.

The color data in the UVW format acquired from the input device is converted into color data in an XYZ format at the input device side according to color characteristic data $\alpha_1$, $\beta_1$, $\gamma_1$ of the input device and based on the following formulae 3-10, wherein the UVW format is a format represented by intensity numerical values after characterization of light intensity values perceived by a color sensor of the device at three different spectral sections:

$$\begin{bmatrix} X \\ Y \\ Z \end{bmatrix} = \begin{bmatrix} \dfrac{\sin(120^0 - \alpha_1)}{\sin(60^0)} & 0 & \dfrac{\sin(\gamma_1)}{\sin(60^0)} \\ \dfrac{\sin(\alpha_1)}{\sin(60^0)} & \dfrac{\sin(120^0 - \beta_1)}{\sin(60^0)} & 0 \\ 0 & \dfrac{\sin(\beta_1)}{\sin(60^0)} & \dfrac{\sin(120^0 - \gamma_1)}{\sin(60^0)} \end{bmatrix} \times \begin{bmatrix} U_1 \\ V_1 \\ W_1 \end{bmatrix}$$

(Formula 3)

in Formula 3, $\alpha_1 > 0$, $\beta_1 > 0$, $\gamma_1 > 0$;

$$\begin{bmatrix} X \\ Y \\ Z \end{bmatrix} = \begin{bmatrix} \dfrac{\sin(120^0 - \alpha_1)}{\sin(60^0)} & 0 & 0 \\ \dfrac{\sin(\alpha_1)}{\sin(60^0)} & \dfrac{\sin(120^0 - \beta_1)}{\sin(60^0)} & \dfrac{\sin(-\gamma_1)}{\sin(60^0)} \\ 0 & \dfrac{\sin(\beta_1)}{\sin(60^0)} & \dfrac{\sin(120^0 + \gamma_1)}{\sin(60^0)} \end{bmatrix} \times \begin{bmatrix} U_1 \\ V_1 \\ W_1 \end{bmatrix}$$

(Formula 4)

in Formula 4, $\alpha_1 > 0$, $\beta_1 > 0$, $\gamma_1 < 0$;

$$\begin{bmatrix} X \\ Y \\ Z \end{bmatrix} = \begin{bmatrix} \dfrac{\sin(120^0 - \alpha_1)}{\sin(60^0)} & \dfrac{\sin(-\beta_1)}{\sin(60^0)} & \dfrac{\sin(\gamma_1)}{\sin(60^0)} \\ \dfrac{\sin(\alpha_1)}{\sin(60^0)} & \dfrac{\sin(120^0 + \beta_1)}{\sin(60^0)} & 0 \\ 0 & 0 & \dfrac{\sin(120^0 - \gamma_1)}{\sin(60^0)} \end{bmatrix} \times \begin{bmatrix} U_1 \\ V_1 \\ W_1 \end{bmatrix}$$

(Formula 5)

in Formula 5, $\alpha_1 > 0$, $\beta_1 > 0$, $\gamma_1 > 0$;

$$\begin{bmatrix} X \\ Y \\ Z \end{bmatrix} = \begin{bmatrix} \dfrac{\sin(120^\circ - \alpha_1)}{\sin(60^\circ)} & \dfrac{\sin(-\beta_1)}{\sin(60^\circ)} & 0 \\[2em] \dfrac{\sin(\alpha_1)}{\sin(60^\circ)} & \dfrac{\sin(120^\circ + \beta_1)}{\sin(60^\circ)} & \dfrac{\sin(-\gamma_1)}{\sin(60^\circ)} \\[2em] 0 & 0 & \dfrac{\sin(120^\circ + \gamma_1)}{\sin(60^\circ)} \end{bmatrix} \times \begin{bmatrix} U_1 \\ V_1 \\ W_1 \end{bmatrix} \qquad \text{(Formula 6)}$$

in Formula 6, $\alpha_1 > 0$, $\beta_1 > 0$, $\gamma_1 < 0$;

$$\begin{bmatrix} X \\ Y \\ Z \end{bmatrix} = \begin{bmatrix} \dfrac{\sin(120^\circ + \alpha_1)}{\sin(60^\circ)} & 0 & \dfrac{\sin(\gamma_1)}{\sin(60^\circ)} \\[2em] 0 & \dfrac{\sin(120^\circ - \beta_1)}{\sin(60^\circ)} & 0 \\[2em] \dfrac{\sin(-\alpha_1)}{\sin(60^\circ)} & \dfrac{\sin(\beta_1)}{\sin(60^\circ)} & \dfrac{\sin(120^\circ - \gamma_1)}{\sin(60^\circ)} \end{bmatrix} \times \begin{bmatrix} U_1 \\ V_1 \\ W_1 \end{bmatrix} \qquad \text{(Formula 7)}$$

in Formula 7, $\alpha_1 > 0$, $\beta_1 > 0$, $\gamma_1 > 0$;

$$\begin{bmatrix} X \\ Y \\ Z \end{bmatrix} = \begin{bmatrix} \dfrac{\sin(120^\circ + \alpha_1)}{\sin(60^\circ)} & 0 & 0 \\[2em] 0 & \dfrac{\sin(120^\circ - \beta_1)}{\sin(60^\circ)} & \dfrac{\sin(-\gamma_1)}{\sin(60^\circ)} \\[2em] \dfrac{\sin(-\alpha_1)}{\sin(60^\circ)} & \dfrac{\sin(\beta_1)}{\sin(60^\circ)} & \dfrac{\sin(120^\circ + \gamma_1)}{\sin(60^\circ)} \end{bmatrix} \times \begin{bmatrix} U_1 \\ V_1 \\ W_1 \end{bmatrix} \qquad \text{(Formula 8)}$$

in Formula 8, $\alpha_1 > 0$, $\beta_1 > 0$, $\gamma_1 < 0$;

$$\begin{bmatrix} X \\ Y \\ Z \end{bmatrix} = \begin{bmatrix} \dfrac{\sin(120^\circ + \alpha_1)}{\sin(60^\circ)} & \dfrac{\sin(-\beta_1)}{\sin(60^\circ)} & \dfrac{\sin(\gamma_1)}{\sin(60^\circ)} \\[2em] 0 & \dfrac{\sin(120^\circ + \beta_1)}{\sin(60^\circ)} & 0 \\[2em] \dfrac{\sin(-\alpha_1)}{\sin(60^\circ)} & 0 & \dfrac{\sin(120^\circ - \gamma_1)}{\sin(60^\circ)} \end{bmatrix} \times \begin{bmatrix} U_1 \\ V_1 \\ W_1 \end{bmatrix} \qquad \text{(Formula 9)}$$

in Formula 9, $\alpha_1 > 0$, $\beta_1 > 0$, $\gamma_1 > 0$;

$$
\begin{bmatrix} X \\ Y \\ Z \end{bmatrix} = \begin{bmatrix} \dfrac{\sin(120^{0} + \alpha_1)}{\sin(60^{0})} & \dfrac{\sin(-\beta_1)}{\sin(60^{0})} & 0 \\[2ex] 0 & \dfrac{\sin(120^{0} + \beta_1)}{\sin(60^{0})} & \dfrac{\sin(-\gamma_1)}{\sin(60^{0})} \\[2ex] \dfrac{\sin(-\alpha_1)}{\sin(60^{0})} & 0 & \dfrac{\sin(120^{0} + \gamma_1)}{\sin(60^{0})} \end{bmatrix} \times \begin{bmatrix} U_1 \\ V_1 \\ W_1 \end{bmatrix}
$$

(Formula 10)

in the formula 10, $\alpha_1 > 0$, $\beta_1 > 0$, $\gamma_1 < 0$;

wherein the values of $U_1$, $V_1$ and $W_1$ in the above formulae 3-10 are the characterized color data in the UVW format of the input device; $\alpha_1$ is a hue deviation angle between $\overline{U}_1$ and $\vec{i}$; $\beta_1$ is a hue deviation angle between $\vec{V}_1$ and $\vec{j}$; $\gamma_1$ is a hue deviation angle between $\vec{W}_1$ and $\overline{k}$; $\overline{U}_1$, $\vec{V}_1$ and $\vec{W}_1$ are characterized UVW channel color data of the input device to represent chromatic vectors within the chromatic plane. The color characteristic data of the input device is obtained from the input device beforehand, e.g., the color deviation characteristic of the input device is acquired when installing the drive program of the input device, and the color characteristic data of the input device can be specifically stored in a profile header file. Wherein the schematic diagram of the deviation angles between the color characteristic data of the input device and $\vec{i}$, $\vec{j}$, $\overline{k}$ is as shown in Fig. 5.

It can be seen from the above formulae 3-10 that the matrix that convers the chromatic image from the UVW format into the XYZ format further includes the deviation angles obtained according to the color characteristic data of the input device, so that the impacts of the input device on the chromatic image are removed by means of the deviation angles in the process of converting the color data in the UVW format into the color data in the XYZ format.

If the color data is in the multichannel format, in the step 2201, the color data in the multichannel format acquired from the input device is converted into color data based on a CIEXYZ color space at the input device side.

Specifically, color data of respective channels are obtained to represent chromatic vectors within the chromatic plane according to color characteristic data of the input device, i.e., characterized hue deviation angles of the respective channels, in combination with values of the color data of the respective channels; wherein the characterized hue deviation angles are respectively hue deviation angles of characterized hue angles of the respective channels of the device relative to adjacent polar angles $\vec{i}$, $\vec{j}$, $\overline{k}$ within the chromatic plane;

the chromatic vectors of the respective channels of the device within the chromatic plane are decomposed into ones in the directions $\vec{i}$, $\vec{j}$, $\overline{k}$ according to a vector decomposition rule and a linear addition is performed in the directions $\vec{i}$, $\vec{j}$, $\overline{k}$ respectively to thereby obtain data to serve as the color data in the XYZ format.

After the chromatic image which is not influenced by the color attribute of the input device itself is acquired, the chromatic image which is not influenced by the color attribute of the output device itself can be output through the output device for an output display or an output printing, projection and the like. The output device can specifically include a display, a printer, a printing machine, a projector and the like. The so-called chromatic image in an output format refers to a chromatic image in a storage format that can be identified and processed by the output device. For example, if the output device is a display, the output format of the chromatic image thereof is generally an RGB format; if the output device is a printer, the output format of the chromatic image thereof is generally a CMYe format. The specific method of converting the color data of the chromatic image in the HSaIn format into color data of a chromatic image in an output format, and removing impacts of the color attribute of the output device itself on the output chromatic image in the conversion process will be introduced in detail below.

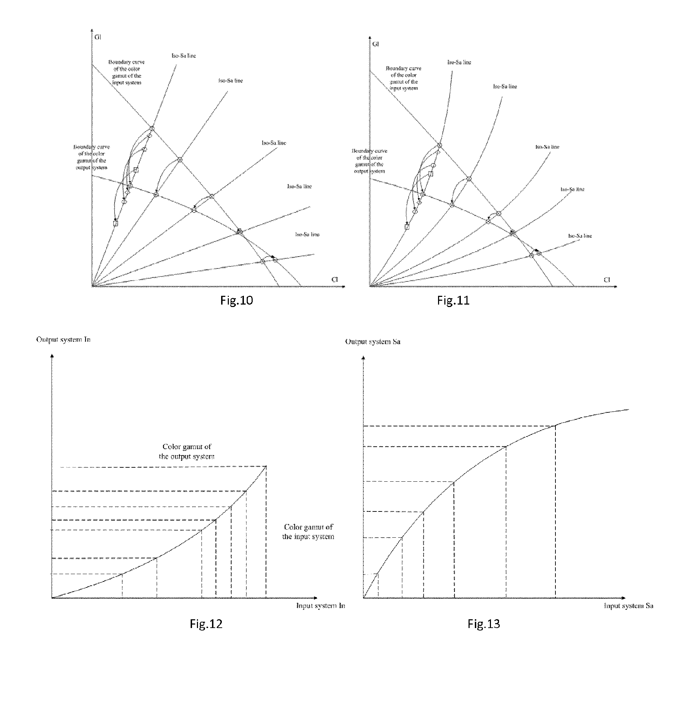

Next, in the step 222, the color data in the HSaIn format in the HSaIn color space at the input device side is mapped according to a mapping relationship between a color gamut of the input device and a color gamut of the output device to obtain the color data in the HSaIn format in the HSaIn color space at the output device side. Specifically, Fig. 7, Fig. 8 and Fig. 9 show a color gamut comparing relationship between the input device and the output device, a white field position within the chromatic plane, and a color distribution range of an image; Fig. 10 and Fig. 11 show an intensity mapping relationship and a saturation mapping relationship under an Iso-hue plane in the HSaIn color space under the determination of the color representation intention; Fig. 12 and Fig. 13 show an intensity mapping relationship $In_{LUT}$ and a saturation mapping relationship $Sa_{LUT}$ corresponding to the input and output gamuts, and the mapping of all color data of the image from the input device side to the output device side is performed according to In$_{LUT}$ and Sa$_{LUT}$ to obtain the color data in the HSaIn format in the HSaIn color appearance color space at the output device side.

Within the chromatic plane, a pure chromatic vector of each channel of each device is represented according to the intensity numerical value of the channel and the characterized hue value of the spectrum of the channel, all possible intensity numerical values of all the channels are traversed, and the set of all the chromatic vectors obtained by these traversed intensity data undergoing a pure chromatic vector addition within the chromatic plane according to a vector addition rule is just the color gamut represented by this device within the chromatic plane. The white field position in the color gamut is a position where the chromatic vector obtained after the addition of the pure chromatic vectors corresponding to the XYZ values of the white field self-defined by the respective devices within the chromatic plane is located. If the XYZ values of the white field are equal, the white field position is on the origin of the polar coordinate. The color distribution range of the image is a set of the positions of the superimposed chromatic vectors obtained by the XYZ value data of all the pixels of this image by means of the vector addition rule within the chromatic plane, and the distribution formed by this set is just the color distribution range of this image within the chromatic plane. The color representation intention is preset one of the color management strategies of the color gamut mapping, and is generally divided into a perceptual color representation intention, a saturated color representation intention, a relative chrominance color representation intention and an absolute color representation intention according to the textbook, and more color representation intentions can be further defined according to specific requirements for the color management, and no unnecessary details are given herein.

Fig. 7, Fig. 8 and Fig. 9 show schematic examples of the gamuts of the input and output devices within the chromatic plane, the white field position and the distribution range of the image, and one input image distribution under the perceptual color representation intention from the state that the output color gamut cannot be completely covered to the state that the output gamut is completely covered.

Fig. 10 and Fig. 11 are schematic diagrams of the color gamut mapping. Performing the color gamut mapping in the HSaIn color space is divided into performing an intensity In preferential mapping and performing a saturation Sa preferential mapping under the iso-H. The In preferential mapping is to map In according to LUT on the premise that the Sa mapping relationship is preset; the Sa preferential mapping is to map Sa according to LUT on the premise that the In mapping relationship is preset.

Fig. 10 shows that in process of performing the color gamut mapping in the HSaIn color space, on the premise of the iso-hue H, the transverse axis is the Cl chromatic vector under the hue H, the longitudinal axis is the Gl gray, on the premise of the iso-Sa, the schematic diagram of performing the intensity mapping with In$_{LUT}$ as shown in Fig. 12 is performed, and the output intensities of all the color data under the iso-H and the iso-Sa are obtained finally to thereby obtain the color data H, Sa, In at the output device side.

Fig. 11 shows that in the process of performing the color gamut mapping in the HSaIn color space, on the premise of the iso-hue H, the transverse axis is the Cl chromatic vector under the hue H, the longitudinal axis is the Gl gray, on the premise that the preset incremental Sa line is performed according to the color representation intention, the schematic diagram of performing the intensity mapping with In$_{LUT}$ as shown in Fig. 12 is performed, and the output intensities of all the color data under the iso-H and the incremental Sa are obtained finally to thereby obtain the color data H, Sa, In at the output device side.

Similarly, there is a further intensity mapping performed on the premise of a preset Sa curve of another rule according to the color representation intention to obtain the color data H, Sa, In at the output device side, and no unnecessary details are given herein.

Similarly, there is a further method of further performing a saturation Sa mapping after presetting the intensity In mapping according to the color representation intention on the premise of the iso-hue H to obtain the color data H, Sa, In at the output device side, and no unnecessary details are given herein.

Fig. 12 and Fig. 13 are respectively a schematic diagram of the intensity In mapping LUT and a schematic diagram of the saturation Sa mapping LUT.

In the stem 224, the color data in the HSaIn format at the output device side is converted into color data in an XYZ format. Specifically, if the saturation Sa and the intensity In in the color data in the HSaIn format at the input device side are acquired according to the formulae below,

$$Gl = K_m \left[ Min(X,Y,Z) \right]^p + A, \quad In = K_M \left[ Max(X,Y,Z) \right]^q + B, \quad Cl = In - Gl, \quad Sa = \frac{Cl}{In}$$

$K_m$ and $K_M$ are positive real numbers, $In \geq Gl \geq 0, A \geq 0, B \geq 0, p$ and $q$ are nonzero real numbers

the color data in the XYZ format at the output device side is acquired according to the following formulae:

$$
\left\{
\begin{array}{ll}
H'=\dfrac{H}{60^\circ},\ h=\left[H'\right],\ \left[\bullet\right]\text{ is a round symbol with respect to }\bullet,\ H\in[0^\circ,360^\circ),\ h=0,1,2,3,4,5 & \\[4mm]
X=\left(\dfrac{In-B}{K_M}\right)^{\frac{1}{q}},\ Y=\left(\dfrac{In-B}{K_M}\right)^{\frac{1}{q}}\dfrac{\sin H}{\sin(120^\circ-H)}+\left(\dfrac{In(1-Sa)-A}{K_m}\right)^{\frac{1}{p}}\dfrac{\sin(120^\circ-H)-\sin H}{\sin(120^\circ-H)},\ Z=\left(\dfrac{In(1-Sa)-A}{K_m}\right)^{\frac{1}{p}}, & h=0 \\[5mm]
X=\left(\dfrac{In-B}{K_M}\right)^{\frac{1}{q}}\dfrac{\sin(120^\circ-H)}{\sin H}+\left(\dfrac{In(1-Sa)-A}{K_m}\right)^{\frac{1}{p}}\dfrac{\sin H-\sin(120^\circ-H)}{\sin H},\ Y=\left(\dfrac{In-B}{K_M}\right)^{\frac{1}{q}},\ Z=\left(\dfrac{In(1-Sa)-A}{K_m}\right)^{\frac{1}{p}}, & h=1 \\[5mm]
X=\left(\dfrac{In(1-Sa)-A}{K_m}\right)^{\frac{1}{p}},\ Y=\left(\dfrac{In-B}{K_M}\right)^{\frac{1}{q}},\ Z=\left(\dfrac{In-B}{K_M}\right)^{\frac{1}{q}}\dfrac{\sin(H-120^\circ)}{\sin(240^\circ-H)}+\left(\dfrac{In(1-Sa)-A}{K_m}\right)^{\frac{1}{p}}\dfrac{\sin(240^\circ-H)-\sin(H-120^\circ)}{\sin(240^\circ-H)}, & h=2 \\[5mm]
X=\left(\dfrac{In(1-Sa)-A}{K_m}\right)^{\frac{1}{p}},\ Y=\left(\dfrac{In-B}{K_M}\right)^{\frac{1}{q}}\dfrac{\sin(240^\circ-H)}{\sin(H-120^\circ)}+\left(\dfrac{In(1-Sa)-A}{K_m}\right)^{\frac{1}{p}}\dfrac{\sin(H-120^\circ)-\sin(240^\circ-H)}{\sin(H-120^\circ)},\ Z=\left(\dfrac{In-B}{K_M}\right)^{\frac{1}{q}}, & h=3 \\[5mm]
X=\left(\dfrac{In-B}{K_M}\right)^{\frac{1}{q}}\dfrac{\sin(H-240^\circ)}{\sin(-H)}+\left(\dfrac{In(1-Sa)-A}{K_m}\right)^{\frac{1}{p}}\dfrac{\sin(-H)-\sin(H-240^\circ)}{\sin(-H)},\ Y=\left(\dfrac{In(1-Sa)-A}{K_m}\right)^{\frac{1}{p}},\ Z=\left(\dfrac{In-B}{K_M}\right)^{\frac{1}{q}}, & h=4 \\[5mm]
X=\left(\dfrac{In-B}{K_M}\right)^{\frac{1}{q}},\ Y=\left(\dfrac{In(1-Sa)-A}{K_m}\right)^{\frac{1}{p}},\ Z=\left(\dfrac{In-B}{K_M}\right)^{\frac{1}{q}}\dfrac{\sin(-H)}{\sin(H-240^\circ)}+\left(\dfrac{In(1-Sa)-A}{K_m}\right)^{\frac{1}{p}}\dfrac{\sin(H-240^\circ)-\sin(-H)}{\sin(H-240^\circ)}, & h=5
\end{array}
\right.
$$

or if the saturation Sa and the intensity In in the color data in the HSaIn format at the input device side are acquired according to the formulae below,

$$
Gl=K_m\left[Min(X,Y,Z)\right]^p+A,\quad In=\frac{1}{3}K_M\left(X+Y+Z\right)^q+B,\quad Cl=In-Gl,\quad Sa=\frac{Cl}{In}
$$

$K_m$ and $K_M$ are positive real numbers, $K_M>K_m$, $In\geq Gl\geq 0$, $A\geq 0$, $B\geq 0$, $p$ and $q$ are nonzero real numbers

the color data in the XYZ format at the output device side is acquired according to the following formulae:

when $0^\circ\leq H<120^\circ$

$$
X=\left[\frac{3In-B}{K_M}\right]^{\frac{1}{q}}\frac{\sin(120^\circ-H)}{\sin(H)+\sin(120^\circ-H)}-\left[\frac{In(1-Sa)-A}{K_m}\right]^{\frac{1}{p}}\frac{2\sin(120^\circ-H)-\sin(H)}{\sin(H)+\sin(120^\circ-H)}
$$

$$
Y=\left[\frac{3In-B}{K_M}\right]^{\frac{1}{q}}\frac{\sin(H)}{\sin(H)+\sin(120^\circ-H)}-\left[\frac{In(1-Sa)-A}{K_m}\right]^{\frac{1}{p}}\frac{2\sin(H)-\sin(120^\circ-H)}{\sin(H)+\sin(120^\circ-H)}
$$

$$
Z=\left[\frac{In(1-Sa)-A}{K_m}\right]^{\frac{1}{p}}
$$

when $120° \leq H < 240°$

$$X = \left[\frac{In(1-Sa)-A}{K_m}\right]^{\frac{1}{p}},$$

$$Y = \left[\frac{3In-B}{K_M}\right]^{\frac{1}{q}} \frac{\sin(240°-H)}{\sin(H-120°)+\sin(240°-H)} - \left[\frac{In(1-Sa)-A}{K_m}\right]^{\frac{1}{p}} \frac{2\sin(240°-H)-\sin(H-120°)}{\sin(H-120°)+\sin(240°-H)}$$

$$Z = \left[\frac{3In-B}{K_M}\right]^{\frac{1}{q}} \frac{\sin(H-120°)}{\sin(H-120°)+\sin(240°-H)} - \left[\frac{In(1-Sa)-A}{K_m}\right]^{\frac{1}{p}} \frac{2\sin(H-120°)-\sin(240°-H)}{\sin(H-120°)+\sin(240°-H)}$$

when $240° \leq H < 360°$

$$X = \left[\frac{3In-B}{K_M}\right]^{\frac{1}{q}} \frac{\sin(H-240°)}{\sin(H-240°)+\sin(-H)} - \left[\frac{In(1-Sa)-A}{K_m}\right]^{\frac{1}{p}} \frac{2\sin(H-240°)-\sin(-H)}{\sin(H-240°)+\sin(-H)}$$

$$Y = \left[\frac{In(1-Sa)-A}{K_m}\right]^{\frac{1}{p}}$$

$$Z = \left[\frac{3In-B}{K_M}\right]^{\frac{1}{q}} \frac{\sin(-H)}{\sin(H-240°)+\sin(-H)} - \left[\frac{In(1-Sa)-A}{K_m}\right]^{\frac{1}{p}} \frac{2\sin(-H)-\sin(H-240°)}{\sin(H-240°)+\sin(-H)}$$

or if the saturation Sa and the intensity In in the color data in the HSaIn format at the input device side are acquired according to the formulae below,

$$Gl = K_m Min(X,Y,Z)^p + A, \quad In = \frac{1}{2}K_M\left[Max(X,Y,Z)+Min(X,Y,Z)\right]^q + B, \quad Cl = In - Gl, \quad Sa = \frac{Cl}{In}$$

$K_m$ and $K_M$ are positive real numbers, $K_M > K_m$, $In \geq Gl \geq 0, A \geq 0, B \geq 0$, $p$ and $q$ are nonzero real numbers

the color data in the XYZ format at the output device side is acquired according to the following formulae:

$$H' = \frac{H}{60°}, h = [H'], [\bullet] \text{ is a round symbol with respect to } \bullet, \ H \in [0,360°), h = 0,1,2,3,4,5$$

$$X = \left[2\frac{In-B}{K_M}\right]^{\frac{1}{q}} - \left[\frac{In(1-Sa)-A}{K_m}\right]^{\frac{1}{p}}, Y = \left[2\frac{In-B}{K_M}\right]^{\frac{1}{q}}\frac{\sin H}{\sin(120°-H)} + \left[\frac{In(1-Sa)-A}{K_m}\right]^{\frac{1}{p}}\frac{\sin(120°-H)-2\sin H}{\sin(120°-H)}, Z = \left[\frac{In(1-Sa)-A}{K_m}\right]^{\frac{1}{p}}, \quad h=0$$

$$X = \left[2\frac{In-B}{K_M}\right]^{\frac{1}{q}}\frac{\sin(120°-H)}{\sin H} + \left[\frac{In(1-Sa)-A}{K_m}\right]^{\frac{1}{p}}\frac{\sin H-2\sin(120°-H)}{\sin H}, Y = \left[2\frac{In-B}{K_M}\right]^{\frac{1}{q}} - \left[\frac{In(1-Sa)-A}{K_m}\right]^{\frac{1}{p}}, Z = \left[\frac{In(1-Sa)-A}{K_m}\right]^{\frac{1}{p}}, \quad h=1$$

$$X = \left[\frac{In(1-Sa)-A}{K_m}\right]^{\frac{1}{p}}, Y = \left[2\frac{In-B}{K_M}\right]^{\frac{1}{q}} - \left[\frac{In(1-Sa)-A}{K_m}\right]^{\frac{1}{p}}, Z = \left[2\frac{In-B}{K_M}\right]^{\frac{1}{q}}\frac{\sin(H-120°)}{\sin(240°-H)} + \left[\frac{In(1-Sa)-A}{K_m}\right]^{\frac{1}{p}}\frac{\sin(240°-H)-2\sin(H-120°)}{\sin(240°-H)}, \quad h=2$$

$$X = \left[\frac{In(1-Sa)-A}{K_m}\right]^{\frac{1}{p}}, Y = \left[2\frac{In-B}{K_M}\right]^{\frac{1}{q}}\frac{\sin(240°-H)}{\sin(H-120°)} + \left[\frac{In(1-Sa)-A}{K_m}\right]^{\frac{1}{p}}\frac{\sin(H-120°)-2\sin(240°-H)}{\sin(H-120°)}, Z = \left[2\frac{In-B}{K_M}\right]^{\frac{1}{q}} - \left[\frac{In(1-Sa)-A}{K_m}\right]^{\frac{1}{p}}, \quad h=3$$

$$X = \left[2\frac{In-B}{K_M}\right]^{\frac{1}{q}}\frac{\sin(H-240°)}{\sin(-H)} + \left[\frac{In(1-Sa)-A}{K_m}\right]^{\frac{1}{p}}\frac{\sin(-H)-2\sin(H-240°)}{\sin(-H)}, Y = \left[\frac{In(1-Sa)-A}{K_m}\right]^{\frac{1}{p}}, Z = \left[2\frac{In-B}{K_M}\right]^{\frac{1}{q}} - \left[\frac{In(1-Sa)-A}{K_m}\right]^{\frac{1}{p}}, \quad h=4$$

$$X = \left[2\frac{In-B}{K_M}\right]^{\frac{1}{q}} - \left[\frac{In(1-Sa)-A}{K_m}\right]^{\frac{1}{p}}, Y = \left[\frac{In(1-Sa)-A}{K_m}\right]^{\frac{1}{p}}, Z = \left[2\frac{In-B}{K_M}\right]^{\frac{1}{q}}\frac{\sin(-H)}{\sin(H-240°)} + \left[\frac{In(1-Sa)-A}{K_m}\right]^{\frac{1}{p}}\frac{\sin(H-240°)-2\sin(-H)}{\sin(H-240°)}, \quad h=5$$

or if the saturation Sa and the intensity In in the color data in the HSaIn format at the input device side are acquired according to the formulae below,

$$Gl = K_m Min(X,Y,Z)^p + A, Cl = K_M \left| X\vec{i} + Y\vec{j} + Z\vec{k} \right|^m + B, m \text{ is real number}, In = Gl + Cl, Sa = \frac{Cl}{In}$$

$$K_m \text{ and } K_M \text{ are positive real numbers, } p \text{ and } m \text{ are nonzero real numbers, } In \geq Gl \geq 0, A \geq 0, B \geq 0$$

the color data in the XYZ format at the output device side is acquired according to the following formulae:

$$h = [\frac{H}{120^\circ}], \quad [\bullet] \text{ is a round symbol with respect to } \bullet, \quad H \in [0^\circ, 360^\circ), h = 0, 1, 2$$

if $h = 0$,

$$X = \left(\frac{SaIn - B}{K_M}\right)^{\frac{1}{m}} \left[\cos(H) + \frac{\sqrt{3}}{3}\sin(H)\right] + \left[\frac{(1-Sa)In - A}{K_m}\right]^{\frac{1}{p}}, Y = \frac{2\sqrt{3}}{3}\sin(H)\left(\frac{SaIn - B}{K_M}\right)^{\frac{1}{m}} + \left[\frac{(1-Sa)In - A}{K_m}\right]^{\frac{1}{p}}, Z = \left[\frac{(1-Sa)In - A}{K_m}\right]^{\frac{1}{p}}$$

if $h = 1$,

$$X = \left[\frac{(1-Sa)In - A}{K_m}\right]^{\frac{1}{p}}, Y = \left[\frac{(1-Sa)In - A}{K_m}\right]^{\frac{1}{p}} - \left(\frac{SaIn - B}{K_M}\right)^{\frac{1}{m}}\left[\cos(H) - \frac{\sqrt{3}}{3}\sin(H)\right], Z = \left[\frac{(1-Sa)In - A}{K_m}\right]^{\frac{1}{p}} - \left(\frac{SaIn - B}{K_M}\right)^{\frac{1}{m}}\left[\cos(H) + \frac{\sqrt{3}}{3}\sin(H)\right]$$

if $h = 2$,

$$X = \left(\frac{SaIn - B}{K_M}\right)^{\frac{1}{m}}\left[\cos(H) - \frac{\sqrt{3}}{3}\sin(H)\right] + \left[\frac{(1-Sa)In - A}{K_m}\right]^{\frac{1}{p}}, Y = \left[\frac{(1-Sa)In - A}{K_m}\right]^{\frac{1}{p}}, Z = \left[\frac{(1-Sa)In - A}{K_m}\right]^{\frac{1}{p}} - \frac{2\sqrt{3}}{3}\sin(H)\left(\frac{SaIn - B}{K_M}\right)^{\frac{1}{m}}$$

or if the saturation Sa and the intensity In in the color data in the HSaIn format at the input device side are acquired according to the formulae below,

$$Gl = K_m Min(X,Y,Z)^r + A, \quad In = K_M \left[X^p + Y^p + Z^p\right]^{\frac{1}{q}} + B, \quad Cl = In - Gl, \quad Sa = \frac{Cl}{In}$$

$$K_m \text{ and } K_M \text{ are positive real numbers, } K_M > K_m > 0, p, q \text{ and } r \text{ are nonzero real numbers,}$$

$$In \geq Gl \geq 0, A \geq 0, B \geq 0$$

the color data in the XYZ format at the output device side is acquired according to the following formulae:

$$h = [\frac{H}{120^\circ}], \quad [\bullet] \text{ is a round symbol with respect to } \bullet, \quad H \in [0^\circ, 360^\circ), h = 0, 1, 2$$

if $h = 0$,

$$\text{then } Z = \left[\frac{In(1-Sa)-A}{K_m}\right]^{\frac{1}{r}}$$

$$\left[\frac{\sin(120^\circ - H)}{\sin H}Y + \frac{\sin H - \sin(120^\circ - H)}{\sin H}\left[\frac{In(1-Sa)-A}{K_m}\right]^{\frac{1}{r}}\right]^p + Y^p = \left(\frac{In-B}{K_M}\right)^q - \left[\frac{In(1-Sa)-A}{K_m}\right]^{\frac{p}{r}}$$

$$X = \frac{\sin(120^\circ - H)}{\sin H}Y + \frac{\sin H - \sin(120^\circ - H)}{\sin H}\left[\frac{In(1-Sa)-A}{K_m}\right]^{\frac{1}{r}}$$

the values of $X$ and $Y$ represented by $In, Sa, H, p, q$ and $r$ are obtained according to the specific values of $p, q$ and $r$, $X > Y \geq 0, Y > Z \geq 0$,

$Z$ is a value satisfying the actual physical condition

if $h = 1$,

$$\text{then } X = \left[\frac{In(1-Sa)-A}{K_m}\right]^{\frac{1}{r}}$$

$$\left[\frac{\sin(H-120^\circ)}{\sin(240^\circ - H)}Y + \frac{\sin(240^\circ - H) - \sin(H-120^\circ)}{\sin(240^\circ - H)}\left[\frac{In(1-Sa)-A}{K_m}\right]^{\frac{1}{r}}\right]^p + Y^p = \left(\frac{In-B}{K_M}\right)^q - \left[\frac{In(1-Sa)-A}{K_m}\right]^{\frac{p}{r}}$$

$$Z = \frac{\sin(H-120^\circ)}{\sin(240^\circ - H)}Y + \frac{\sin(240^\circ - H) - \sin(H-120^\circ)}{\sin(240^\circ - H)}\left[\frac{In(1-Sa)-A}{K_m}\right]^{\frac{1}{r}}$$

the values of $X$ and $Y$ represented by $In, Sa, H, p, q$ and $r$ are obtained according to the specific values of $p, q$ and $r$,

$X > Y \geq 0, Y > Z \geq 0$, $Z$ is a value satisfying the actual physical condition

if $h = 2$,

$$\text{then } Y = \left[\frac{In(1-Sa)-A}{K_m}\right]^{\frac{1}{r}}$$

$$\left[\frac{\sin(-H)}{\sin(H-240^\circ)}X + \frac{\sin(H-240^\circ) - \sin(-H)}{\sin(H-240^\circ)}\left[\frac{In(1-Sa)-A}{K_m}\right]^{\frac{1}{r}}\right]^p + X^p = \left(\frac{In-B}{K_M}\right)^q - \left[\frac{In(1-Sa)-A}{K_m}\right]^{\frac{p}{r}}$$

$$Z = \frac{\sin(-H)}{\sin(H-240^\circ)}X + \frac{\sin(H-240^\circ) - \sin(-H)}{\sin(H-240^\circ)}\left[\frac{In(1-Sa)-A}{K_m}\right]^{\frac{1}{r}}$$

the values of $X$ and $Y$ represented by $In, Sa, H, p, q$ and $r$ are obtained according to the specific values of $p, q$ and $r$,

$X > Y \geq 0, Y > Z \geq 0$, $Z$ is a value satisfying the actual physical condition

or if the saturation Sa and the intensity In in the color data in the HSaIn format at the input device side are acquired according to the formulae below,

$$Gl = K_m Min(X,Y,Z)^r + A, \quad Cl = K_M \left[ (X-Gl)^p + (Y-Gl)^p + (Z-Gl)^p \right]^{\frac{1}{q}} + B, \quad In = Cl + Gl, \quad Sa = \frac{Cl}{In}$$

$K_m$ and $K_M$ are positive real numbers, $p$, $q$ and $r$ are nonzero real numbers, $In \geq Gl \geq 0, A \geq 0, B \geq 0$

the color data in the XYZ format at the output device side is acquired according to the following formulae:

$$h = [\frac{H}{120^\circ}], \quad [\bullet] \text{ is a round symbol with respect to } \bullet, \quad H \in [0^\circ, 360^\circ), h = 0, 1, 2$$

if $h = 0$,

$$X = \frac{\left(\frac{InSa-B}{K_M}\right)^{\frac{q}{p}} \sin(120^\circ - H)}{\left[\sin^p(120^\circ - H) + \sin^p(H)\right]^{\frac{1}{p}}} + \left[\frac{In(1-Sa)-A}{K_m}\right]^{\frac{1}{r}}, Y = \frac{\left(\frac{InSa-B}{K_M}\right)^{\frac{q}{p}} \sin(H)}{\left[\sin^p(H) + \sin^p(120^\circ - H)\right]^{\frac{1}{p}}} + \left[\frac{In(1-Sa)-A}{K_m}\right]^{\frac{1}{r}}, Z = \left[\frac{In(1-Sa)-A}{K_m}\right]^{\frac{1}{r}}$$

if $h = 1$,

$$X = \left[\frac{In(1-Sa)-A}{K_m}\right]^{\frac{1}{r}}, Y = \frac{\left(\frac{InSa-B}{K_M}\right)^{\frac{q}{p}} \sin(240^\circ - H)}{\left[\sin^p(H-120^\circ) + \sin^p(240^\circ - H)\right]^{\frac{1}{p}}} + \left[\frac{In(1-Sa)-A}{K_m}\right]^{\frac{1}{r}}, Z = \frac{\left(\frac{InSa-B}{K_M}\right)^{\frac{q}{p}} \sin(H-120^\circ)}{\left[\sin^p(H-120^\circ) + \sin^p(240^\circ - H)\right]^{\frac{1}{p}}} + \left[\frac{In(1-Sa)-A}{K_m}\right]^{\frac{1}{r}}$$

if $h = 2$,

$$X = \frac{\left(\frac{InSa-B}{K_M}\right)^{\frac{q}{p}} \sin(H-240^\circ)}{\left[\sin^p(-H) + \sin^p(H-240^\circ)\right]^{\frac{1}{p}}} + \left[\frac{In(1-Sa)-A}{K_m}\right]^{\frac{1}{r}}, Y = \left[\frac{In(1-Sa)-A}{K_m}\right]^{\frac{1}{r}}, Z = \frac{\left(\frac{InSa-B}{K_M}\right)^{\frac{q}{p}} \sin(-H)}{\left[\sin^p(H-240^\circ) + \sin^p(-H)\right]^{\frac{1}{p}}} + \left[\frac{In(1-Sa)-A}{K_m}\right]^{\frac{1}{r}}$$

The parameters, e.g., $K_M$, $K_m$, p, q, r, m, A, B, etc., in the respective converting manners from the data in the HGICl format to the data in the CIEXYZ format should be selected by referring to the converting manners from the data in the CIEXYZ format to the data in the HGICl format within the defined range of each parameter, and the parameters are preferably selected as follows: $K_M = K_m = 1$, p=q=r=m-1, and A=B=0.

In the embodiment, the step 2241 can be further included after converting the color data in the HSaIn format at the output device side into color data in an XYZ format. In the step 2241, the color data in the XYZ format at the output device side is converted into color data of the output device.

If the color data at the output device side is in a UVW format, the color data in the XYZ format at the output device side is converted into color data in a UVW format according to the following formulae 21-28:

$$\begin{bmatrix} U_2 \\ V_2 \\ W_2 \end{bmatrix} = \begin{bmatrix} \dfrac{\sin(120^0 - \alpha_2)}{\sin(60^0)} & 0 & \dfrac{\sin(\gamma_2)}{\sin(60^0)} \\ \dfrac{\sin(\alpha_2)}{\sin(60^0)} & \dfrac{\sin(120^0 - \beta_2)}{\sin(60^0)} & 0 \\ 0 & \dfrac{\sin(\beta_2)}{\sin(60^0)} & \dfrac{\sin(120^0 - \gamma_2)}{\sin(60^0)} \end{bmatrix}^{-1} \times \begin{bmatrix} X \\ Y \\ Z \end{bmatrix}$$

(Formula 21)

in Formula 21, $\alpha_2 > 0$, $\beta_2 > 0$, $\gamma_2 > 0$;

EP 2 830 314 A1

$$\begin{bmatrix} U_2 \\ V_2 \\ W_2 \end{bmatrix} = \begin{bmatrix} \dfrac{\sin(120^0 - \alpha_2)}{\sin(60^0)} & 0 & 0 \\ \dfrac{\sin(\alpha_2)}{\sin(60^0)} & \dfrac{\sin(120^0 - \beta_2)}{\sin(60^0)} & \dfrac{\sin(-\gamma_2)}{\sin(60^0)} \\ 0 & \dfrac{\sin(\beta_2)}{\sin(60^0)} & \dfrac{\sin(120^0 + \gamma_2)}{\sin(60^0)} \end{bmatrix}^{-1} \times \begin{bmatrix} X \\ Y \\ Z \end{bmatrix} \quad \text{(Formula 22)}$$

in Formula 22, $\alpha_2 > 0$, $\beta_2 > 0$, $\gamma_2 < 0$;

$$\begin{bmatrix} U_2 \\ V_2 \\ W_2 \end{bmatrix} = \begin{bmatrix} \dfrac{\sin(120^0 - \alpha_2)}{\sin(60^0)} & \dfrac{\sin(-\beta_2)}{\sin(60^0)} & \dfrac{\sin(\gamma_2)}{\sin(60^0)} \\ \dfrac{\sin(\alpha_2)}{\sin(60^0)} & \dfrac{\sin(120^0 + \beta_2)}{\sin(60^0)} & 0 \\ 0 & 0 & \dfrac{\sin(120^0 - \gamma_2)}{\sin(60^0)} \end{bmatrix}^{-1} \times \begin{bmatrix} X \\ Y \\ Z \end{bmatrix} \quad \text{(Formula 23)}$$

in Formula 23, $\alpha_2 > 0$, $\beta_2 > 0$, $\gamma_2 > 0$;

$$\begin{bmatrix} U_2 \\ V_2 \\ W_2 \end{bmatrix} = \begin{bmatrix} \dfrac{\sin(120^0 - \alpha_2)}{\sin(60^0)} & \dfrac{\sin(-\beta_2)}{\sin(60^0)} & 0 \\ \dfrac{\sin(\alpha_2)}{\sin(60^0)} & \dfrac{\sin(120^0 + \beta_2)}{\sin(60^0)} & \dfrac{\sin(-\gamma_2)}{\sin(60^0)} \\ 0 & 0 & \dfrac{\sin(120^0 + \gamma_2)}{\sin(60^0)} \end{bmatrix}^{-1} \times \begin{bmatrix} X \\ Y \\ Z \end{bmatrix} \quad \text{(Formula 24)}$$

in Formula 24, $\alpha_2 > 0$, $\beta_2 > 0$, $\gamma_2 < 0$;

$$\begin{bmatrix} U_2 \\ V_2 \\ W_2 \end{bmatrix} = \begin{bmatrix} \dfrac{\sin(120^0 + \alpha_2)}{\sin(60^0)} & 0 & \dfrac{\sin(\gamma_2)}{\sin(60^0)} \\ 0 & \dfrac{\sin(120^0 - \beta_2)}{\sin(60^0)} & 0 \\ \dfrac{\sin(-\alpha_2)}{\sin(60^0)} & \dfrac{\sin(\beta_2)}{\sin(60^0)} & \dfrac{\sin(120^0 - \gamma_2)}{\sin(60^0)} \end{bmatrix}^{-1} \times \begin{bmatrix} X \\ Y \\ Z \end{bmatrix} \quad \text{(Formula 25)}$$

in Formula 25, $\alpha_2 > 0$, $\beta_2 > 0$, $\gamma_2 > 0$;

17

$$
\begin{bmatrix} U_2 \\ V_2 \\ W_2 \end{bmatrix} = \begin{bmatrix} \dfrac{\sin(120^o + \alpha_2)}{\sin(60^o)} & 0 & 0 \\[2ex] 0 & \dfrac{\sin(120^o - \beta_2)}{\sin(60^o)} & \dfrac{\sin(-\gamma_2)}{\sin(60^o)} \\[2ex] \dfrac{\sin(-\alpha_2)}{\sin(60^o)} & \dfrac{\sin(\beta_2)}{\sin(60^o)} & \dfrac{\sin(120^o + \gamma_2)}{\sin(60^o)} \end{bmatrix}^{-1} \times \begin{bmatrix} X \\ Y \\ Z \end{bmatrix}
$$

(Formula 26)

in Formula 26, $\alpha_2 > 0$, $\beta_2 > 0$, $\gamma_2 < 0$;

$$
\begin{bmatrix} U_2 \\ V_2 \\ W_2 \end{bmatrix} = \begin{bmatrix} \dfrac{\sin(120^o + \alpha_2)}{\sin(60^o)} & \dfrac{\sin(-\beta_2)}{\sin(60^o)} & \dfrac{\sin(\gamma_2)}{\sin(60^o)} \\[2ex] 0 & \dfrac{\sin(120^o + \beta_2)}{\sin(60^o)} & 0 \\[2ex] \dfrac{\sin(-\alpha_2)}{\sin(60^o)} & 0 & \dfrac{\sin(120^o - \gamma_2)}{\sin(60^o)} \end{bmatrix}^{-1} \times \begin{bmatrix} X \\ Y \\ Z \end{bmatrix}
$$

(Formula 27)

in Formula 27, $\alpha_2 > 0$, $\beta_2 > 0$, $\gamma_2 > 0$;

$$
\begin{bmatrix} U_2 \\ V_2 \\ W_2 \end{bmatrix} = \begin{bmatrix} \dfrac{\sin(120^o + \alpha_2)}{\sin(60^o)} & \dfrac{\sin(-\beta_2)}{\sin(60^o)} & 0 \\[2ex] 0 & \dfrac{\sin(120^o + \beta_2)}{\sin(60^o)} & \dfrac{\sin(-\gamma_2)}{\sin(60^o)} \\[2ex] \dfrac{\sin(-\alpha_2)}{\sin(60^o)} & 0 & \dfrac{\sin(120^o + \gamma_2)}{\sin(60^o)} \end{bmatrix}^{-1} \times \begin{bmatrix} X \\ Y \\ Z \end{bmatrix}
$$

(Formula 28)

in Formula 28, $\alpha_2 > 0$, $\beta_2 > 0$, $\gamma_2 < 0$;

wherein in the formulae 21-28, $\alpha_2$ is a hue deviation angle between $\overrightarrow{U_2}$ and $\vec{i}$ $\beta_2$ is a hue deviation angle between $\overrightarrow{V_2}$ and $\vec{j}$; $\gamma_2$ is a hue deviation angle between $\overrightarrow{W_2}$ and $\vec{k}$, the values of $U_2$, $V_2$ and $W_2$ are the color data in the UVW format of the output device obtained after the conversion; the values of X, Y and Z in the formulae 21-28 are the color data in the XYZ format; $\overrightarrow{U_2}$, $\overrightarrow{V_2}$ and $\overrightarrow{W_2}$ are UVW channel color data of the output device to represent chromatic vectors within the chromatic plane.

If the color data of the output device is in a multichannel format, the color data $C_1$, $C_2$, ..., $C_n$ in the multichannel format is obtained according to characterized hue data $\alpha_1$, $\alpha_2$, ..., $\alpha_n$ of the respective channels $C_1$, $C_2$, ..., $C_n$ in the color space of the multichannel device and a conversion relationship from predefined $X\vec{i}$, $Y\vec{j}$ and $Z\vec{k}$ of the output device to chromatic vectors $\overrightarrow{C_1}, \overrightarrow{C_2}, \cdots, \overrightarrow{C_n}$ within the chromatic plane.

After the chromatic color data of the output device is obtained, it will be converted into a chromatic image of the output device to be sent to the output device for an image output. The output device, after receiving the chromatic image in the output format that can be identified and processed thereby, performs an image output, e.g., displaying, printing, projecting and the like.

Since the output device has undergone the corresponding processing of removing the color attribute of the output device itself before receiving the chromatic image of the output device and outputting the received chromatic image, when the same chromatic image based on the HSaIn color space model is output through the output devices of different color attributes, almost consistent images will be output. For example, when the printing is performed through the printers of different color attributes, almost consistent chromatic images will be printed to hereby achieve the object "what you see is what you get".

In the embodiment, the management method of obtaining color data in an HSaIn format from color data in an XYZ format at the input device side and the management method of obtaining color data in an XYZ format at the output device side from color data in an HSaIn format at the output device side can be independent of each other.

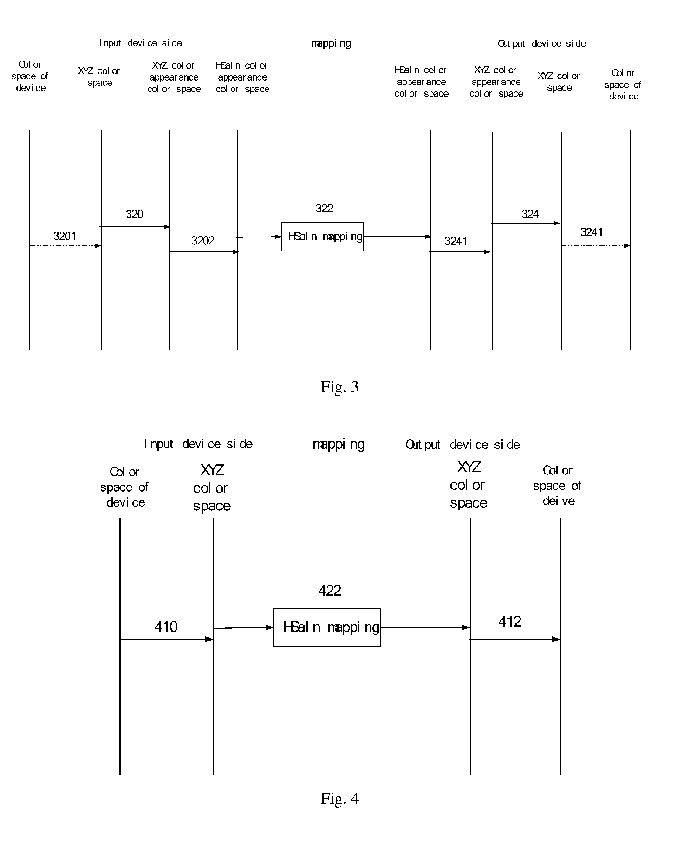

Fig. 3 shows a flow chart of the method of managing color data based on color data in an HSaIn format in an HSaIn color appearance color space of another embodiment of the invention.

The HSaIn color appearance color space describing the color data in the HSaIn format in the embodiment shown in Fig. 3 of the invention and the HSaIn color space describing the color data in the HSaIn format in the embodiment shown in Fig. 2 are essentially the same. That is to say, the HSaIn color appearance color space is a color space based on a CIEXYZ Cartesian color appearance color space, of a color appearance attribute, and described by a cylindrical coordinate system, and is composed of a chromatic plane and a gray axis passing through the origin of the chromatic plane and perpendicular to the chromatic plane;

wherein the chromatic plane is a plane of the CIEXYZ Cartesian color appearance color space X+Y+Z=K, where K is a real constant; an XYZ axis of the CIEXYZ Cartesian color appearance color space performs a projection along a direction of a straight line X=Y=Z on a plane X+Y+Z=K to obtain three projection axes that are 120° with respect to one another within the chromatic plane,

and unit vectors in the directions of the projection axes are $\vec{i}$, $\vec{j}$ and $\vec{k}$;

wherein the color data in the HSaIn format comprises a hue H, a saturation Sa, and an intensity In in the HSaIn color appearance color space; the hue H is described by a polar angle within the chromatic plane in the HSaIn color appearance color space, Sa is described by a proportion of the chromaticness to the intensity Cl/In, and In is described by the sum of the gray and the chromaticness Gl+Cl, Gl=min(X, Y, Z), and is described by the gray axis data of HSaIn, $Cl = |X\vec{i} + Y\vec{j} + Z\vec{k}|^m$, m is a real number and is described by the $m^{th}$ power of the module of the chromatic vector parallel to the chromatic plane in the HSaIn space.

As shown in Fig. 3, color data in an XYZ format in a CIEXYZ color space at the input device side is acquired. There are several manners of acquiring the color data in the XYZ format in the CIEXYZ color space at the input device side. The context has given detailed descriptions of the embodiment shown in Fig. 2, and no unnecessary details are given herein. In the step 320, the acquired color data in the XYZ format at the input device side is converted into color data in an XYZ format in a CIEXYZ color appearance color space. In the step 3202, the color data in the XYZ format in the CIEXYZ color appearance color space is converted into color data in an HSaIn format in an HSaIn color appearance color space at the input device side.

Specially, the converting the acquired color data in the XYZ format into color data in an XYZ format in a CIEXYZ color appearance color space (the step 320) comprises: converting the color data in the XYZ format into color appearance color data $R_a'$, $G_a'$, $B_a'$ in an RGB format at the input device side under a predefined observation condition according to a technical standard CIECAM02; obtaining three color characteristic data $R_a'$, $G_a'$, $B_a'$, i.e., hue deviation angles $\alpha_a$, $\beta_a$ and $\gamma_a$ within the chromatic plane, using characteristic hue values of cone response chromatograms of $R_a'$, $G_a'$ and $B_a'$; performing a conversion into color data $X_a$, $Y_a$, $Z_a$ in an XYZ format in a CIEXYZ color appearance color space according to $R_a'$, $G_a'$ and $B_a'$ and the hue deviation angles $\alpha_a$, $\beta_a$ and $\gamma_a$.

Specifically, the performing a conversion into color data $X_a$, $Y_a$, $Z_a$ in an XYZ format in a CIEXYZ color appearance color space according to $R_a'$, $G_a'$ and $B_a'$ and the hue deviation angles $\alpha_a$, $\beta_a$ and $\gamma_a$ comprises:

converting $R_a'$, $G_a'$ and $B_a'$ into color data in an XYZ format in the CIEXYZ color appearance color space according to the following formulae 60-67:

$$\begin{bmatrix} X_a \\ Y_a \\ Z_a \end{bmatrix} = \begin{bmatrix} \dfrac{\sin(120^\circ - \alpha_a)}{\sin(60^\circ)} & 0 & \dfrac{\sin(\gamma_a)}{\sin(60^\circ)} \\[2ex] \dfrac{\sin(\alpha_a)}{\sin(60^\circ)} & \dfrac{\sin(120^\circ - \beta_a)}{\sin(60^\circ)} & 0 \\[2ex] 0 & \dfrac{\sin(\beta_a)}{\sin(60^\circ)} & \dfrac{\sin(120^\circ - \gamma_a)}{\sin(60^\circ)} \end{bmatrix} \times \begin{bmatrix} R_a^{'} \\ G_a^{'} \\ B_a^{'} \end{bmatrix}$$

(Formula 60)

in Formula 60, $\alpha_a > 0$, $\beta_a > 0$, $> 0$, $\gamma_a > 0$;

$$\begin{bmatrix} X_a \\ Y_a \\ Z_a \end{bmatrix} = \begin{bmatrix} \dfrac{\sin(120^\circ - \alpha_a)}{\sin(60^\circ)} & 0 & 0 \\[2ex] \dfrac{\sin(\alpha_a)}{\sin(60^\circ)} & \dfrac{\sin(120^\circ - \beta_a)}{\sin(60^\circ)} & \dfrac{\sin(-\gamma_a)}{\sin(60^\circ)} \\[2ex] 0 & \dfrac{\sin(\beta_a)}{\sin(60^\circ)} & \dfrac{\sin(120^\circ + \gamma_a)}{\sin(60^\circ)} \end{bmatrix} \times \begin{bmatrix} R_a^{'} \\ G_a^{'} \\ B_a^{'} \end{bmatrix}$$

(Formula 61)

in Formula 61, $\alpha_a > 0$, $\beta_a > 0$, $\gamma_a < 0$;

$$\begin{bmatrix} X_a \\ Y_a \\ Z_a \end{bmatrix} = \begin{bmatrix} \dfrac{\sin(120^\circ - \alpha_a)}{\sin(60^\circ)} & \dfrac{\sin(-\beta_a)}{\sin(60^\circ)} & \dfrac{\sin(\gamma_a)}{\sin(60^\circ)} \\[2ex] \dfrac{\sin(\alpha_a)}{\sin(60^\circ)} & \dfrac{\sin(120^\circ + \beta_a)}{\sin(60^\circ)} & 0 \\[2ex] 0 & 0 & \dfrac{\sin(120^\circ - \gamma_a)}{\sin(60^\circ)} \end{bmatrix} \times \begin{bmatrix} R_a^{'} \\ G_a^{'} \\ B_a^{'} \end{bmatrix}$$

(Formula 62)

in Formula 62, $\alpha_a > 0$, $\beta_a > 0$, $< 0$, $\gamma_a > 0$;

$$\begin{bmatrix} X_a \\ Y_a \\ Z_a \end{bmatrix} = \begin{bmatrix} \dfrac{\sin(120^\circ - \alpha_a)}{\sin(60^\circ)} & \dfrac{\sin(-\beta_a)}{\sin(60^\circ)} & 0 \\[2ex] \dfrac{\sin(\alpha_a)}{\sin(60^\circ)} & \dfrac{\sin(120^\circ + \beta_a)}{\sin(60^\circ)} & \dfrac{\sin(-\gamma_a)}{\sin(60^\circ)} \\[2ex] 0 & 0 & \dfrac{\sin(120^\circ + \gamma_a)}{\sin(60^\circ)} \end{bmatrix} \times \begin{bmatrix} R_a^{'} \\ G_a^{'} \\ B_a^{'} \end{bmatrix}$$

(Formula 63)

in Formula 63, $\alpha_a > 0$, $\beta_a < 0$, $\gamma_a < 0$;

$$\begin{bmatrix} X_a \\ Y_a \\ Z_a \end{bmatrix} = \begin{bmatrix} \dfrac{\sin(120^0 + \alpha_a)}{\sin(60^0)} & 0 & \dfrac{\sin(\gamma_a)}{\sin(60^0)} \\ 0 & \dfrac{\sin(120^0 - \beta_a)}{\sin(60^0)} & 0 \\ \dfrac{\sin(-\alpha_a)}{\sin(60^0)} & \dfrac{\sin(\beta_a)}{\sin(60^0)} & \dfrac{\sin(120^0 - \gamma_a)}{\sin(60^0)} \end{bmatrix} \times \begin{bmatrix} R_a^{'} \\ G_a^{'} \\ B_a^{'} \end{bmatrix}$$

(Formula 64)

in Formula 64, $\alpha_a>0$, $\beta_a>0,>0$, $\gamma_a>0$;

$$\begin{bmatrix} X_a \\ Y_a \\ Z_a \end{bmatrix} = \begin{bmatrix} \dfrac{\sin(120^0 + \alpha_a)}{\sin(60^0)} & 0 & 0 \\ 0 & \dfrac{\sin(120^0 - \beta_a)}{\sin(60^0)} & \dfrac{\sin(-\gamma_a)}{\sin(60^0)} \\ \dfrac{\sin(-\alpha_a)}{\sin(60^0)} & \dfrac{\sin(\beta_a)}{\sin(60^0)} & \dfrac{\sin(120^0 + \gamma_a)}{\sin(60^0)} \end{bmatrix} \times \begin{bmatrix} R_a^{'} \\ G_a^{'} \\ B_a^{'} \end{bmatrix}$$

(Formula 65)

in Formula 65, $\alpha_a>0$, $\beta_{aa}>0$, $\gamma_a<0$;

$$\begin{bmatrix} X_a \\ Y_a \\ Z_a \end{bmatrix} = \begin{bmatrix} \dfrac{\sin(120^0 + \alpha_a)}{\sin(60^0)} & \dfrac{\sin(-\beta_a)}{\sin(60^0)} & \dfrac{\sin(\gamma_a)}{\sin(60^0)} \\ 0 & \dfrac{\sin(120^0 + \beta_a)}{\sin(60^0)} & 0 \\ \dfrac{\sin(-\alpha_a)}{\sin(60^0)} & 0 & \dfrac{\sin(120^0 - \gamma_a)}{\sin(60^0)} \end{bmatrix} \times \begin{bmatrix} R_a^{'} \\ G_a^{'} \\ B_a^{'} \end{bmatrix}$$

(Formula 66)

in Formula 66, $\alpha_a>0$, $\beta_a<0$, $\gamma_a>0$;

$$\begin{bmatrix} X_a \\ Y_a \\ Z_a \end{bmatrix} = \begin{bmatrix} \dfrac{\sin(120^0 + \alpha_a)}{\sin(60^0)} & \dfrac{\sin(-\beta_a)}{\sin(60^0)} & 0 \\ 0 & \dfrac{\sin(120^0 + \beta_a)}{\sin(60^0)} & \dfrac{\sin(-\gamma_a)}{\sin(60^0)} \\ \dfrac{\sin(-\alpha_a)}{\sin(60^0)} & 0 & \dfrac{\sin(120^0 + \gamma_a)}{\sin(60^0)} \end{bmatrix} \times \begin{bmatrix} R_a^{'} \\ G_a^{'} \\ B_a^{'} \end{bmatrix}$$

(Formula 67)

in Formula 67, $\alpha_a>0$, $\beta_a<0$, $\gamma_a<0$;
wherein the values of $R_a{'}$, $G_a{'}$ and $B_a{'}$ in the above formulae 60-67 are the color data in the RGB format; the values of $X_a$, $Y_a$ and $Z_a$ in the formulae 60-67 are the converted color data in the CIEXYZ color appearance color space;

$\alpha_a$ is a hue deviation angle between $\overrightarrow{R_a^{'}}$ and $\vec{i}$ ; $\beta_a$ is a hue deviation angle between $\overrightarrow{G_a^{'}}$ and $\vec{j}$ ; $\gamma_a$ is a hue

deviation angle between $\vec{B_a}$ and $\vec{k}$ ; $R_a'$, $G_a'$ and $B_a'$ are modules of the chromatic vectors $\vec{R_a}$ , $\vec{G_a}$ , $\vec{B_a}$ within the chromatic plane.

Specially, the converting the color data in the XYZ format in the CIEXYZ color appearance color space into color data in an HSaIn format in an HSaIn color appearance color space at the input device side (the step 3202) comprises:

acquiring the hue H in the color data in the HSaIn format at the input device side according to the following formula:

$$H = \begin{cases} \arccos\left(\dfrac{2X_a - Y_a - Z_a}{2\sqrt{(X_a - Y_a)^2 + (Y_a - Z_a)^2 + (X_a - Y_a)(Y_a - Z_a)}}\right), & Y_a \geq Z_a \\ 2\pi - \arccos\left(\dfrac{2X_a - Y_a - Z_a}{2\sqrt{(X_a - Y_a)^2 + (Y_a - Z_a)^2 + (X_a - Y_a)(Y_a - Z_a)}}\right), & Y_a < Z_a \\ \text{undefined}, & X_a = Y_a = Z_a \end{cases} \qquad \text{(Formula 2)}$$

wherein the tristimulus values $X_a$, $Y_a$, $Z_a$ are the color data in the XYZ format, i.e., the color data in the CIEXYZ Cartesian color appearance color space, and respectively represent numerical values on the X, Y and Z coordinate axes in the CIEXYZ Cartesian color space.

The saturation Sa and the intensity In in the color data in the HSaIn format at the input device side are acquired according to the following formulae and based on the color data in the XYZ format in the CIEXYZ color appearance color space:

$$Gl = K_m \left[ Min(X,Y,Z) \right]^p + A, \quad In = K_M \left[ Max(X,Y,Z) \right]^q + B, \quad Cl = In - Gl, \quad Sa = \frac{Cl}{In}$$

$K_m$ and $K_M$ are positive real numbers, $In \geq Gl \geq 0, A \geq 0, B \geq 0$, $p$ and $q$ are nonzero real numbers

or

$$Gl = K_m \left[ Min(X,Y,Z) \right]^p + A, \quad In = \frac{1}{3} K_M (X + Y + Z)^q + B, \quad Cl = In - Gl, \quad Sa = \frac{Cl}{In}$$

$K_m$ and $K_M$ are positive real numbers, $K_M > K_m, In \geq Gl \geq 0, A \geq 0, B \geq 0$, $p$ and $q$ are nonzero real numbers

or

$$Gl = K_m Min(X,Y,Z)^p + A, \quad In = \frac{1}{2} K_M \left[ Max(X,Y,Z) + Min(X,Y,Z) \right]^q + B, \quad Cl = In - Gl, \quad Sa = \frac{Cl}{In}$$

$K_m$ and $K_M$ are positive real numbers, $K_M > K_m, In \geq Gl \geq 0, A \geq 0, B \geq 0$, $p$ and $q$ are nonzero real numbers

or

$$Gl = K_m Min(X,Y,Z)^p + A, \quad Cl = K_M \left| X\vec{i} + Y\vec{j} + Z\vec{k} \right|^m + B, \quad In = Gl + Cl, \quad Sa = \frac{Cl}{In}$$

$K_m$ and $K_M$ are positive real numbers, $p$ and $m$ are nonzero real numbers, $In \geq Gl \geq 0, A \geq 0, B \geq 0$

or

$$Gl = K_m Min(X,Y,Z)^r + A, \quad In = K_M \left[ X^p + Y^p + Z^p \right]^{\frac{1}{q}} + B, \quad Cl = In - Gl, \quad Sa = \frac{Cl}{In}$$

$K_m$ and $K_M$ are positive real numbers, $K_M > K_m > 0$, $p$, $q$ and $r$ are nonzero real numbers, $In \geq Gl \geq 0, A \geq 0, B \geq 0$

or

$$Gl = K_m Min(X,Y,Z)^r + A, \quad Cl = K_M \left[ (X-Gl)^p + (Y-Gl)^p + (Z-Gl)^p \right]^{\frac{1}{q}} + B, \quad In = Cl + Gl, \quad Sa = \frac{Cl}{In}$$

$K_m$ and $K_M$ are positive real numbers, $K_M > K_m > 0$, $p$, $q$ and $r$ are nonzero real numbers, $In \geq Gl \geq 0, A \geq 0, B \geq 0$

In the process of converting the data in the CIEXYZ format into data in an HSaIn format, parameters, e.g., $K_M$, $K_m$, p, q, r, m, A, B, etc., in each acquiring manner can be selected within their defined ranges and are feasible in the implementation, but the preferred selection is that $K_M=K_m=1$, p=q=r=m-1, and A=B=0.

After the chromatic image independent of the impacts of the color characteristic of the device itself is acquired, the chromatic image independent of the impacts of the color characteristic of the device itself can be output through the output device for an output display or an output printing, projection and the like. The output device can specifically include a display, a printer, a printing machine, a projector and the like. The so-called chromatic image in an output format refers to a chromatic image in a storage format that can be identified and processed by the output device. For example, if the output device is a display, the output format of the chromatic image thereof is generally an RGB format; if the output device is a printer, the output format of the chromatic image thereof is generally a CMYe format. The specific method of converting the color data of the chromatic image in the HSaIn format into color data of a chromatic image in an output format, and removing the impacts of the color attribute of the output device itself on the output chromatic image in the conversion process will be introduced in detail below.

The embodiment shown in Fig. 3 further comprises the step 322, in which the color data in the HSaIn format in the HSaIn color appearance color space at the input device side is mapped according to a mapping relationship between a color gamut of the input device and a color gamut of the output device to obtain the color data in the HSaIn format in the HSaIn color appearance color space at the output device side. Specifically, Fig. 7, Fig. 8 and Fig. 9 show a color gamut comparing relationship between the input device and the output device, a white field position within the chromatic plane, and a color distribution range of an image; Fig. 10 and Fig. 11 show an intensity mapping relationship and a saturation mapping relationship under an Iso-hue plane in the HSaIn color appearance color space under the determination of the color representation intention; Fig. 12 and Fig. 13 show an intensity mapping relationship $In_{LUT}$ and a saturation mapping relationship $Sa_{LUT}$ corresponding to the input and output gamuts, and the mapping of all color data of the image from the input device side to the output device side is performed according to $In_{LUT}$ and $Sa_{LUT}$ to obtain the color data in the HSaIn format in the HSaIn color appearance color space at the output device side.

Within the chromatic plane, a pure chromatic vector of each channel of each device is represented according to the intensity numerical value of the channel and the characterized hue value of the spectrum of the channel, all possible intensity numerical values of all the channels are traversed, and the set of all the chromatic vectors obtained by these traversed intensity data undergoing a pure chromatic vector addition within the chromatic plane according to a vector addition rule is just the color gamut represented by this device within the chromatic plane. The white field position in the color gamut is a position where the chromatic vector obtained after the addition of the pure chromatic vectors corresponding to the XYZ values of the white field self-defined by the respective devices within the chromatic plane is located. If the XYZ values of the white field are equal, the white field position is on the origin of the polar coordinate. The color distribution range of the image is a set of the positions of the superimposed chromatic vectors obtained by the XYZ value data of all the pixels of this image by means of the vector addition rule within the chromatic plane, and the distribution formed by this set is just the color distribution range of this image within the chromatic plane. The color representation intention is preset one of the color management strategies of the color gamut mapping, and is generally divided into a perceptual color representation intention, a saturated color representation intention, a relative chrominance color representation intention and an absolute color representation intention according to the textbook, and more color representation intentions can be further defined according to specific requirements for the color management, and no unnecessary details are given herein.

Fig. 7, Fig. 8 and Fig. 9 show schematic examples of the gamuts of the input and output devices within the chromatic plane, the white field position and the distribution range of the image, and one input image distribution under the perceptual color representation intention from the state that the output color gamut cannot be completely covered to the state that the output gamut is completely covered.

Fig. 10 and Fig. 11 are schematic diagrams of the color gamut mapping. Performing the color gamut mapping in the HSaIn color appearance color space is divided into performing an intensity In preferential mapping and performing a saturation Sa preferential mapping under the iso-H. The In preferential mapping is to map In according to LUT on the premise that the Sa mapping relationship is preset; the Sa preferential mapping is to map Sa according to LUT on the premise that the In mapping relationship is preset.

Fig. 10 shows that in process of performing the color gamut mapping in the HSaIn color appearance color space, on the premise of the iso-hue H, the transverse axis is the Cl chromatic vector under the hue H, the longitudinal axis is the Gl gray, on the premise of the iso-Sa, the schematic diagram of performing the intensity mapping with $In_{LUT}$ as shown in Fig. 12 is performed, and the output intensities of all the color data under the iso-H and the iso-Sa are obtained finally to thereby obtain the color data H, Sa, In at the output device side.

Fig. 11 shows that in the process of performing the color gamut mapping in the HSaIn color appearance color space, on the premise of the iso-hue H, the transverse axis is the Cl chromatic vector under the hue H, the longitudinal axis is the Gl gray, on the premise that the preset incremental Sa line is performed according to the color representation intention, the schematic diagram of performing the intensity mapping with $In_{LUT}$ as shown in Fig. 12 is performed, and the output intensities of all the color data under the iso-H and the incremental Sa are obtained finally to thereby obtain the color data H, Sa, In at the output device side.

Similarly, there is a further intensity mapping performed on the premise of a preset Sa curve of another rule according to the color representation intention to obtain the color data H, Sa, In at the output device side, and no unnecessary details are given herein.

Similarly, there is a further method of further performing a saturation Sa mapping after presetting the intensity In mapping according to the color representation intention on the premise of the iso-hue H to obtain the color data H, Sa, In at the output device side, and no unnecessary details are given herein.

Fig. 12 and Fig. 13 are respectively a schematic diagram of the intensity In mapping LUT and a schematic diagram of the saturation Sa mapping LUT.

The embodiment shown in Fig. 3 can further comprise the step 3242. In the step 3242, the color data in the HSaIn format in the HSaIn color appearance color space at the output device side is converted into color data in an XYZ format in a CIEXYZ color appearance color space. Specifically, the saturation Sa and the intensity In in the color data in the HSaIn format in the HSaIn color appearance color space at the input device side are acquired according to the following formulae:

$$Gl = K_m \left[ Min\left(X,Y,Z\right) \right]^p + A, \quad In = K_M \left[ Max\left(X,Y,Z\right) \right]^q + B, \quad Cl = In - Gl, \quad Sa = \frac{Cl}{In}$$

$K_m$ and $K_M$ are positive real numbers, $In \geq Gl \geq 0, A \geq 0, B \geq 0, p$ and $q$ are nonzero real numbers

or

$$Gl = K_m \left[ Min\left(X,Y,Z\right) \right]^p + A, \quad In = \frac{1}{3} K_M \left(X + Y + Z\right)^q + B, \quad Cl = In - Gl, \quad Sa = \frac{Cl}{In}$$

$K_m$ and $K_M$ are positive real numbers, $K_M > K_m, In \geq Gl \geq 0, A \geq 0, B \geq 0, p$ and $q$ are nonzero real numbers

or

$$Gl = K_m Min(X,Y,Z)^p + A, \quad In = \frac{1}{2} K_M \left[ Max(X,Y,Z) + Min(X,Y,Z) \right]^q + B, \quad Cl = In - Gl, \quad Sa = \frac{Cl}{In}$$

$K_m$ and $K_M$ are positive real numbers, $K_M > K_m, In \geq Gl \geq 0, A \geq 0, B \geq 0, p$ and $q$ are nonzero real numbers

or

$$Gl = K_m Min(X,Y,Z)^p + A, \qquad Cl = K_M \left| X\vec{i} + Y\vec{j} + Z\vec{k} \right|^m + B, \quad In = Gl + Cl, \quad Sa = \frac{Cl}{In}$$

$K_m$ and $K_M$ are positive real numbers, $p$ and $m$ are nonzero real numbers, $In \geq Gl \geq 0, A \geq 0, B \geq 0$

or

$$Gl = K_m Min(X,Y,Z)^r + A, \quad In = K_M \left[ X^p + Y^p + Z^p \right]^{\frac{1}{q}} + B, \quad Cl = In - Gl, \quad Sa = \frac{Cl}{In}$$

$K_m$ and $K_M$ are positive real numbers, $K_M > K_m > 0$, $p$, $q$ and $r$ are nonzero real numbers, $In \geq Gl \geq 0, A \geq 0, B \geq 0$

or

$$Gl = K_m Min(X,Y,Z)^r + A, \quad Cl = K_M \left[ (X - Gl)^p + (Y - Gl)^p + (Z - Gl)^p \right]^{\frac{1}{q}} + B, \quad In = Cl + Gl, \quad Sa = \frac{Cl}{In}$$

$K_m$ and $K_M$ are positive real numbers, $K_M > K_m > 0$, $p$, $q$ and $r$ are nonzero real numbers, $In \geq Gl \geq 0, A \geq 0, B \geq 0$

The color data in the XYZ format in the CIEXYZ color appearance color space at the output device side is obtained based on the following formulae:

if the saturation Sa and the intensity In in the color data in the HSaIn format at the input device side are acquired according to the formulae below,

$$Gl = K_m \left[ Min(X,Y,Z) \right]^p + A, \quad In = K_M \left[ Max(X,Y,Z) \right]^q + B, \quad Cl = In - Gl, \quad Sa = \frac{Cl}{In}$$

$K_m$ and $K_M$ are positive real numbers, $In \geq Gl \geq 0, A \geq 0, B \geq 0$, $p$ and $q$ are nonzero real numbers

the color data in the XYZ format at the output device side is acquired according to the following formulae:

$$
\left\{
\begin{array}{ll}
H' = \dfrac{H}{60^\circ}, h = [H'], [\bullet] \text{ is a round symbol with respect to } \bullet, \ H \in [0^\circ, 360^\circ), h = 0,1,2,3,4,5 & \\[2ex]
X = \left( \dfrac{In-B}{K_M} \right)^{\frac{1}{q}}, Y = \left( \dfrac{In-B}{K_M} \right)^{\frac{1}{q}} \dfrac{\sin H}{\sin(120^\circ - H)} + \left( \dfrac{In(1-Sa)-A}{K_m} \right)^{\frac{1}{p}} \dfrac{\sin(120^\circ - H) - \sin H}{\sin(120^\circ - H)}, Z = \left( \dfrac{In(1-Sa)-A}{K_m} \right)^{\frac{1}{p}}, & h=0 \\[3ex]
X = \left( \dfrac{In-B}{K_M} \right)^{\frac{1}{q}} \dfrac{\sin(120^\circ - H)}{\sin H} + \left( \dfrac{In(1-Sa)-A}{K_m} \right)^{\frac{1}{p}} \dfrac{\sin H - \sin(120^\circ - H)}{\sin H}, Y = \left( \dfrac{In-B}{K_M} \right)^{\frac{1}{q}}, Z = \left( \dfrac{In(1-Sa)-A}{K_m} \right)^{\frac{1}{p}}, & h=1 \\[3ex]
X = \left( \dfrac{In(1-Sa)-A}{K_m} \right)^{\frac{1}{p}}, Y = \left( \dfrac{In-B}{K_M} \right)^{\frac{1}{q}}, Z = \left( \dfrac{In-B}{K_M} \right)^{\frac{1}{q}} \dfrac{\sin(H-120^\circ)}{\sin(240^\circ - H)} + \left( \dfrac{In(1-Sa)-A}{K_m} \right)^{\frac{1}{p}} \dfrac{\sin(240^\circ - H) - \sin(H-120^\circ)}{\sin(240^\circ - H)}, & h=2 \\[3ex]
X = \left( \dfrac{In(1-Sa)-A}{K_m} \right)^{\frac{1}{p}}, Y = \left( \dfrac{In-B}{K_M} \right)^{\frac{1}{q}} \dfrac{\sin(240^\circ - H)}{\sin(H-120^\circ)} + \left( \dfrac{In(1-Sa)-A}{K_m} \right)^{\frac{1}{p}} \dfrac{\sin(H-120^\circ) - \sin(240^\circ - H)}{\sin(H-120^\circ)}, Z = \left( \dfrac{In-B}{K_M} \right)^{\frac{1}{q}}, & h=3 \\[3ex]
X = \left( \dfrac{In-B}{K_M} \right)^{\frac{1}{q}} \dfrac{\sin(H-240^\circ)}{\sin(-H)} + \left( \dfrac{In(1-Sa)-A}{K_m} \right)^{\frac{1}{p}} \dfrac{\sin(-H) - \sin(H-240^\circ)}{\sin(-H)}, Y = \left( \dfrac{In(1-Sa)-A}{K_m} \right)^{\frac{1}{p}}, Z = \left( \dfrac{In-B}{K_M} \right)^{\frac{1}{q}}, & h=4 \\[3ex]
X = \left( \dfrac{In-B}{K_M} \right)^{\frac{1}{q}}, Y = \left( \dfrac{In(1-Sa)-A}{K_m} \right)^{\frac{1}{p}}, Z = \left( \dfrac{In-B}{K_M} \right)^{\frac{1}{q}} \dfrac{\sin(-H)}{\sin(H-240^\circ)} + \left( \dfrac{In(1-Sa)-A}{K_m} \right)^{\frac{1}{p}} \dfrac{\sin(H-240^\circ) - \sin(-H)}{\sin(H-240^\circ)}, & h=5
\end{array}
\right.
$$

or if the saturation Sa and the intensity In in the color data in the HSaIn format at the input device side are acquired according to the formulae below,

$$Gl = K_m \left[ Min\left( X,Y,Z \right) \right]^p + A, \quad In = \frac{1}{3} K_M \left( X + Y + Z \right)^q + B, \quad Cl = In - Gl, \quad Sa = \frac{Cl}{In}$$

$K_m$ and $K_M$ are positive real numbers, $\mathrm{K_M} > K_m, In \geq Gl \geq 0, A \geq 0, B \geq 0, p$ and $q$ are nonzero real numbers

the color data in the XYZ format at the output device side is acquired according to the following formulae:

when $0° \leq H < 120°$

$$X = \left[ \frac{3In - B}{K_M} \right]^{\frac{1}{q}} \frac{\sin(120° - H)}{\sin(H) + \sin(120° - H)} - \left[ \frac{In(1 - Sa) - A}{K_m} \right]^{\frac{1}{p}} \frac{2\sin(120° - H) - \sin(H)}{\sin(H) + \sin(120° - H)}$$

$$Y = \left[ \frac{3In - B}{K_M} \right]^{\frac{1}{q}} \frac{\sin(H)}{\sin(H) + \sin(120° - H)} - \left[ \frac{In(1 - Sa) - A}{K_m} \right]^{\frac{1}{p}} \frac{2\sin(H) - \sin(120° - H)}{\sin(H) + \sin(120° - H)}$$

$$Z = \left[ \frac{In(1 - Sa) - A}{K_m} \right]^{\frac{1}{p}}$$

when $120° \leq H < 240°$

$$X = \left[ \frac{In(1 - Sa) - A}{K_m} \right]^{\frac{1}{p}},$$

$$Y = \left[ \frac{3In - B}{K_M} \right]^{\frac{1}{q}} \frac{\sin(240° - H)}{\sin(H - 120°) + \sin(240° - H)} - \left[ \frac{In(1 - Sa) - A}{K_m} \right]^{\frac{1}{p}} \frac{2\sin(240° - H) - \sin(H - 120°)}{\sin(H - 120°) + \sin(240° - H)}$$

$$Z = \left[ \frac{3In - B}{K_M} \right]^{\frac{1}{q}} \frac{\sin(H - 120°)}{\sin(H - 120°) + \sin(240° - H)} - \left[ \frac{In(1 - Sa) - A}{K_m} \right]^{\frac{1}{p}} \frac{2\sin(H - 120°) - \sin(240° - H)}{\sin(H - 120°) + \sin(240° - H)}$$

when $240° \leq H < 360°$

$$X = \left[ \frac{3In - B}{K_M} \right]^{\frac{1}{q}} \frac{\sin(H - 240°)}{\sin(H - 240°) + \sin(-H)} - \left[ \frac{In(1 - Sa) - A}{K_m} \right]^{\frac{1}{p}} \frac{2\sin(H - 240°) - \sin(-H)}{\sin(H - 240°) + \sin(-H)}$$

$$Y = \left[ \frac{In(1 - Sa) - A}{K_m} \right]^{\frac{1}{p}}$$

$$Z = \left[ \frac{3In - B}{K_M} \right]^{\frac{1}{q}} \frac{\sin(-H)}{\sin(H - 240°) + \sin(-H)} - \left[ \frac{In(1 - Sa) - A}{K_m} \right]^{\frac{1}{p}} \frac{2\sin(-H) - \sin(H - 240°)}{\sin(H - 240°) + \sin(-H)}$$

or if the saturation Sa and the intensity In in the color data in the HSaIn format at the input device side are acquired according to the formulae below,

$$Gl = K_m Min(X,Y,Z)^p + A, \quad In = \frac{1}{2} K_M \left[ Max(X,Y,Z) + Min(X,Y,Z) \right]^q + B, \quad Cl = In - Gl, \quad Sa = \frac{Cl}{In}$$

$K_m$ and $K_M$ are positive real numbers, $K_M > K_m, In \geq Gl \geq 0, A \geq 0, B \geq 0, p$ and $q$ are nonzero real numbers

the color data in the XYZ format at the output device side is acquired according to the following formulae:

$$H'=\frac{H}{60^\circ}, h=[H'], [\bullet] \text{ is a round symbol with respect to } \bullet, \ H\in[0,360^\circ), h=0,1,2,3,4,5$$

$$X=\left[2\frac{In-B}{K_M}\right]^{\frac{1}{q}}-\left[\frac{In(1-Sa)-A}{K_m}\right]^{\frac{1}{p}}, Y=\left[2\frac{In-B}{K_M}\right]^{\frac{1}{q}}\frac{\sin H}{\sin(120^\circ-H)}+\left[\frac{In(1-Sa)-A}{K_m}\right]^{\frac{1}{p}}\frac{\sin(120^\circ-H)-2\sin H}{\sin(120^\circ-H)}, Z=\left[\frac{In(1-Sa)-A}{K_m}\right]^{\frac{1}{p}}, \qquad h=0$$

$$X=\left[2\frac{In-B}{K_M}\right]^{\frac{1}{q}}\frac{\sin(120^\circ-H)}{\sin H}+\left[\frac{In(1-Sa)-A}{K_m}\right]^{\frac{1}{p}}\frac{\sin H-2\sin(120^\circ-H)}{\sin H}, Y=\left[2\frac{In-B}{K_M}\right]^{\frac{1}{q}}-\left[\frac{In(1-Sa)-A}{K_m}\right]^{\frac{1}{p}}, Z=\left[\frac{In(1-Sa)-A}{K_m}\right]^{\frac{1}{p}}, \qquad h=1$$

$$X=\left[\frac{In(1-Sa)-A}{K_m}\right]^{\frac{1}{p}}, Y=\left[2\frac{In-B}{K_M}\right]^{\frac{1}{q}}-\left[\frac{In(1-Sa)-A}{K_m}\right]^{\frac{1}{p}}, Z=\left[2\frac{In-B}{K_M}\right]^{\frac{1}{q}}\frac{\sin(H-120^\circ)}{\sin(240^\circ-H)}+\left[\frac{In(1-Sa)-A}{K_m}\right]^{\frac{1}{p}}\frac{\sin(240^\circ-H)-2\sin(H-120^\circ)}{\sin(240^\circ-H)}, \quad h=2$$

$$X=\left[\frac{In(1-Sa)-A}{K_m}\right]^{\frac{1}{p}}, Y=\left[2\frac{In-B}{K_M}\right]^{\frac{1}{q}}\frac{\sin(240^\circ-H)}{\sin(H-120^\circ)}+\left[\frac{In(1-Sa)-A}{K_m}\right]^{\frac{1}{p}}\frac{\sin(H-120^\circ)-2\sin(240^\circ-H)}{\sin(H-120^\circ)}, Z=\left[2\frac{In-B}{K_M}\right]^{\frac{1}{q}}-\left[\frac{In(1-Sa)-A}{K_m}\right]^{\frac{1}{p}}, \quad h=3$$

$$X=\left[2\frac{In-B}{K_M}\right]^{\frac{1}{q}}\frac{\sin(H-240^\circ)}{\sin(-H)}+\left[\frac{In(1-Sa)-A}{K_m}\right]^{\frac{1}{p}}\frac{\sin(-H)-2\sin(H-240^\circ)}{\sin(-H)}, Y=\left[\frac{In(1-Sa)-A}{K_m}\right]^{\frac{1}{p}}, Z=\left[2\frac{In-B}{K_M}\right]^{\frac{1}{q}}-\left[\frac{In(1-Sa)-A}{K_m}\right]^{\frac{1}{p}}, \qquad h=4$$

$$X=\left[2\frac{In-B}{K_M}\right]^{\frac{1}{q}}-\left[\frac{In(1-Sa)-A}{K_m}\right]^{\frac{1}{p}}, Y=\left[\frac{In(1-Sa)-A}{K_m}\right]^{\frac{1}{p}}, Z=\left[2\frac{In-B}{K_M}\right]^{\frac{1}{q}}\frac{\sin(-H)}{\sin(H-240^\circ)}+\left[\frac{In(1-Sa)-A}{K_m}\right]^{\frac{1}{p}}\frac{\sin(H-240^\circ)-2\sin(-H)}{\sin(H-240^\circ)}, \qquad h=5$$

or if the saturation Sa and the intensity In in the color data in the HSaIn format at the input device side are acquired according to the formulae below,

$$Gl = K_m Min(X,Y,Z)^p + A, \qquad Cl = K_M \left|X\vec{i}+Y\vec{j}+Z\vec{k}\right|^m + B, \quad In = Gl + Cl, \quad Sa = \frac{Cl}{In}$$

$K_m$ and $K_M$ are positive real numbers, $p$ and $m$ are nonzero real numbers, $In \geq Gl \geq 0, A \geq 0, B \geq 0$

the color data in the XYZ format at the output device side is acquired according to the following formulae:

$$h=[\frac{H}{120^\circ}], \quad [\bullet] \text{ is a round symbol with respect to } \bullet, \ H\in[0^\circ,360^\circ), h=0,1,2$$

if $h=0$,

$$X=\left(\frac{SaIn-B}{K_M}\right)^{\frac{1}{m}}\left[\cos(H)+\frac{\sqrt{3}}{3}\sin(H)\right]+\left[\frac{(1-Sa)In-A}{K_m}\right]^{\frac{1}{p}}, Y=\frac{2\sqrt{3}}{3}\sin(H)\left(\frac{SaIn-B}{K_M}\right)^{\frac{1}{m}}+\left[\frac{(1-Sa)In-A}{K_m}\right]^{\frac{1}{p}}, Z=\left[\frac{(1-Sa)In-A}{K_m}\right]^{\frac{1}{p}}$$

if $h=1$,

$$X=\left[\frac{(1-Sa)In-A}{K_m}\right]^{\frac{1}{p}}, Y=\left[\frac{(1-Sa)In-A}{K_m}\right]^{\frac{1}{p}}-\left(\frac{SaIn-B}{K_M}\right)^{\frac{1}{m}}\left[\cos(H)-\frac{\sqrt{3}}{3}\sin(H)\right], Z=\left[\frac{(1-Sa)In-A}{K_m}\right]^{\frac{1}{p}}-\left(\frac{SaIn-B}{K_M}\right)^{\frac{1}{m}}\left[\cos(H)+\frac{\sqrt{3}}{3}\sin(H)\right]$$

if $h=2$,

$$X=\left(\frac{SaIn-B}{K_M}\right)^{\frac{1}{m}}\left[\cos(H)-\frac{\sqrt{3}}{3}\sin(H)\right]+\left[\frac{(1-Sa)In-A}{K_m}\right]^{\frac{1}{p}}, Y=\left[\frac{(1-Sa)In-A}{K_m}\right]^{\frac{1}{p}}, Z=\left[\frac{(1-Sa)In-A}{K_m}\right]^{\frac{1}{p}}-\frac{2\sqrt{3}}{3}\sin(H)\left(\frac{SaIn-B}{K_M}\right)^{\frac{1}{m}}$$

or if the saturation Sa and the intensity In in the color data in the HSaIn format at the input device side are acquired according to the formulae below,

$$Gl = K_m Min(X,Y,Z)^r + A, \quad In = K_M \left[ X^p + Y^p + Z^p \right]^{\frac{1}{q}} + B, \quad Cl = In - Gl, \quad Sa = \frac{Cl}{In}$$

$K_m$ and $K_M$ are positive real numbers, $K_M > K_m > 0$, $p$, $q$ and $r$ are nonzero real numbers,

$In \ge Gl \ge 0, A \ge 0, B \ge 0$

the color data in the XYZ format at the output device side is acquired according to the following formulae:

$$h = [\frac{H}{120^\circ}], \quad [\bullet] \text{ is a round symbol with respect to } \bullet, \quad H \in [0^\circ, 360^\circ), h = 0,1,2$$

if $h = 0$,

then $Z = \left[ \dfrac{In(1-Sa)-A}{K_m} \right]^{\frac{1}{r}}$

$$\left[ \frac{\sin(120^\circ - H)}{\sin H} Y + \frac{\sin H - \sin(120^\circ - H)}{\sin H} \left[ \frac{In(1-Sa)-A}{K_m} \right]^{\frac{1}{r}} \right]^p + Y^p = \left( \frac{In - B}{K_M} \right)^q - \left[ \frac{In(1-Sa)-A}{K_m} \right]^{\frac{p}{r}}$$

$$X = \frac{\sin(120^\circ - H)}{\sin H} Y + \frac{\sin H - \sin(120^\circ - H)}{\sin H} \left[ \frac{In(1-Sa)-A}{K_m} \right]^{\frac{1}{r}}$$

the values of $X$ and $Y$ represented by $In, Sa, H, p, q$ and $r$ are obtained according to the specific values of $p, q$ and $r$, $X > Y \ge 0, Y > Z \ge 0$,

$Z$ is a value satisfying the actual physical condition

if $h = 1$,

then $X = \left[ \dfrac{In(1-Sa)-A}{K_m} \right]^{\frac{1}{r}}$

$$\left[ \frac{\sin(H - 120^\circ)}{\sin(240^\circ - H)} Y + \frac{\sin(240^\circ - H) - \sin(H - 120^\circ)}{\sin(240^\circ - H)} \left[ \frac{In(1-Sa)-A}{K_m} \right]^{\frac{1}{r}} \right]^p + Y^p = \left( \frac{In - B}{K_M} \right)^q - \left[ \frac{In(1-Sa)-A}{K_m} \right]^{\frac{p}{r}}$$

$$Z = \frac{\sin(H - 120^\circ)}{\sin(240^\circ - H)} Y + \frac{\sin(240^\circ - H) - \sin(H - 120^\circ)}{\sin(240^\circ - H)} \left[ \frac{In(1-Sa)-A}{K_m} \right]^{\frac{1}{r}}$$

the values of $X$ and $Y$ represented by $In, Sa, H, p, q$ and $r$ are obtained according to the specific values of $p, q$ and $r$,

$X > Y \ge 0, Y > Z \ge 0$, $Z$ is a value satisfying the actual physical condition

if $h = 2$,

then $Y = \left[\dfrac{In(1-Sa)-A}{K_m}\right]^{\frac{1}{r}}$

$$\left[\dfrac{\sin(-H)}{\sin(H-240^\circ)}X + \dfrac{\sin(H-240^\circ)-\sin(-H)}{\sin(H-240^\circ)}\left[\dfrac{In(1-Sa)-A}{K_m}\right]^{\frac{1}{r}}\right]^p + X^p = \left(\dfrac{In-B}{K_M}\right)^q - \left[\dfrac{In(1-Sa)-A}{K_m}\right]^{\frac{p}{r}}$$

$$Z = \dfrac{\sin(-H)}{\sin(H-240^\circ)}X + \dfrac{\sin(H-240^\circ)-\sin(-H)}{\sin(H-240^\circ)}\left[\dfrac{In(1-Sa)-A}{K_m}\right]^{\frac{1}{r}}$$

the values of $X$ and $Y$ represented by $In, Sa, H, p, q$ and $r$ are obtained according to the specific values of $p, q$ and $r$,

$X > Y \geq 0, Y > Z \geq 0$, $Z$ is a value satisfying the actual physical condition

or if the saturation Sa and the intensity In in the color data in the HSaln format at the input device side are acquired according to the formulae below,

$$Gl = K_m Min(X,Y,Z)^r + A, \quad Cl = K_M \left[(X-Gl)^p + (Y-Gl)^p + (Z-Gl)^p\right]^{\frac{1}{q}} + B, \quad In = Cl + Gl, \quad Sa = \dfrac{Cl}{In}$$

$K_m$ and $K_M$ are positive real numbers, $p$, $q$ and $r$ are nonzero real numbers, $In \geq Gl \geq 0, A \geq 0, B \geq 0$

the color data in the XYZ format at the output device side is acquired according to the following formulae:

$h = [\dfrac{H}{120^\circ}]$, $[\bullet]$ is a round symbol with respect to $\bullet$, $H \in [0^\circ, 360^\circ), h = 0,1,2$

if $h = 0$,

$$X = \dfrac{\left(\dfrac{InSa-B}{K_M}\right)^{\frac{q}{p}}\sin(120^\circ-H)}{\left[\sin^p(120^\circ-H)+\sin^p(H)\right]^{\frac{1}{p}}} + \left[\dfrac{In(1-Sa)-A}{K_m}\right]^{\frac{1}{r}}, Y = \dfrac{\left(\dfrac{InSa-B}{K_M}\right)^{\frac{q}{p}}\sin(H)}{\left[\sin^p(H)+\sin^p(120^\circ-H)\right]^{\frac{1}{p}}} + \left[\dfrac{In(1-Sa)-A}{K_m}\right]^{\frac{1}{r}}, Z = \left[\dfrac{In(1-Sa)-A}{K_m}\right]^{\frac{1}{r}}$$

if $h = 1$,

$$X = \left[\dfrac{In(1-Sa)-A}{K_m}\right]^{\frac{1}{r}}, Y = \dfrac{\left(\dfrac{InSa-B}{K_M}\right)^{\frac{q}{p}}\sin(240^\circ-H)}{\left[\sin^p(H-120^\circ)+\sin^p(240^\circ-H)\right]^{\frac{1}{p}}} + \left[\dfrac{In(1-Sa)-A}{K_m}\right]^{\frac{1}{r}}, Z = \dfrac{\left(\dfrac{InSa-B}{K_M}\right)^{\frac{q}{p}}\sin(H-120^\circ)}{\left[\sin^p(H-120^\circ)+\sin^p(240^\circ-H)\right]^{\frac{1}{p}}} + \left[\dfrac{In(1-Sa)-A}{K_m}\right]^{\frac{1}{r}}$$

if $h = 2$,

$$X = \dfrac{\left(\dfrac{InSa-B}{K_M}\right)^{\frac{q}{p}}\sin(H-240^\circ)}{\left[\sin^p(-H)+\sin^p(H-240^\circ)\right]^{\frac{1}{p}}} + \left[\dfrac{In(1-Sa)-A}{K_m}\right]^{\frac{1}{r}}, Y = \left[\dfrac{In(1-Sa)-A}{K_m}\right]^{\frac{1}{r}}, Z = \dfrac{\left(\dfrac{InSa-B}{K_M}\right)^{\frac{q}{p}}\sin(-H)}{\left[\sin^p(H-240^\circ)+\sin^p(-H)\right]^{\frac{1}{p}}} + \left[\dfrac{In(1-Sa)-A}{K_m}\right]^{\frac{1}{r}}$$

The parameters, e.g., $K_M$, $K_m$, p, q, r, m, A, B, etc., in the respective converting manners from the data in the HGICI format to the data in the CIEXYZ format should be selected by referring to the converting manners from the data in the CIEXYZ format to the data in the HGICI format within the defined range of each parameter, and the parameters are preferably selected as follows: $K_M = K_m = 1$, p=q=r=m-1, and A=B=0.

In the step 324, the color data in the XYZ format in the CIEXYZ color appearance color space at the output device side is converted into color data in an image format in a color space of the output device. Specifically, the hue deviation angles $\alpha_a$, $\beta_a$, $\gamma_a$ of $R_a'$, $G_a'$ and $B_a'$ relative to $\vec{i}$, $\vec{j}$ and $\vec{k}$ respectively are acquired using spectrum characteristic

data of R$_a$', G$_a$' and B$_a$', and color appearance color data $X_a$, $Y_a$, $Z_a$ is converted into color appearance color data R$_a$', G$_a$', B$_a$' according to the following formulae 71-78:

$$\begin{bmatrix} R_a^{'} \\ G_a^{'} \\ B_a^{'} \end{bmatrix} = \begin{bmatrix} \dfrac{\sin(120^0 - \alpha_a)}{\sin(60^0)} & 0 & \dfrac{\sin(\gamma_a)}{\sin(60^0)} \\ \dfrac{\sin(\alpha_a)}{\sin(60^0)} & \dfrac{\sin(120^0 - \beta_a)}{\sin(60^0)} & 0 \\ 0 & \dfrac{\sin(\beta_a)}{\sin(60^0)} & \dfrac{\sin(120^0 - \gamma_a)}{\sin(60^0)} \end{bmatrix}^{-1} \times \begin{bmatrix} X_a \\ Y_a \\ Z_a \end{bmatrix}$$

(Formula 71)

in Formula 71, $\alpha_a$>0, $\beta_a$>0, $\gamma_a$>0;

$$\begin{bmatrix} R_a^{'} \\ G_a^{'} \\ B_a^{'} \end{bmatrix} = \begin{bmatrix} \dfrac{\sin(120^0 - \alpha_a)}{\sin(60^0)} & 0 & 0 \\ \dfrac{\sin(\alpha_a)}{\sin(60^0)} & \dfrac{\sin(120^0 - \beta_a)}{\sin(60^0)} & \dfrac{\sin(-\gamma_a)}{\sin(60^0)} \\ 0 & \dfrac{\sin(\beta_a)}{\sin(60^0)} & \dfrac{\sin(120^0 + \gamma_a)}{\sin(60^0)} \end{bmatrix}^{-1} \times \begin{bmatrix} X_a \\ Y_a \\ Z_a \end{bmatrix}$$

(Formula 72)

in Formula 72, $\alpha_a$>0, $\beta_a$>0, $\gamma_a$<0;

$$\begin{bmatrix} R_a^{'} \\ G_a^{'} \\ B_a^{'} \end{bmatrix} = \begin{bmatrix} \dfrac{\sin(120^0 - \alpha_a)}{\sin(60^0)} & \dfrac{\sin(-\beta_a)}{\sin(60^0)} & \dfrac{\sin(\gamma_a)}{\sin(60^0)} \\ \dfrac{\sin(\alpha_a)}{\sin(60^0)} & \dfrac{\sin(120^0 + \beta_a)}{\sin(60^0)} & 0 \\ 0 & 0 & \dfrac{\sin(120^0 - \gamma_a)}{\sin(60^0)} \end{bmatrix}^{-1} \times \begin{bmatrix} X_a \\ Y_a \\ Z_a \end{bmatrix}$$

(Formula 73)

in Formula 73, $\alpha_a$>0, $\beta_a$>0, $\gamma_a$>0;

$$\begin{bmatrix} R_a^{'} \\ G_a^{'} \\ B_a^{'} \end{bmatrix} = \begin{bmatrix} \dfrac{\sin(120^0 - \alpha_a)}{\sin(60^0)} & \dfrac{\sin(-\beta_a)}{\sin(60^0)} & 0 \\ \dfrac{\sin(\alpha_a)}{\sin(60^0)} & \dfrac{\sin(120^0 + \beta_a)}{\sin(60^0)} & \dfrac{\sin(-\gamma_a)}{\sin(60^0)} \\ 0 & 0 & \dfrac{\sin(120^0 + \gamma_a)}{\sin(60^0)} \end{bmatrix}^{-1} \times \begin{bmatrix} X_a \\ Y_a \\ Z_a \end{bmatrix}$$

(Formula 74)

in Formula 74, $\alpha_a$>0, $\beta_a$>0, $\gamma_a$<0;

$$\begin{bmatrix} R_a^{'} \\ G_a^{'} \\ B_a^{'} \end{bmatrix} = \begin{bmatrix} \dfrac{\sin(120^{0}+\alpha_a)}{\sin(60^{o})} & 0 & \dfrac{\sin(\gamma_a)}{\sin(60^{o})} \\ 0 & \dfrac{\sin(120^{0}-\beta_a)}{\sin(60^{o})} & 0 \\ \dfrac{\sin(-\alpha_a)}{\sin(60^{o})} & \dfrac{\sin(\beta_a)}{\sin(60^{o})} & \dfrac{\sin(120^{0}-\gamma_a)}{\sin(60^{o})} \end{bmatrix}^{-1} \times \begin{bmatrix} X_a \\ Y_a \\ Z_a \end{bmatrix}$$

(Formula 75)

in Formula 75, $\alpha_a$>0, $\beta_a$>0, $\gamma_a$>0;

$$\begin{bmatrix} R_a^{'} \\ G_a^{'} \\ B_a^{'} \end{bmatrix} = \begin{bmatrix} \dfrac{\sin(120^{0}+\alpha_a)}{\sin(60^{o})} & 0 & 0 \\ 0 & \dfrac{\sin(120^{0}-\beta_a)}{\sin(60^{o})} & \dfrac{\sin(-\gamma_a)}{\sin(60^{o})} \\ \dfrac{\sin(-\alpha_a)}{\sin(60^{o})} & \dfrac{\sin(\beta_a)}{\sin(60^{o})} & \dfrac{\sin(120^{0}+\gamma_a)}{\sin(60^{o})} \end{bmatrix}^{-1} \times \begin{bmatrix} X_a \\ Y_a \\ Z_a \end{bmatrix}$$

(Formula 76)

in Formula 76, $\alpha_a$>0, $\beta_a$>0, $\gamma_a$<0;

$$\begin{bmatrix} R_a^{'} \\ G_a^{'} \\ B_a^{'} \end{bmatrix} = \begin{bmatrix} \dfrac{\sin(120^{0}+\alpha_a)}{\sin(60^{o})} & \dfrac{\sin(-\beta_a)}{\sin(60^{o})} & \dfrac{\sin(\gamma_a)}{\sin(60^{o})} \\ 0 & \dfrac{\sin(120^{0}+\beta_a)}{\sin(60^{o})} & 0 \\ \dfrac{\sin(-\alpha_a)}{\sin(60^{o})} & 0 & \dfrac{\sin(120^{0}-\gamma_a)}{\sin(60^{o})} \end{bmatrix}^{-1} \times \begin{bmatrix} X_a \\ Y_a \\ Z_a \end{bmatrix}$$

(Formula 77)

in Formula 77, $\alpha_a$>0, $\beta_a$>0, $\gamma_a$>0;

$$\begin{bmatrix} R_a^{'} \\ G_a^{'} \\ B_a^{'} \end{bmatrix} = \begin{bmatrix} \dfrac{\sin(120^{0}+\alpha_a)}{\sin(60^{o})} & \dfrac{\sin(-\beta_a)}{\sin(60^{o})} & 0 \\ 0 & \dfrac{\sin(120^{0}+\beta_a)}{\sin(60^{o})} & \dfrac{\sin(-\gamma_a)}{\sin(60^{o})} \\ \dfrac{\sin(-\alpha_a)}{\sin(60^{o})} & 0 & \dfrac{\sin(120^{0}+\gamma_a)}{\sin(60^{o})} \end{bmatrix}^{-1} \times \begin{bmatrix} X_a \\ Y_a \\ Z_a \end{bmatrix}$$

(Formula 78)

in Formula 78, $\alpha_a$>0, $\beta_a$>0, $\gamma_a$<0;

wherein in Formulae 71-78, $\alpha_a$ is a hue deviation angle between $\vec{R_a}$ and $\vec{i}$; $\beta_a$ is a hue deviation angle between $\vec{G_a}$ and $\vec{j}$; $\gamma_a$ is a hue deviation angle between $\vec{B_a}$ and $\vec{k}$, the values of R$_a$', G$_a$' and B$_a$' are color appearance color data in combination with an observation condition obtained after the conversion; the values of $X_a$, $Y_a$ and $Z_a$ in the formulae

71-78 are the color data in the XYZ format in the CIEXYZ color appearance color space; $\vec{R_a'}$ , $\vec{G_a'}$ and $\vec{B_a'}$ are the color appearance color data in combination with the observation condition to represent chromatic vectors within the chromatic plane.

The color data of the cone response $R_a'$, $G_a'$, $B_a$ is converted into color data in an XYZ format at the output device side according to a technical standard CIECAM02.

In the embodiment shown in Fig. 3, the management method of obtaining color data in an HSaln format in an HSaln color appearance color space from color data in an XYZ format at the input device side and the management method of obtaining color data in an XYZ format at the output device side from color data in an HSaln format in an HSaln color appearance color space at the output device side can be independent of each other.

Further, the embodiment shown in Fig. 3 can include the step 3241. In the step 3241, the color data in the XYZ format at the output device side is converted into color data of the output device. The conversion of the color data in the XYZ format at the output device side into color data of the output device has been described in detail above, and no unnecessary details are further given herein.

After the chromatic color data of the output device is obtained, it will be converted into a chromatic image of the output device to be sent to the output device for an image output. The output device, after receiving the chromatic image in the output format that can be identified and processed thereby, performs an image output, e.g., displaying, printing, projecting and the like.

Since the output device has undergone the corresponding processing of removing the color attribute of the output device itself before receiving the chromatic image of the output device and outputting the received chromatic image, when the same chromatic image based on the HSaln color space model is output through the output devices of different color attributes, almost consistent images will be output. For example, when the printing is performed through the printers of different color attributes, almost consistent chromatic images will be printed to hereby achieve the object "what you see is what you get".

Fig. 4 shows a flow chart of the method of managing color data based on a CIEXYZ color space of another embodiment of the invention.

As shown in Fig. 4, firstly, color data of a chromatic scene is acquired from the input device. The input device can be a camera, a pickup camera, a video camera and the like, or the input device can be also a scanner and the like. A chromatic image stored in a digital format is acquired from the input device. Generally, the color data of the acquired chromatic image is stored in a manner of a pixel dot matrix.

The color data acquired from the input device can be in a three-channel format UVW or in a multichannel format.

In the step 410, the color data acquired from the input device is converted into color data based on a CIEXYZ color space at the input device side. The specific process of converting the color data in the UVW format acquired from the input device into color data based on a CIEXYZ color space at the input device side in the step 410 is the same as that in the step 2201 in the embodiment shown in Fig. 2, and no unnecessary details are further given herein.

In the step 422, the image data in the XYZ format at the input device side is mapped to color data in an XYZ format at the output device side. The mapping of the image data in the XYZ format at the input device side to color data in an XYZ format at the output device side belongs to the prior art, and no unnecessary details are further given herein.

In the step 412, the acquired color data in the XYZ format at the output device side is converted into color data in a color space of the device. The conversion of the acquired color data in the XYZ format at the output device side into color data in a color space of the device in the step 412 is the same as that in the step 2241 in the embodiment shown in Fig. 2, and no unnecessary details are further given herein.

In the embodiment shown in Fig. 4, the management method of obtaining color data in an XYZ format at the input side from color data of the input device and the management method of obtaining color data of the output device from color data in an XYZ format at the output side can be independent of each other.

It can be seen from the management methods of the color data provided by the above respective embodiments that in the process of managing the color data between a color space dependent of the device and a color space independent of the device in the invention, the impacts of the input device on the chromatic image are removed according to color characteristic data of the device, and the calculations for the conversion are all matrix operations that are easily achieved, which greatly simplifies the calculating process for the conversion, improves the conversion accuracy and efficiency, and accelerates the conversion speed. Especially, the conversion formulae for the conversion into color data in an HSaln format provided in the embodiments of the invention are theoretical formulae and will not have accumulative errors in the multiple calculations, so the color data obtained by these calculations with the conversion formulae will provide higher accuracies of the color data than the conversion formulae in the prior art.

It can be further seen from the management methods of the color data provided by the above respective embodiments that since the method of performing the color gamut mapping in the HSaln color space is performed under the Iso-hue plane, the three-dimensional conversion is simplified as the one-dimensional repeated conversion, which improves the conversion efficiency and improves the conversion accuracy.

The chromatic image independent of the impacts of the color attribute of the input device itself can be acquired by the above method. That is to say, by the above method, the acquired pictures of the same scene taken by cameras of different brands will have a comparatively good consistency.

The formulae, especially the formulae containing trigonometric functions, involved in the above respective embodiments can further derive formulae in other forms, the essential meanings of which do not change, by means of mathematical operations, and since the derived formulae are essentially the same as those in the invention, they shall be deemed as ones within the scope of protection of the invention.

The above contents are only preferred implementation modes of the invention. It should be noted that those skilled in the art can further make some improvements and decorations in the case of not breaking away from the technical principle of the invention, and these improvements and decorations should also be deemed as ones within the scope of protection of the invention.

**Claims**

1. A method of managing color data based on color data in an HSaIn format in an HSaIn color space, comprising:

   acquiring color data in an XYZ format at an input device side;
   converting the acquired color data in the XYZ format at the input device side into color data in an HSaIn format;
   wherein the HSaIn color space is a color space based on a CIEXYZ Cartesian color space, of a color appearance attribute, and described by a cylindrical coordinate system, and is composed of a chromatic plane and a gray axis passing through the origin of the chromatic plane and perpendicular to the chromatic plane;
   wherein the chromatic plane is a plane of the CIEXYZ Cartesian color space X+Y+Z=K, where K is a real constant; an XYZ axis of the CIEXYZ Cartesian color space performs a projection along a direction of a straight line X=Y=Z on a plane X+Y+Z=K to obtain three projection axes that are 120° with respect to one another within the chromatic plane, and unit vectors in the directions of

   the projection axes are $\vec{i}$, $\vec{j}$ and $\vec{k}$;
   wherein the gray axis is a number axis composed of the straight line X=Y=Z of the CIEXYZ Cartesian color space, a numerical value on the number axis represents a gray GI value in the HSaIn color space, a length of a chromatic vector parallel to the chromatic plane represents a chromatic CI value in the HSaIn color space, and a polar angle of the chromatic vector represents a hue angle H in the HSaIn color space;
   wherein the color data in the HSaIn format is in a format of the color data in the HSaIn color space, and comprises a hue H, a saturation Sa, and an intensity In in the HSaIn color space.

2. The method according to claim 1, wherein the converting the acquired color data in the XYZ format at the input device side into color data in an HSaIn format comprises:

   acquiring the hue H in the color data in the HSaIn format at the input device side according to the following formula:

$$H = \begin{cases} \arccos\left(\dfrac{2X-Y-Z}{2\sqrt{(X-Y)^2+(Y-Z)^2+(X-Y)(Y-Z)}}\right), & Y \geq Z \\ 2\pi - \arccos\left(\dfrac{2X-Y-Z}{2\sqrt{(X-Y)^2+(Y-Z)^2+(X-Y)(Y-Z)}}\right), & Y < Z \\ \text{undefined}, & X=Y=Z \end{cases} \qquad \text{(Formula 1)}$$

   wherein X, Y and Z are color data in the XYZ format, i.e., tristimulus values of the color data in the CIEXYZ Cartesian color space, and respectively represent numerical values on the X, Y and Z coordinate axes in the CIEXYZ Cartesian color space.

3. The method according to claim 2, wherein the converting the acquired color data in the XYZ format at the input device side into color data in an HSaIn format further comprises:

acquiring the saturation Sa and the intensity In in the color data in the HSaIn format at the input device side according to the following formulae and based on the color data in the XYZ format:

$$Gl = K_m \left[ Min\left(X,Y,Z\right)\right]^p + A, \quad In = K_M \left[ Max\left(X,Y,Z\right)\right]^q + B, \quad Cl = In - Gl, \quad Sa = \frac{Cl}{In}$$

$K_m$ and $K_M$ are positive real numbers, $In \geq Gl \geq 0, A \geq 0, B \geq 0, p$ and $q$ are nonzero real numbers

or

$$Gl = K_m \left[ Min\left(X,Y,Z\right)\right]^p + A, \quad In = \frac{1}{3} K_M \left(X+Y+Z\right)^q + B, \quad Cl = In - Gl, \quad Sa = \frac{Cl}{In}$$

$K_m$ and $K_M$ are positive real numbers, $K_M > K_m, In \geq Gl \geq 0, A \geq 0, B \geq 0, p$ and $q$ are nonzero real numbers

or

$$Gl = K_m Min(X,Y,Z)^p + A, \quad In = \frac{1}{2} K_M \left[ Max(X,Y,Z) + Min(X,Y,Z)\right]^q + B, \quad Cl = In - Gl, \quad Sa = \frac{Cl}{In}$$

$K_m$ and $K_M$ are positive real numbers, $K_M > K_m, In \geq Gl \geq 0, A \geq 0, B \geq 0, p$ and $q$ are nonzero real numbers

or

$$Gl = K_m Min(X,Y,Z)^p + A, \quad Cl = K_M \left| X\vec{i} + Y\vec{j} + Z\vec{k}\right|^m + B, \quad In = Gl + Cl, \quad Sa = \frac{Cl}{In}$$

$K_m$ and $K_M$ are positive real numbers, $p$ and $m$ are nonzero real numbers, $In \geq Gl \geq 0, A \geq 0, B \geq 0$

or

$$Gl = K_m Min(X,Y,Z)^r + A, \quad In = K_M \left[ X^p + Y^p + Z^p \right]^{\frac{1}{q}} + B, \quad Cl = In - Gl, \quad Sa = \frac{Cl}{In}$$

$K_m$ and $K_M$ are positive real numbers, $K_M > K_m > 0, p, q$ and $r$ are nonzero real numbers, $In \geq Gl \geq 0, A \geq 0, B \geq 0$

or

$$Gl = K_m Min(X,Y,Z)^r + A, \quad Cl = K_M \left[ (X - Gl)^p + (Y - Gl)^p + (Z - Gl)^p \right]^{\frac{1}{q}} + B, \quad In = Cl + Gl, \quad Sa = \frac{Cl}{In}$$

$K_m$ and $K_M$ are positive real numbers, $K_M > K_m > 0, p, q$ and $r$ are nonzero real numbers, $In \geq Gl \geq 0, A \geq 0, B \geq 0$

**4.** The method according to claim 3, the step of acquiring color data in an XYZ format at an input device side comprises:

acquiring color data of a chromatic image of a chromatic scene from the input device;
converting the acquired color data into color data in an XYZ format at the input device side according to color characteristic data of the input device.

**5.** The method according to claim 4, wherein the color data of the chromatic image of the chromatic scene acquired from the input device is in a format of a color space dependent of multichannel device;
the converting the acquired color data into color data in an XYZ format at the input device side according to color characteristic data of the input device comprises:

obtaining color data of respective channels to represent chromatic vectors within the chromatic plane according to color characteristic data of the input device, i.e., characterized hue deviation angles of the respective channels, in combination with intensity values of the color data of the respective channels; wherein the characterized hue deviation angles are respectively hue deviation angles of characterized hue angles of the respective channels of the device relative to adjacent polar angles $\vec{i}$, $\vec{j}$, $\vec{k}$ within the chromatic plane;

decomposing the chromatic vectors of the respective channels of the device within the chromatic plane into ones in the directions $\vec{i}$, $\vec{j}$, $\vec{k}$ according to a vector decomposition rule and performing a linear addition in the directions $\vec{i}$, $\vec{j}$, $\vec{k}$ respectively to thereby obtain data to serve as the color data in the XYZ format.

6. The method according to claim 4, wherein the color data of the chromatic image of the chromatic scene acquired from the input device is in a UVW format; and
the converting the acquired color data into color data in an XYZ format at the input device side according to color characteristic data of the input device comprises:

converting the color data in the UVW format acquired from the input device into color data in an XYZ format at the input device side according to color characteristic data $\alpha_1$, $\beta_1$, $\gamma_1$ of the input device and based on the following formulae 3-10, wherein the UVW format is a format represented by intensity numerical values after characterization of light intensity values perceived by a color sensor of the device at three different spectral sections:

$$\begin{bmatrix} X \\ Y \\ Z \end{bmatrix} = \begin{bmatrix} \dfrac{\sin(120^0 - \alpha_1)}{\sin(60^0)} & 0 & \dfrac{\sin(\gamma_1)}{\sin(60^0)} \\ \dfrac{\sin(\alpha_1)}{\sin(60^0)} & \dfrac{\sin(120^0 - \beta_1)}{\sin(60^0)} & 0 \\ 0 & \dfrac{\sin(\beta_1)}{\sin(60^0)} & \dfrac{\sin(120^0 - \gamma_1)}{\sin(60^0)} \end{bmatrix} \times \begin{bmatrix} U_1 \\ V_1 \\ W_1 \end{bmatrix} \qquad \text{(Formula 3)}$$

in Formula 3, $\alpha_1$>0, $\beta_1$>0, $\gamma_1$>0;

$$\begin{bmatrix} X \\ Y \\ Z \end{bmatrix} = \begin{bmatrix} \dfrac{\sin(120^0 - \alpha_1)}{\sin(60^0)} & 0 & 0 \\ \dfrac{\sin(\alpha_1)}{\sin(60^0)} & \dfrac{\sin(120^0 - \beta_1)}{\sin(60^0)} & \dfrac{\sin(-\gamma_1)}{\sin(60^0)} \\ 0 & \dfrac{\sin(\beta_1)}{\sin(60^0)} & \dfrac{\sin(120^0 + \gamma_1)}{\sin(60^0)} \end{bmatrix} \times \begin{bmatrix} U_1 \\ V_1 \\ W_1 \end{bmatrix} \qquad \text{(Formula 4)}$$

in Formula 4, $\alpha_1$>0, $\beta_1$>0, $\gamma_1$<0;

$$\begin{bmatrix} X \\ Y \\ Z \end{bmatrix} = \begin{bmatrix} \dfrac{\sin(120^0 - \alpha_1)}{\sin(60^0)} & \dfrac{\sin(-\beta_1)}{\sin(60^0)} & \dfrac{\sin(\gamma_1)}{\sin(60^0)} \\ \dfrac{\sin(\alpha_1)}{\sin(60^0)} & \dfrac{\sin(120^0 + \beta_1)}{\sin(60^0)} & 0 \\ 0 & 0 & \dfrac{\sin(120^0 - \gamma_1)}{\sin(60^0)} \end{bmatrix} \times \begin{bmatrix} U_1 \\ V_1 \\ W_1 \end{bmatrix} \qquad \text{(Formula 5)}$$

in Formula 5, $\alpha_1 > 0$, $\beta_1 > 0$, $\gamma_1 > 0$;

$$\begin{bmatrix} X \\ Y \\ Z \end{bmatrix} = \begin{bmatrix} \dfrac{\sin(120^0 - \alpha_1)}{\sin(60^0)} & \dfrac{\sin(-\beta_1)}{\sin(60^0)} & 0 \\ \dfrac{\sin(\alpha_1)}{\sin(60^0)} & \dfrac{\sin(120^0 + \beta_1)}{\sin(60^0)} & \dfrac{\sin(-\gamma_1)}{\sin(60^0)} \\ 0 & 0 & \dfrac{\sin(120^0 + \gamma_1)}{\sin(60^0)} \end{bmatrix} \times \begin{bmatrix} U_1 \\ V_1 \\ W_1 \end{bmatrix}$$

(Formula 6)

in Formula 6, $\alpha_1 > 0$, $\beta_1 > 0$, $\gamma_1 < 0$;

$$\begin{bmatrix} X \\ Y \\ Z \end{bmatrix} = \begin{bmatrix} \dfrac{\sin(120^0 + \alpha_1)}{\sin(60^0)} & 0 & \dfrac{\sin(\gamma_1)}{\sin(60^0)} \\ 0 & \dfrac{\sin(120^0 - \beta_1)}{\sin(60^0)} & 0 \\ \dfrac{\sin(-\alpha_1)}{\sin(60^0)} & \dfrac{\sin(\beta_1)}{\sin(60^0)} & \dfrac{\sin(120^0 - \gamma_1)}{\sin(60^0)} \end{bmatrix} \times \begin{bmatrix} U_1 \\ V_1 \\ W_1 \end{bmatrix}$$

(Formula 7)

in Formula 7, $\alpha_1 > 0$, $\beta_1 > 0$, $\gamma_1 > 0$;

$$\begin{bmatrix} X \\ Y \\ Z \end{bmatrix} = \begin{bmatrix} \dfrac{\sin(120^0 + \alpha_1)}{\sin(60^0)} & 0 & 0 \\ 0 & \dfrac{\sin(120^0 - \beta_1)}{\sin(60^0)} & \dfrac{\sin(-\gamma_1)}{\sin(60^0)} \\ \dfrac{\sin(-\alpha_1)}{\sin(60^0)} & \dfrac{\sin(\beta_1)}{\sin(60^0)} & \dfrac{\sin(120^0 + \gamma_1)}{\sin(60^0)} \end{bmatrix} \times \begin{bmatrix} U_1 \\ V_1 \\ W_1 \end{bmatrix}$$

(Formula 8)

in Formula 8, $\alpha_1 > 0$, $\beta_1 > 0$, $\gamma_1 < 0$;

$$\begin{bmatrix} X \\ Y \\ Z \end{bmatrix} = \begin{bmatrix} \dfrac{\sin(120^0 + \alpha_1)}{\sin(60^0)} & \dfrac{\sin(-\beta_1)}{\sin(60^0)} & \dfrac{\sin(\gamma_1)}{\sin(60^0)} \\ 0 & \dfrac{\sin(120^0 + \beta_1)}{\sin(60^0)} & 0 \\ \dfrac{\sin(-\alpha_1)}{\sin(60^0)} & 0 & \dfrac{\sin(120^0 - \gamma_1)}{\sin(60^0)} \end{bmatrix} \times \begin{bmatrix} U_1 \\ V_1 \\ W_1 \end{bmatrix}$$

(Formula 9)

in Formula 9, $\alpha_1 > 0$, $\beta_1 > 0$, $\gamma_1 > 0$;

$$\begin{bmatrix} X \\ Y \\ Z \end{bmatrix} = \begin{bmatrix} \dfrac{\sin(120^0 + \alpha_1)}{\sin(60^0)} & \dfrac{\sin(-\beta_1)}{\sin(60^0)} & 0 \\ 0 & \dfrac{\sin(120^0 + \beta_1)}{\sin(60^0)} & \dfrac{\sin(-\gamma_1)}{\sin(60^0)} \\ \dfrac{\sin(-\alpha_1)}{\sin(60^0)} & 0 & \dfrac{\sin(120^0 + \gamma_1)}{\sin(60^0)} \end{bmatrix} \times \begin{bmatrix} U_1 \\ V_1 \\ W_1 \end{bmatrix} \qquad \text{(Formula 10)}$$

in the formula 10, $\alpha_1 > 0$, $\beta_1 > 0$, $\gamma_1 < 0$;

wherein the values of $U_1$, $V_1$ and $W_1$ in the above formulae 3-10 are the characterized color data in the UVW format of the input device; $\alpha_1$ is a hue deviation angle between $\overline{U_1}$ and $\vec{i}$; $\beta_1$ is a hue deviation angle between $\vec{V_1}$ and $\vec{J}$; $\gamma_1$ is a hue deviation angle between $\overline{W_1}$ and $\overline{k}$; $\overline{U_1}$, $\vec{V_1}$ and $\overline{W_1}$ are characterized UVW channel color data of the input device to represent chromatic vectors within the chromatic plane.

7. The method according to claim 3, further comprising a step of:

mapping the color data in the HSaIn format at the input device side according to a mapping relationship between a color gamut of the input device and a color gamut of the output device to obtain the color data in the HSaIn format at the output device side, which comprises:

determining an intensity mapping relationship $In_{LUT}$ and a saturation mapping relationship $Sa_{LUT}$ under an iso-hue plane according to the gamuts of the input device and the output device, a color distribution range of an image and a color representation intention;

performing a color data mapping of the image from the input device side to the output device side according to the intensity mapping relationship $In_{LUT}$ and the saturation mapping relationship $Sa_{LUT}$ to obtain the color data in the HSaIn format at the output device side.

8. The method according to claim 7, further comprising: converting the color data in the HSaIn format at the output device side into color data in an XYZ format, which comprises:

if the saturation Sa and the intensity In in the color data in the HSaIn format at the input device side are acquired according to the formulae below,

$$Gl = K_m \left[ Min(X, Y, Z) \right]^p + A, \quad In = K_M \left[ Max(X, Y, Z) \right]^q + B, \quad Cl = In - Gl, \quad Sa = \frac{Cl}{In}$$

$K_m$ and $K_M$ are positive real numbers, $In \geq Gl \geq 0, A \geq 0, B \geq 0, p$ and $q$ are nonzero real numbers acquiring the color data in the XYZ format at the output device side according to the following formulae:

$$\begin{cases}
H' = \dfrac{H}{60^\circ}, h = [H'], [\bullet] \text{ is a round symbol with respect to } \bullet, \ H \in [0^\circ, 360^\circ), h = 0,1,2,3,4,5 \\[2mm]
X = \left(\dfrac{In-B}{K_M}\right)^{\frac{1}{q}}, Y = \left(\dfrac{In-B}{K_M}\right)^{\frac{1}{q}} \dfrac{\sin H}{\sin(120^\circ - H)} + \left(\dfrac{In(1-Sa)-A}{K_m}\right)^{\frac{1}{p}} \dfrac{\sin(120^\circ - H) - \sin H}{\sin(120^\circ - H)}, Z = \left(\dfrac{In(1-Sa)-A}{K_m}\right)^{\frac{1}{p}}, \quad h = 0 \\[2mm]
X = \left(\dfrac{In-B}{K_M}\right)^{\frac{1}{q}} \dfrac{\sin(120^\circ - H)}{\sin H} + \left(\dfrac{In(1-Sa)-A}{K_m}\right)^{\frac{1}{p}} \dfrac{\sin H - \sin(120^\circ - H)}{\sin H}, Y = \left(\dfrac{In-B}{K_M}\right)^{\frac{1}{q}}, Z = \left(\dfrac{In(1-Sa)-A}{K_m}\right)^{\frac{1}{p}}, \quad h = 1 \\[2mm]
X = \left(\dfrac{In(1-Sa)-A}{K_m}\right)^{\frac{1}{p}}, Y = \left(\dfrac{In-B}{K_M}\right)^{\frac{1}{q}}, Z = \left(\dfrac{In-B}{K_M}\right)^{\frac{1}{q}} \dfrac{\sin(H-120^\circ)}{\sin(240^\circ - H)} + \left(\dfrac{In(1-Sa)-A}{K_m}\right)^{\frac{1}{p}} \dfrac{\sin(240^\circ - H) - \sin(H-120^\circ)}{\sin(240^\circ - H)}, \quad h = 2 \\[2mm]
X = \left(\dfrac{In(1-Sa)-A}{K_m}\right)^{\frac{1}{p}}, Y = \left(\dfrac{In-B}{K_M}\right)^{\frac{1}{q}} \dfrac{\sin(240^\circ - H)}{\sin(H-120^\circ)} + \left(\dfrac{In(1-Sa)-A}{K_m}\right)^{\frac{1}{p}} \dfrac{\sin(H-120^\circ) - \sin(240^\circ - H)}{\sin(H-120^\circ)}, Z = \left(\dfrac{In-B}{K_M}\right)^{\frac{1}{q}}, \quad h = 3 \\[2mm]
X = \left(\dfrac{In-B}{K_M}\right)^{\frac{1}{q}} \dfrac{\sin(H-240^\circ)}{\sin(-H)} + \left(\dfrac{In(1-Sa)-A}{K_m}\right)^{\frac{1}{p}} \dfrac{\sin(-H) - \sin(H-240^\circ)}{\sin(-H)}, Y = \left(\dfrac{In(1-Sa)-A}{K_m}\right)^{\frac{1}{p}}, Z = \left(\dfrac{In-B}{K_M}\right)^{\frac{1}{q}}, \quad h = 4 \\[2mm]
X = \left(\dfrac{In-B}{K_M}\right)^{\frac{1}{q}}, Y = \left(\dfrac{In(1-Sa)-A}{K_m}\right)^{\frac{1}{p}}, Z = \left(\dfrac{In-B}{K_M}\right)^{\frac{1}{q}} \dfrac{\sin(-H)}{\sin(H-240^\circ)} + \left(\dfrac{In(1-Sa)-A}{K_m}\right)^{\frac{1}{p}} \dfrac{\sin(H-240^\circ) - \sin(-H)}{\sin(H-240^\circ)}, \quad h = 5
\end{cases}$$

or if the saturation Sa and the intensity In in the color data in the HSaIn format at the input device side are acquired according to the formulae below,

$$Gl = K_m \left[ Min(X,Y,Z) \right]^p + A, \quad In = \frac{1}{3} K_M (X+Y+Z)^q + B, \quad Cl = In - Gl, \quad Sa = \frac{Cl}{In}$$

$K_m$ and $K_M$ are positive real numbers, $K_M > K_m$, $In \geq Gl \geq 0$, $A \geq 0$, $B \geq 0$, $p$ and $q$ are nonzero real numbers acquiring the color data in the XYZ format at the output device side according to the following formulae:

when $0° \leq H < 120°$

$$X = \left[\frac{3In - B}{K_M}\right]^{\frac{1}{q}} \frac{\sin(120° - H)}{\sin(H) + \sin(120° - H)} - \left[\frac{In(1 - Sa) - A}{K_m}\right]^{\frac{1}{p}} \frac{2\sin(120° - H) - \sin(H)}{\sin(H) + \sin(120° - H)}$$

$$Y = \left[\frac{3In - B}{K_M}\right]^{\frac{1}{q}} \frac{\sin(H)}{\sin(H) + \sin(120° - H)} - \left[\frac{In(1 - Sa) - A}{K_m}\right]^{\frac{1}{p}} \frac{2\sin(H) - \sin(120° - H)}{\sin(H) + \sin(120° - H)}$$

$$Z = \left[\frac{In(1 - Sa) - A}{K_m}\right]^{\frac{1}{p}}$$

when $120° \leq H < 240°$

$$X = \left[\frac{In(1 - Sa) - A}{K_m}\right]^{\frac{1}{p}},$$

$$Y = \left[\frac{3In - B}{K_M}\right]^{\frac{1}{q}} \frac{\sin(240° - H)}{\sin(H - 120°) + \sin(240° - H)} - \left[\frac{In(1 - Sa) - A}{K_m}\right]^{\frac{1}{p}} \frac{2\sin(240° - H) - \sin(H - 120°)}{\sin(H - 120°) + \sin(240° - H)}$$

$$Z = \left[\frac{3In - B}{K_M}\right]^{\frac{1}{q}} \frac{\sin(H - 120°)}{\sin(H - 120°) + \sin(240° - H)} - \left[\frac{In(1 - Sa) - A}{K_m}\right]^{\frac{1}{p}} \frac{2\sin(H - 120°) - \sin(240° - H)}{\sin(H - 120°) + \sin(240° - H)}$$

when $240° \leq H < 360°$

$$X = \left[\frac{3In - B}{K_M}\right]^{\frac{1}{q}} \frac{\sin(H - 240°)}{\sin(H - 240°) + \sin(-H)} - \left[\frac{In(1 - Sa) - A}{K_m}\right]^{\frac{1}{p}} \frac{2\sin(H - 240°) - \sin(-H)}{\sin(H - 240°) + \sin(-H)}$$

$$Y = \left[\frac{In(1 - Sa) - A}{K_m}\right]^{\frac{1}{p}}$$

$$Z = \left[\frac{3In - B}{K_M}\right]^{\frac{1}{q}} \frac{\sin(-H)}{\sin(H - 240°) + \sin(-H)} - \left[\frac{In(1 - Sa) - A}{K_m}\right]^{\frac{1}{p}} \frac{2\sin(-H) - \sin(H - 240°)}{\sin(H - 240°) + \sin(-H)}$$

or if the saturation Sa and the intensity In in the color data in the HSaIn format at the input device side are acquired according to the formulae below,

$$Gl = K_m Min(X, Y, Z)^p + A, \quad In = \frac{1}{2} K_M \left[Max(X, Y, Z) + Min(X, Y, Z)\right]^q + B, \quad Cl = In - Gl, \quad Sa = \frac{Cl}{In}$$

$K_m$ and $K_M$ are positive real numbers, $K_M > K_m$, $In \geq Gl \geq 0$, $A \geq 0$, $B \geq 0$, $p$ and $q$ are nonzero real numbers acquiring the color data in the XYZ format at the output device side according to the following formulae:

$$\left\{ \begin{aligned}
&H'=\frac{H}{60^\circ},\, h=[H'],\, [\bullet]\text{ is a round symbol with respect to }\bullet,\ H\in[0,360^\circ),\, h=0,1,2,3,4,5\\[6pt]
&X=\left[2\frac{In-B}{K_M}\right]^{\frac{1}{q}}-\left[\frac{In(1-Sa)-A}{K_m}\right]^{\frac{1}{p}},\ Y=\left[2\frac{In-B}{K_M}\right]^{\frac{1}{q}}\frac{\sin H}{\sin(120^\circ-H)}+\left[\frac{In(1-Sa)-A}{K_m}\right]^{\frac{1}{p}}\frac{\sin(120^\circ-H)-2\sin H}{\sin(120^\circ-H)},\ Z=\left[\frac{In(1-Sa)-A}{K_m}\right]^{\frac{1}{p}},\qquad h=0\\[6pt]
&X=\left[2\frac{In-B}{K_M}\right]^{\frac{1}{q}}\frac{\sin(120^\circ-H)}{\sin H}+\left[\frac{In(1-Sa)-A}{K_m}\right]^{\frac{1}{p}}\frac{\sin H-2\sin(120^\circ-H)}{\sin H},\ Y=\left[2\frac{In-B}{K_M}\right]^{\frac{1}{q}}-\left[\frac{In(1-Sa)-A}{K_m}\right]^{\frac{1}{p}},\ Z=\left[\frac{In(1-Sa)-A}{K_m}\right]^{\frac{1}{p}},\qquad h=1\\[6pt]
&X=\left[\frac{In(1-Sa)-A}{K_m}\right]^{\frac{1}{p}},\ Y=\left[2\frac{In-B}{K_M}\right]^{\frac{1}{q}}-\left[\frac{In(1-Sa)-A}{K_m}\right]^{\frac{1}{p}},\ Z=\left[2\frac{In-B}{K_M}\right]^{\frac{1}{q}}\frac{\sin(H-120^\circ)}{\sin(240^\circ-H)}+\left[\frac{In(1-Sa)-A}{K_m}\right]^{\frac{1}{p}}\frac{\sin(240^\circ-H)-2\sin(H-120^\circ)}{\sin(240^\circ-H)},\ h=2\\[6pt]
&X=\left[\frac{In(1-Sa)-A}{K_m}\right]^{\frac{1}{p}},\ Y=\left[2\frac{In-B}{K_M}\right]^{\frac{1}{q}}\frac{\sin(240^\circ-H)}{\sin(H-120^\circ)}+\left[\frac{In(1-Sa)-A}{K_m}\right]^{\frac{1}{p}}\frac{\sin(H-120^\circ)-2\sin(240^\circ-H)}{\sin(H-120^\circ)},\ Z=\left[2\frac{In-B}{K_M}\right]^{\frac{1}{q}}-\left[\frac{In(1-Sa)-A}{K_m}\right]^{\frac{1}{p}},\ h=3\\[6pt]
&X=\left[2\frac{In-B}{K_M}\right]^{\frac{1}{q}}\frac{\sin(H-240^\circ)}{\sin(-H)}+\left[\frac{In(1-Sa)-A}{K_m}\right]^{\frac{1}{p}}\frac{\sin(-H)-2\sin(H-240^\circ)}{\sin(-H)},\ Y=\left[\frac{In(1-Sa)-A}{K_m}\right]^{\frac{1}{p}},\ Z=\left[2\frac{In-B}{K_M}\right]^{\frac{1}{q}}-\left[\frac{In(1-Sa)-A}{K_m}\right]^{\frac{1}{p}},\ h=4\\[6pt]
&X=\left[2\frac{In-B}{K_M}\right]^{\frac{1}{q}}-\left[\frac{In(1-Sa)-A}{K_m}\right]^{\frac{1}{p}},\ Y=\left[\frac{In(1-Sa)-A}{K_m}\right]^{\frac{1}{p}},\ Z=\left[2\frac{In-B}{K_M}\right]^{\frac{1}{q}}\frac{\sin(-H)}{\sin(H-240^\circ)}+\left[\frac{In(1-Sa)-A}{K_m}\right]^{\frac{1}{p}}\frac{\sin(H-240^\circ)-2\sin(-H)}{\sin(H-240^\circ)},\ h=5
\end{aligned} \right.$$

or if the saturation Sa and the intensity In in the color data in the HSaIn format at the input device side are acquired according to the formulae below,

$$Gl=K_m Min(X,Y,Z)^p+A,\ Cl=K_M\left|X\vec{i}+Y\vec{j}+Z\vec{k}\right|^m+B,\ m\text{ is real number},\ In=Gl+Cl,\ Sa=\frac{Cl}{In}$$

$K_m$ and $K_M$ are positive real numbers, $p$ and $m$ are nonzero real numbers, $In\geq Gl\geq 0, A\geq 0, B\geq 0$

acquiring the color data in the XYZ format at the output device side according to the following formulae:

$$h=[\frac{H}{120^\circ}],\ [\bullet]\text{ is a round symbol with respect to }\bullet,\ H\in[0^\circ,360^\circ),\, h=0,1,2$$

if $h=0$,

$$X=\left(\frac{SaIn-B}{K_M}\right)^{\frac{1}{m}}\left[\cos(H)+\frac{\sqrt{3}}{3}\sin(H)\right]+\left[\frac{(1-Sa)In-A}{K_m}\right]^{\frac{1}{p}},\ Y=\frac{2\sqrt{3}}{3}\sin(H)\left(\frac{SaIn-B}{K_M}\right)^{\frac{1}{m}}+\left[\frac{(1-Sa)In-A}{K_m}\right]^{\frac{1}{p}},\ Z=\left[\frac{(1-Sa)In-A}{K_m}\right]^{\frac{1}{p}}$$

if $h=1$,

$$X=\left[\frac{(1-Sa)In-A}{K_m}\right]^{\frac{1}{p}},\ Y=\left[\frac{(1-Sa)In-A}{K_m}\right]^{\frac{1}{p}}-\left(\frac{SaIn-B}{K_M}\right)^{\frac{1}{m}}\left[\cos(H)-\frac{\sqrt{3}}{3}\sin(H)\right],\ Z=\left[\frac{(1-Sa)In-A}{K_m}\right]^{\frac{1}{p}}-\left(\frac{SaIn-B}{K_M}\right)^{\frac{1}{m}}\left[\cos(H)+\frac{\sqrt{3}}{3}\sin(H)\right]$$

if $h=2$,

$$X=\left(\frac{SaIn-B}{K_M}\right)^{\frac{1}{m}}\left[\cos(H)-\frac{\sqrt{3}}{3}\sin(H)\right]+\left[\frac{(1-Sa)In-A}{K_m}\right]^{\frac{1}{p}},\ Y=\left[\frac{(1-Sa)In-A}{K_m}\right]^{\frac{1}{p}},\ Z=\left[\frac{(1-Sa)In-A}{K_m}\right]^{\frac{1}{p}}-\frac{2\sqrt{3}}{3}\sin(H)\left(\frac{SaIn-B}{K_M}\right)^{\frac{1}{m}}$$

or if the saturation Sa and the intensity In in the color data in the HSaIn format at the input device side are acquired according to the formulae below,

$$Gl = K_m Min(X,Y,Z)^r + A, \quad In = K_M \left[ X^p + Y^p + Z^p \right]^{\frac{1}{q}} + B, \quad Cl = In - Gl, \quad Sa = \frac{Cl}{In}$$

$K_m$ and $K_M$ are positive real numbers, $K_M > K_m > 0$, $p$, $q$ and $r$ are nonzero real numbers,

$In \geq Gl \geq 0, A \geq 0, B \geq 0$

acquiring the color data in the XYZ format at the output device side according to the following formulae:

$$h = [\frac{H}{120^\circ}], \quad [\bullet] \text{ is a round symbol with respect to } \bullet, \quad H \in [0^\circ, 360^\circ), h = 0, 1, 2$$

if $h = 0,$

$$\text{then } Z = \left[\frac{In(1-Sa)-A}{K_m}\right]^{\frac{1}{r}}$$

$$\left[\frac{\sin(120^\circ - H)}{\sin H}Y + \frac{\sin H - \sin(120^\circ - H)}{\sin H}\left[\frac{In(1-Sa)-A}{K_m}\right]^{\frac{1}{r}}\right]^p + Y^p = \left(\frac{In-B}{K_M}\right)^q - \left[\frac{In(1-Sa)-A}{K_m}\right]^{\frac{p}{r}}$$

$$X = \frac{\sin(120^\circ - H)}{\sin H}Y + \frac{\sin H - \sin(120^\circ - H)}{\sin H}\left[\frac{In(1-Sa)-A}{K_m}\right]^{\frac{1}{r}}$$

the values of $X$ and $Y$ represented by $In, Sa, H, p, q$ and $r$ are obtained according to the specific values of $p, q$ and $r$,

$X > Y \geq 0, Y > Z \geq 0,$ $Z$ is a value satisfying the actual physical condition

if $h = 1,$

$$\text{then } X = \left[\frac{In(1-Sa)-A}{K_m}\right]^{\frac{1}{r}}$$

$$\left[\frac{\sin(H-120^\circ)}{\sin(240^\circ - H)}Y + \frac{\sin(240^\circ - H) - \sin(H-120^\circ)}{\sin(240^\circ - H)}\left[\frac{In(1-Sa)-A}{K_m}\right]^{\frac{1}{r}}\right]^p + Y^p = \left(\frac{In-B}{K_M}\right)^q - \left[\frac{In(1-Sa)-A}{K_m}\right]^{\frac{p}{r}}$$

$$Z = \frac{\sin(H-120^\circ)}{\sin(240^\circ - H)}Y + \frac{\sin(240^\circ - H) - \sin(H-120^\circ)}{\sin(240^\circ - H)}\left[\frac{In(1-Sa)-A}{K_m}\right]^{\frac{1}{r}}$$

the values of $X$ and $Y$ represented by $In, Sa, H, p, q$ and $r$ are obtained according to the specific values of $p, q$ and $r$,

$X > Y \geq 0, Y > Z \geq 0,$ $Z$ is a value satisfying the actual physical condition

if $h = 2,$

$$\text{then } Y = \left[\frac{In(1-Sa)-A}{K_m}\right]^{\frac{1}{r}}$$

$$\left[\frac{\sin(-H)}{\sin(H-240^\circ)}X + \frac{\sin(H-240^\circ) - \sin(-H)}{\sin(H-240^\circ)}\left[\frac{In(1-Sa)-A}{K_m}\right]^{\frac{1}{r}}\right]^p + X^p = \left(\frac{In-B}{K_M}\right)^q - \left[\frac{In(1-Sa)-A}{K_m}\right]^{\frac{p}{r}}$$

$$Z = \frac{\sin(-H)}{\sin(H-240^\circ)}X + \frac{\sin(H-240^\circ) - \sin(-H)}{\sin(H-240^\circ)}\left[\frac{In(1-Sa)-A}{K_m}\right]^{\frac{1}{r}}$$

the values of $X$ and $Y$ represented by $In, Sa, H, p, q$ and $r$ are obtained according to the specific values of $p, q$ and $r$,

$X > Y \geq 0, Y > Z \geq 0,$ $Z$ is a value satisfying the actual physical condition

or if the saturation Sa and the intensity In in the color data in the HSaIn format at the input device side are acquired according to the formulae below,

$$Gl = K_m Min(X,Y,Z)^r + A, \quad Cl = K_M \left[ (X-Gl)^p + (Y-Gl)^p + (Z-Gl)^p \right]^{\frac{1}{q}} + B, \quad In = Cl + Gl, \quad Sa = \frac{Cl}{In}$$

$$K_m \text{ and } K_M \text{ are positive real numbers, } p, \ q \text{ and } r \text{ are nonzero real numbers, } In \geq Gl \geq 0, A \geq 0, B \geq 0$$

acquiring the color data in the XYZ format at the output device side according to the following formulae:

$$h = [\frac{H}{120^\circ}], \quad [\bullet] \text{ is a round symbol with respect to } \bullet, \quad H \in [0^\circ, 360^\circ), h = 0,1,2$$

if $h=0$,

$$X = \frac{\left(\frac{InSa-B}{K_M}\right)^{\frac{q}{p}} \sin(120^\circ - H)}{\left[\sin^p(120^\circ - H) + \sin^p(H)\right]^{\frac{1}{p}}} + \left[\frac{In(1-Sa)-A}{K_m}\right]^{\frac{1}{r}}, Y = \frac{\left(\frac{InSa-B}{K_M}\right)^{\frac{q}{p}} \sin(H)}{\left[\sin^p(H) + \sin^p(120^\circ - H)\right]^{\frac{1}{p}}} + \left[\frac{In(1-Sa)-A}{K_m}\right]^{\frac{1}{r}}, Z = \left[\frac{In(1-Sa)-A}{K_m}\right]^{\frac{1}{r}}$$

if $h=1$,

$$X = \left[\frac{In(1-Sa)-A}{K_m}\right]^{\frac{1}{r}}, Y = \frac{\left(\frac{InSa-B}{K_M}\right)^{\frac{q}{p}} \sin(240^\circ - H)}{\left[\sin^p(H-120^\circ) + \sin^p(240^\circ - H)\right]^{\frac{1}{p}}} + \left[\frac{In(1-Sa)-A}{K_m}\right]^{\frac{1}{r}}, Z = \frac{\left(\frac{InSa-B}{K_M}\right)^{\frac{q}{p}} \sin(H-120^\circ)}{\left[\sin^p(H-120^\circ) + \sin^p(240^\circ - H)\right]^{\frac{1}{p}}} + \left[\frac{In(1-Sa)-A}{K_m}\right]^{\frac{1}{r}}$$

if $h=2$,

$$X = \frac{\left(\frac{InSa-B}{K_M}\right)^{\frac{q}{p}} \sin(H-240^\circ)}{\left[\sin^p(-H) + \sin^p(H-240^\circ)\right]^{\frac{1}{p}}} + \left[\frac{In(1-Sa)-A}{K_m}\right]^{\frac{1}{r}}, Y = \left[\frac{In(1-Sa)-A}{K_m}\right]^{\frac{1}{r}}, Z = \frac{\left(\frac{InSa-B}{K_M}\right)^{\frac{q}{p}} \sin(-H)}{\left[\sin^p(H-240^\circ) + \sin^p(-H)\right]^{\frac{1}{p}}} + \left[\frac{In(1-Sa)-A}{K_m}\right]^{\frac{1}{r}}$$

**9.** The method according to claim 8, further comprising:

the color data of the output device being in a UVW format;
converting the color data in the XYZ format at the output device side into color data in a UVW format according to the following formulae 21-28:

$$\begin{bmatrix} U_2 \\ V_2 \\ W_2 \end{bmatrix} = \begin{bmatrix} \dfrac{\sin(120^0 - \alpha_2)}{\sin(60^0)} & 0 & \dfrac{\sin(\gamma_2)}{\sin(60^0)} \\ \dfrac{\sin(\alpha_2)}{\sin(60^0)} & \dfrac{\sin(120^0 - \beta_2)}{\sin(60^0)} & 0 \\ 0 & \dfrac{\sin(\beta_2)}{\sin(60^0)} & \dfrac{\sin(120^0 - \gamma_2)}{\sin(60^0)} \end{bmatrix}^{-1} \times \begin{bmatrix} X \\ Y \\ Z \end{bmatrix} \qquad \text{(Formula 21)}$$

in Formula 21, $\alpha_2$>0, $\beta_2$>0, $\gamma_2$>0;

$$\begin{bmatrix} U_2 \\ V_2 \\ W_2 \end{bmatrix} = \begin{bmatrix} \dfrac{\sin(120^0 - \alpha_2)}{\sin(60^0)} & 0 & 0 \\ \dfrac{\sin(\alpha_2)}{\sin(60^0)} & \dfrac{\sin(120^0 - \beta_2)}{\sin(60^0)} & \dfrac{\sin(-\gamma_2)}{\sin(60^0)} \\ 0 & \dfrac{\sin(\beta_2)}{\sin(60^0)} & \dfrac{\sin(120^0 + \gamma_2)}{\sin(60^0)} \end{bmatrix}^{-1} \times \begin{bmatrix} X \\ Y \\ Z \end{bmatrix}$$

(Formula 22)

in Formula 22, $\alpha_2 > 0$, $\beta_2 > 0$, $\gamma_2 < 0$;

$$\begin{bmatrix} U_2 \\ V_2 \\ W_2 \end{bmatrix} = \begin{bmatrix} \dfrac{\sin(120^0 - \alpha_2)}{\sin(60^0)} & \dfrac{\sin(-\beta_2)}{\sin(60^0)} & \dfrac{\sin(\gamma_2)}{\sin(60^0)} \\ \dfrac{\sin(\alpha_2)}{\sin(60^0)} & \dfrac{\sin(120^0 + \beta_2)}{\sin(60^0)} & 0 \\ 0 & 0 & \dfrac{\sin(120^0 - \gamma_2)}{\sin(60^0)} \end{bmatrix}^{-1} \times \begin{bmatrix} X \\ Y \\ Z \end{bmatrix}$$

(Formula 23)

in Formula 23, $\alpha_2 > 0$, $\beta_2 < 0$, $\gamma_2 > 0$;

$$\begin{bmatrix} U_2 \\ V_2 \\ W_2 \end{bmatrix} = \begin{bmatrix} \dfrac{\sin(120^0 - \alpha_2)}{\sin(60^0)} & \dfrac{\sin(-\beta_2)}{\sin(60^0)} & 0 \\ \dfrac{\sin(\alpha_2)}{\sin(60^0)} & \dfrac{\sin(120^0 + \beta_2)}{\sin(60^0)} & \dfrac{\sin(-\gamma_2)}{\sin(60^0)} \\ 0 & 0 & \dfrac{\sin(120^0 + \gamma_2)}{\sin(60^0)} \end{bmatrix}^{-1} \times \begin{bmatrix} X \\ Y \\ Z \end{bmatrix}$$

(Formula 24)

in Formula 24, $\alpha_2 > 0$, $\beta_2 < 0$, $\gamma_2 < 0$;

$$\begin{bmatrix} U_2 \\ V_2 \\ W_2 \end{bmatrix} = \begin{bmatrix} \dfrac{\sin(120^0 + \alpha_2)}{\sin(60^0)} & 0 & \dfrac{\sin(\gamma_2)}{\sin(60^0)} \\ 0 & \dfrac{\sin(120^0 - \beta_2)}{\sin(60^0)} & 0 \\ \dfrac{\sin(-\alpha_2)}{\sin(60^0)} & \dfrac{\sin(\beta_2)}{\sin(60^0)} & \dfrac{\sin(120^0 - \gamma_2)}{\sin(60^0)} \end{bmatrix}^{-1} \times \begin{bmatrix} X \\ Y \\ Z \end{bmatrix}$$

(Formula 25)

in Formula 25, $\alpha_2 < 0$, $\beta_2 > 0$, $\gamma_2 > 0$;

$$\begin{bmatrix} U_2 \\ V_2 \\ W_2 \end{bmatrix} = \begin{bmatrix} \dfrac{\sin(120^o + \alpha_2)}{\sin(60^o)} & 0 & 0 \\ 0 & \dfrac{\sin(120^o - \beta_2)}{\sin(60^o)} & \dfrac{\sin(-\gamma_2)}{\sin(60^o)} \\ \dfrac{\sin(-\alpha_2)}{\sin(60^o)} & \dfrac{\sin(\beta_2)}{\sin(60^o)} & \dfrac{\sin(120^o + \gamma_2)}{\sin(60^o)} \end{bmatrix}^{-1} \times \begin{bmatrix} X \\ Y \\ Z \end{bmatrix}$$

(Formula 26)

in Formula 26, $\alpha_2 < 0$, $\beta_2 > 0$, $\gamma_2 < 0$;

$$\begin{bmatrix} U_2 \\ V_2 \\ W_2 \end{bmatrix} = \begin{bmatrix} \dfrac{\sin(120^o + \alpha_2)}{\sin(60^o)} & \dfrac{\sin(-\beta_2)}{\sin(60^o)} & \dfrac{\sin(\gamma_2)}{\sin(60^o)} \\ 0 & \dfrac{\sin(120^o + \beta_2)}{\sin(60^o)} & 0 \\ \dfrac{\sin(-\alpha_2)}{\sin(60^o)} & 0 & \dfrac{\sin(120^o - \gamma_2)}{\sin(60^o)} \end{bmatrix}^{-1} \times \begin{bmatrix} X \\ Y \\ Z \end{bmatrix}$$

(Formula 27)

in Formula 27, $\alpha_2 > 0$, $\beta_2 < 0$, $\gamma_2 > 0$;

$$\begin{bmatrix} U_2 \\ V_2 \\ W_2 \end{bmatrix} = \begin{bmatrix} \dfrac{\sin(120^o + \alpha_2)}{\sin(60^o)} & \dfrac{\sin(-\beta_2)}{\sin(60^o)} & 0 \\ 0 & \dfrac{\sin(120^o + \beta_2)}{\sin(60^o)} & \dfrac{\sin(-\gamma_2)}{\sin(60^o)} \\ \dfrac{\sin(-\alpha_2)}{\sin(60^o)} & 0 & \dfrac{\sin(120^o + \gamma_2)}{\sin(60^o)} \end{bmatrix}^{-1} \times \begin{bmatrix} X \\ Y \\ Z \end{bmatrix}$$

(Formula 28)

in Formula 28, $\alpha_2 < 0$, $\beta_2 > 0$, $\gamma_2 < 0$;

wherein in the formulae 21-28, $\alpha_2$ is a hue deviation angle between $\overrightarrow{U_2}$ and $\vec{i}$; $\beta_2$ is a hue deviation angle between $\overrightarrow{V_2}$ and $\vec{j}$; $\gamma_2$ is a hue deviation angle between $\overrightarrow{W_2}$ and $\vec{k}$, the values of $U_2$, $V_2$ and $W_2$ are the color data in the UVW format of the output device obtained after the conversion; the values of X, Y and Z in the formulae 21-28 are the color data in the XYZ format; $\overrightarrow{U_2}$, $\overrightarrow{V_2}$ and $\overrightarrow{W_2}$ are UVW channel color data of the output device to represent chromatic vectors within the chromatic plane.

10. The method according to claim 8, further comprising:

the color data of the output device being in a multichannel format;
obtaining the color data $C_1$, $C_2$, ..., $C_n$ in the multichannel format according to characterized hue data $\alpha_1$, $\alpha_2$, ..., $\alpha_n$ of the respective channels $C_1$, $C_2$, ..., $C_n$ in the color space of the multichannel device and a conversion relationship from predefined XYZ of the output device to chromatic vectors $\overline{C_1}, \overline{C_2}, \cdots, \overline{C_n}$ within the chromatic plane.

11. A method of managing color data based on color data in an HSaln format in an HSaln color space, comprising:

acquiring color data in an HSaln format;
converting the color data in the HSaln format into color data in an XYZ format at an output device side;
wherein the HSaln color space is a color space based on a CIEXYZ Cartesian color space, of a color appearance attribute, and described by a cylindrical coordinate system, and is composed of a chromatic plane and a gray axis passing through the origin of the chromatic plane and perpendicular to the chromatic plane;
wherein the chromatic plane is a plane of the CIEXYZ Cartesian color space X+Y+Z=K, where K is a real constant; an XYZ axis of the CIEXYZ Cartesian color space performs a projection along a direction of a straight line X=Y=Z on a plane X+Y+Z=K to obtain three projection axes that are 120° with respect to one another within the chromatic plane, and unit vectors in the directions of the projection axes are $\bar{i}$, $\bar{j}$ and $\bar{k}$;
wherein the gray axis is a number axis composed of the straight line X=Y=Z of the CIEXYZ Cartesian color space, a numerical value on the number axis represents a gray Gl value in the HSaln color space, a length of a chromatic vector parallel to the chromatic plane represents a chromatic Cl value in the HSaln color space, and a polar angle of the chromatic vector represents a hue angle H in the HSaln color space;
wherein the color data in the HSaln format is in a format of the color data in the HSaln color space, and comprises a hue H, a saturation Sa, and an intensity In in the HSaln color space.

12. The method according to claim 11, wherein the relationship between the hue H and the tristimulus values X, Y and Z in the CIEXYZ color space is as follows:

$$H = \begin{cases} \arccos\left(\dfrac{2X-Y-Z}{2\sqrt{(X-Y)^2+(Y-Z)^2+(X-Y)(Y-Z)}}\right), & Y \geq Z \\[3ex] 2\pi - \arccos\left(\dfrac{2X-Y-Z}{2\sqrt{(X-Y)^2+(Y-Z)^2+(X-Y)(Y-Z)}}\right), & Y < Z \\[2ex] \text{undefined}, & X=Y=Z \end{cases} \qquad \text{(Formula 1)}$$

Wherein the color data in the HSaln format comprises H, Sa and In;
wherein X, Y and Z are color data in the XYZ format, i.e., the tristimulus values in the CIEXYZ Cartesian color space, and respectively represent numerical values on the X, Y and Z coordinate axes in the CIEXYZ Cartesian color space.

13. The method according to claim 12, wherein the saturation Sa and the intensity In in the color data in the HSaln format are respectively as follows:

$$Gl = K_m\left[Min(X,Y,Z)\right]^p + A,\ In = K_M\left[Max(X,Y,Z)\right]^q + B,\ Cl = In - Gl,\ Sa = \frac{Cl}{In}$$

$K_m$ and $K_M$ are positive real numbers, $In \geq Gl \geq 0$, $A \geq 0$, $B \geq 0$, $p$ and $q$ are nonzero real numbers

or

$$Gl = K_m\left[Min(X,Y,Z)\right]^p + A,\quad In = \frac{1}{3}K_M\left(X+Y+Z\right)^q + B,\quad Cl = In - Gl,\quad Sa = \frac{Cl}{In}$$

$K_m$ and $K_M$ are positive real numbers, $K_M > K_m$, $In \geq Gl \geq 0$, $A \geq 0$, $B \geq 0$, $p$ and $q$ are

or

$$Gl = K_m Min(X,Y,Z)^p + A, In = \frac{1}{2}K_M \left[Max(X,Y,Z) + Min(X,Y,Z)\right]^q + B, Cl = In - Gl, Sa = \frac{Cl}{In}$$

$K_m$ and $K_M$ are positive real numbers, $K_M > K_m, In \geq Gl \geq 0, A \geq 0, B \geq 0, p$ and $q$ are nonzero real numbers

or

$$Gl = K_m Min(X,Y,Z)^p + A, \qquad Cl = K_M \left|X\vec{i} + Y\vec{j} + Z\vec{k}\right|^m + B, \quad In = Gl + Cl, \quad Sa = \frac{Cl}{In}$$

$K_m$ and $K_M$ are positive real numbers, $p$ and $m$ are nonzero real numbers, $In \geq Gl \geq 0, A \geq 0, B \geq 0$

or

$$Gl = K_m Min(X,Y,Z)^r + A, \quad In = K_M \left[X^p + Y^p + Z^p\right]^{\frac{1}{q}} + B, \quad Cl = In - Gl, \quad Sa = \frac{Cl}{In}$$

$K_m$ and $K_M$ are positive real numbers, $K_M > K_m > 0, p, q$ and $r$ are nonzero real numbers, $In \geq Gl \geq 0, A \geq 0, B \geq 0$

or

$$Gl = K_m Min(X,Y,Z)^r + A, Cl = K_M \left[(X-Gl)^p + (Y-Gl)^p + (Z-Gl)^p\right]^{\frac{1}{q}} + B, In = Cl + Gl, Sa = \frac{Cl}{In}$$

$K_m$ and $K_M$ are positive real numbers, $K_M > K_m > 0, p, q$ and $r$ are nonzero real numbers, $In \geq Gl \geq 0, A \geq 0, B \geq 0$

14. The method according to claim 13, wherein the converting the color data in the HSaIn format into color data in an XYZ format at an output device side comprises:

if the saturation Sa and the intensity In in the color data in the HSaIn format are acquired according to the formulae below,

$$Gl = K_m \left[Min(X,Y,Z)\right]^p + A, In = K_M \left[Max(X,Y,Z)\right]^q + B, Cl = In - Gl, Sa = \frac{Cl}{In}$$

$K_m$ and $K_M$ are positive real numbers, $K_M > K_m, In \geq Gl \geq 0, A \geq 0, B \geq 0, p$ and $q$ are nonzero real numbers acquiring the color data in the XYZ format at the output device side according to the following formulae:

$$H' = \frac{H}{60^\circ}, h = [H'], [\bullet] \text{ is a round symbol with respect to } \bullet, \ H \in [0^\circ, 360^\circ), h = 0, 1, 2, 3, 4, 5$$

$$X = \left(\frac{In - B}{K_M}\right)^{\frac{1}{q}}, Y = \left(\frac{In - B}{K_M}\right)^{\frac{1}{q}} \frac{\sin H}{\sin(120^\circ - H)} + \left(\frac{In(1 - Sa) - A}{K_m}\right)^{\frac{1}{p}} \frac{\sin(120^\circ - H) - \sin H}{\sin(120^\circ - H)}, Z = \left(\frac{In(1 - Sa) - A}{K_m}\right)^{\frac{1}{p}}, \qquad h = 0$$

$$X = \left(\frac{In - B}{K_M}\right)^{\frac{1}{q}} \frac{\sin(120^\circ - H)}{\sin H} + \left(\frac{In(1 - Sa) - A}{K_m}\right)^{\frac{1}{p}} \frac{\sin H - \sin(120^\circ - H)}{\sin H}, Y = \left(\frac{In - B}{K_M}\right)^{\frac{1}{q}}, Z = \left(\frac{In(1 - Sa) - A}{K_m}\right)^{\frac{1}{p}}, \qquad h = 1$$

$$X = \left(\frac{In(1 - Sa) - A}{K_m}\right)^{\frac{1}{p}}, Y = \left(\frac{In - B}{K_M}\right)^{\frac{1}{q}}, Z = \left(\frac{In - B}{K_M}\right)^{\frac{1}{q}} \frac{\sin(H - 120^\circ)}{\sin(240^\circ - H)} + \left(\frac{In(1 - Sa) - A}{K_m}\right)^{\frac{1}{p}} \frac{\sin(240^\circ - H) - \sin(H - 120^\circ)}{\sin(240^\circ - H)}, \qquad h = 2$$

$$X = \left(\frac{In(1 - Sa) - A}{K_m}\right)^{\frac{1}{p}}, Y = \left(\frac{In - B}{K_M}\right)^{\frac{1}{q}} \frac{\sin(240^\circ - H)}{\sin(H - 120^\circ)} + \left(\frac{In(1 - Sa) - A}{K_m}\right)^{\frac{1}{p}} \frac{\sin(H - 120^\circ) - \sin(240^\circ - H)}{\sin(H - 120^\circ)}, Z = \left(\frac{In - B}{K_M}\right)^{\frac{1}{q}}, \qquad h = 3$$

$$X = \left(\frac{In - B}{K_M}\right)^{\frac{1}{q}} \frac{\sin(H - 240^\circ)}{\sin(-H)} + \left(\frac{In(1 - Sa) - A}{K_m}\right)^{\frac{1}{p}} \frac{\sin(-H) - \sin(H - 240^\circ)}{\sin(-H)}, Y = \left(\frac{In(1 - Sa) - A}{K_m}\right)^{\frac{1}{p}}, Z = \left(\frac{In - B}{K_M}\right)^{\frac{1}{q}}, \qquad h = 4$$

$$X = \left(\frac{In - B}{K_M}\right)^{\frac{1}{q}}, Y = \left(\frac{In(1 - Sa) - A}{K_m}\right)^{\frac{1}{p}}, Z = \left(\frac{In - B}{K_M}\right)^{\frac{1}{q}} \frac{\sin(-H)}{\sin(H - 240^\circ)} + \left(\frac{In(1 - Sa) - A}{K_m}\right)^{\frac{1}{p}} \frac{\sin(H - 240^\circ) - \sin(-H)}{\sin(H - 240^\circ)}, \qquad h = 5$$

or if the saturation Sa and the intensity In in the color data in the HSaIn format at the input device side are acquired according to the formulae below,

$$Gl = K_m \left[Min(X, Y, Z)\right]^p + A, \quad In = \frac{1}{3} K_M (X + Y + Z)^q + B, \quad Cl = In - Gl, \quad Sa = \frac{Cl}{In}$$

$K_m$ and $K_M$ are positive real numbers, $\mathrm{K_M} > \mathrm{K_m}, In \geq Gl \geq 0, A \geq 0, B \geq 0, p$ and $q$ are nonzero real numbers acquiring the color data in the XYZ format at the output device side according to the following formulae:

when $0^\circ \leq H < 120^\circ$

$$X = \left[\frac{3In - B}{K_M}\right]^{\frac{1}{q}} \frac{\sin(120^\circ - H)}{\sin(H) + \sin(120^\circ - H)} - \left[\frac{In(1 - Sa) - A}{K_m}\right]^{\frac{1}{p}} \frac{2\sin(120^\circ - H) - \sin(H)}{\sin(H) + \sin(120^\circ - H)}$$

$$Y = \left[\frac{3In - B}{K_M}\right]^{\frac{1}{q}} \frac{\sin(H)}{\sin(H) + \sin(120^\circ - H)} - \left[\frac{In(1 - Sa) - A}{K_m}\right]^{\frac{1}{p}} \frac{2\sin(H) - \sin(120^\circ - H)}{\sin(H) + \sin(120^\circ - H)}$$

$$Z = \left[\frac{In(1 - Sa) - A}{K_m}\right]^{\frac{1}{p}}$$

when $120° \le H < 240°$

$$X = \left[\frac{In(1-Sa)-A}{K_m}\right]^{\frac{1}{p}},$$

$$Y = \left[\frac{3In-B}{K_M}\right]^{\frac{1}{q}}\frac{\sin(240°-H)}{\sin(H-120°)+\sin(240°-H)} - \left[\frac{In(1-Sa)-A}{K_m}\right]^{\frac{1}{p}}\frac{2\sin(240°-H)-\sin(H-120°)}{\sin(H-120°)+\sin(240°-H)}$$

$$Z = \left[\frac{3In-B}{K_M}\right]^{\frac{1}{q}}\frac{\sin(H-120°)}{\sin(H-120°)+\sin(240°-H)} - \left[\frac{In(1-Sa)-A}{K_m}\right]^{\frac{1}{p}}\frac{2\sin(H-120°)-\sin(240°-H)}{\sin(H-120°)+\sin(240°-H)}$$

when $240° \le H < 360°$

$$X = \left[\frac{3In-B}{K_M}\right]^{\frac{1}{q}}\frac{\sin(H-240°)}{\sin(H-240°)+\sin(-H)} - \left[\frac{In(1-Sa)-A}{K_m}\right]^{\frac{1}{p}}\frac{2\sin(H-240°)-\sin(-H)}{\sin(H-240°)+\sin(-H)}$$

$$Y = \left[\frac{In(1-Sa)-A}{K_m}\right]^{\frac{1}{p}}$$

$$Z = \left[\frac{3In-B}{K_M}\right]^{\frac{1}{q}}\frac{\sin(-H)}{\sin(H-240°)+\sin(-H)} - \left[\frac{In(1-Sa)-A}{K_m}\right]^{\frac{1}{p}}\frac{2\sin(-H)-\sin(H-240°)}{\sin(H-240°)+\sin(-H)}$$

or if the saturation Sa and the intensity In in the color data in the HSaln format at the input device side are acquired according to the formulae below,

$$Gl = K_m Min(X,Y,Z)^p + A, \quad In = \frac{1}{2}K_M\left[Max(X,Y,Z)+Min(X,Y,Z)\right]^q + B, \quad Cl = In - Gl, \quad Sa = \frac{Cl}{In}$$

$K_m$ and $K_M$ are positive real numbers, $K_M > K_m$, $In \ge Gl \ge 0$, $A \ge 0$, $B \ge 0$, $p$ and $q$ are nonzero real numbers acquiring the color data in the XYZ format at the output device side according to the following formulae:

$$\begin{cases} H' = \frac{H}{60°}, h = [H'], [\bullet] \text{ is a round symbol with respect to } \bullet, \ H \in [0,360°), h = 0,1,2,3,4,5 \\[2mm]
X = \left[2\frac{In-B}{K_M}\right]^{\frac{1}{q}} - \left[\frac{In(1-Sa)-A}{K_m}\right]^{\frac{1}{p}}, Y = \left[2\frac{In-B}{K_M}\right]^{\frac{1}{q}}\frac{\sin H}{\sin(120°-H)} + \left[\frac{In(1-Sa)-A}{K_m}\right]^{\frac{1}{p}}\frac{\sin(120°-H)-2\sin H}{\sin(120°-H)}, Z = \left[\frac{In(1-Sa)-A}{K_m}\right]^{\frac{1}{p}}, \quad h=0 \\[2mm]
X = \left[2\frac{In-B}{K_M}\right]^{\frac{1}{q}}\frac{\sin(120°-H)}{\sin H} + \left[\frac{In(1-Sa)-A}{K_m}\right]^{\frac{1}{p}}\frac{\sin H-2\sin(120°-H)}{\sin H}, Y = \left[2\frac{In-B}{K_M}\right]^{\frac{1}{q}} - \left[\frac{In(1-Sa)-A}{K_m}\right]^{\frac{1}{p}}, Z = \left[\frac{In(1-Sa)-A}{K_m}\right]^{\frac{1}{p}}, \quad h=1 \\[2mm]
X = \left[\frac{In(1-Sa)-A}{K_m}\right]^{\frac{1}{p}}, Y = \left[2\frac{In-B}{K_M}\right]^{\frac{1}{q}} - \left[\frac{In(1-Sa)-A}{K_m}\right]^{\frac{1}{p}}, Z = \left[2\frac{In-B}{K_M}\right]^{\frac{1}{q}}\frac{\sin(H-120°)}{\sin(240°-H)} + \left[\frac{In(1-Sa)-A}{K_m}\right]^{\frac{1}{p}}\frac{\sin(240°-H)-2\sin(H-120°)}{\sin(240°-H)}, \quad h=2 \\[2mm]
X = \left[\frac{In(1-Sa)-A}{K_m}\right]^{\frac{1}{p}}, Y = \left[2\frac{In-B}{K_M}\right]^{\frac{1}{q}}\frac{\sin(240°-H)}{\sin(H-120°)} + \left[\frac{In(1-Sa)-A}{K_m}\right]^{\frac{1}{p}}\frac{\sin(H-120°)-2\sin(240°-H)}{\sin(H-120°)}, Z = \left[2\frac{In-B}{K_M}\right]^{\frac{1}{q}} - \left[\frac{In(1-Sa)-A}{K_m}\right]^{\frac{1}{p}}, \quad h=3 \\[2mm]
X = \left[2\frac{In-B}{K_M}\right]^{\frac{1}{q}}\frac{\sin(H-240°)}{\sin(-H)} + \left[\frac{In(1-Sa)-A}{K_m}\right]^{\frac{1}{p}}\frac{\sin(-H)-2\sin(H-240°)}{\sin(-H)}, Y = \left[\frac{In(1-Sa)-A}{K_m}\right]^{\frac{1}{p}}, Z = \left[2\frac{In-B}{K_M}\right]^{\frac{1}{q}} - \left[\frac{In(1-Sa)-A}{K_m}\right]^{\frac{1}{p}}, \quad h=4 \\[2mm]
X = \left[2\frac{In-B}{K_M}\right]^{\frac{1}{q}} - \left[\frac{In(1-Sa)-A}{K_m}\right]^{\frac{1}{p}}, Y = \left[\frac{In(1-Sa)-A}{K_m}\right]^{\frac{1}{p}}, Z = \left[2\frac{In-B}{K_M}\right]^{\frac{1}{q}}\frac{\sin(-H)}{\sin(H-240°)} + \left[\frac{In(1-Sa)-A}{K_m}\right]^{\frac{1}{p}}\frac{\sin(H-240°)-2\sin(-H)}{\sin(H-240°)}, \quad h=5 \end{cases}$$

or if the saturation Sa and the intensity In in the color data in the HSaln format at the input device side are acquired according to the formulae below,

$$Gl = K_m Min(X,Y,Z)^p + A, \quad Cl = K_M \left| X\vec{i} + Y\vec{j} + Z\vec{k} \right|^m + B, \quad In = Gl + Cl, \quad Sa = \frac{Cl}{In}$$

$K_m$ and $K_M$ are positive real numbers, $p$ and $m$ are nonzero real numbers, $In \geq Gl \geq 0, A \geq 0, B \geq 0$

acquiring the color data in the XYZ format at the output device side according to the following formulae:

$$h = \left[\frac{H}{120^\circ}\right], \quad \left[\bullet\right] \text{ is a round symbol with respect to } \bullet, \quad H \in [0^\circ, 360^\circ), h = 0,1,2$$

if $h=0$,

$$X = \left(\frac{SaIn-B}{K_M}\right)^{\frac{1}{m}}\left[\cos(H)+\frac{\sqrt{3}}{3}\sin(H)\right]+\left[\frac{(1-Sa)In-A}{K_m}\right]^{\frac{1}{p}}, Y = \frac{2\sqrt{3}}{3}\sin(H)\left(\frac{SaIn-B}{K_M}\right)^{\frac{1}{m}}+\left[\frac{(1-Sa)In-A}{K_m}\right]^{\frac{1}{p}}, Z = \left[\frac{(1-Sa)In-A}{K_m}\right]^{\frac{1}{p}}$$

if $h=1$,

$$X = \left[\frac{(1-Sa)In-A}{K_m}\right]^{\frac{1}{p}}, Y = \left[\frac{(1-Sa)In-A}{K_m}\right]^{\frac{1}{p}}-\left(\frac{SaIn-B}{K_M}\right)^{\frac{1}{m}}\left[\cos(H)-\frac{\sqrt{3}}{3}\sin(H)\right], Z = \left[\frac{(1-Sa)In-A}{K_m}\right]^{\frac{1}{p}}-\left(\frac{SaIn-B}{K_M}\right)^{\frac{1}{m}}\left[\cos(H)+\frac{\sqrt{3}}{3}\sin(H)\right]$$

if $h=2$,

$$X = \left(\frac{SaIn-B}{K_M}\right)^{\frac{1}{m}}\left[\cos(H)-\frac{\sqrt{3}}{3}\sin(H)\right]+\left[\frac{(1-Sa)In-A}{K_m}\right]^{\frac{1}{p}}, Y = \left[\frac{(1-Sa)In-A}{K_m}\right]^{\frac{1}{p}}, Z = \left[\frac{(1-Sa)In-A}{K_m}\right]^{\frac{1}{p}}-\frac{2\sqrt{3}}{3}\sin(H)\left(\frac{SaIn-B}{K_M}\right)^{\frac{1}{m}}$$

or if the saturation Sa and the intensity In in the color data in the HSaIn format at the input device side are acquired according to the formulae below,

$$Gl = K_m Min(X,Y,Z)^r + A, \quad In = K_M \left[X^p + Y^p + Z^p\right]^{\frac{1}{q}} + B, \quad Cl = In - Gl, \quad Sa = \frac{Cl}{In}$$

$K_m$ and $K_M$ are positive real numbers, $K_M > K_m > 0$, $p$, $q$ and $r$ are nonzero real numbers $In \geq Gl \geq 0, A \geq 0, B \geq 0$

acquiring the color data in the XYZ format at the output device side according to the following formulae:

$$h = [\frac{H}{120^\circ}], \quad [\bullet] \text{ is a round symbol with respect to } \bullet, \quad H \in [0^\circ, 360^\circ), h = 0,1,2$$

if $h = 0$,

then $$Z = \left[\frac{In(1-Sa)-A}{K_m}\right]^{\frac{1}{r}}$$

$$\left[\frac{\sin(120^\circ - H)}{\sin H}Y + \frac{\sin H - \sin(120^\circ - H)}{\sin H}\left[\frac{In(1-Sa)-A}{K_m}\right]^{\frac{1}{r}}\right]^p + Y^p = \left(\frac{In-B}{K_M}\right)^q - \left[\frac{In(1-Sa)-A}{K_m}\right]^{\frac{p}{r}}$$

$$X = \frac{\sin(120^\circ - H)}{\sin H}Y + \frac{\sin H - \sin(120^\circ - H)}{\sin H}\left[\frac{In(1-Sa)-A}{K_m}\right]^{\frac{1}{r}}$$

the values of X and Y represented by In,Sa,H,p,q and r are obtained according to the specific values of p,q and r,X>Y ≥ 0, Y>Z ≥ 0, Z is a value satisfying the actual physical condition

if $h = 1$,

then $$X = \left[\frac{In(1-Sa)-A}{K_m}\right]^{\frac{1}{r}}$$

$$\left[\frac{\sin(H-120^\circ)}{\sin(240^\circ - H)}Y + \frac{\sin(240^\circ - H) - \sin(H-120^\circ)}{\sin(240^\circ - H)}\left[\frac{In(1-Sa)-A}{K_m}\right]^{\frac{1}{r}}\right]^p + Y^p = \left(\frac{In-B}{K_M}\right)^q - \left[\frac{In(1-Sa)-A}{K_m}\right]^{\frac{p}{r}}$$

$$Z = \frac{\sin(H-120^\circ)}{\sin(240^\circ - H)}Y + \frac{\sin(240^\circ - H) - \sin(H-120^\circ)}{\sin(240^\circ - H)}\left[\frac{In(1-Sa)-A}{K_m}\right]^{\frac{1}{r}}$$

the values of X and Y represented by In,Sa,H,p,q and r are obtained according to the specific values of p,q and r,X>Y ≥ 0, Y>Z ≥ 0, Z is a value satisfying the actual physical condition

if $h = 2$,

then $$Y = \left[\frac{In(1-Sa)-A}{K_m}\right]^{\frac{1}{r}}$$

$$\left[\frac{\sin(-H)}{\sin(H-240^\circ)}X + \frac{\sin(H-240^\circ) - \sin(-H)}{\sin(H-240^\circ)}\left[\frac{In(1-Sa)-A}{K_m}\right]^{\frac{1}{r}}\right]^p + X^p = \left(\frac{In-B}{K_M}\right)^q - \left[\frac{In(1-Sa)-A}{K_m}\right]^{\frac{p}{r}}$$

$$Z = \frac{\sin(-H)}{\sin(H-240^\circ)}X + \frac{\sin(H-240^\circ) - \sin(-H)}{\sin(H-240^\circ)}\left[\frac{In(1-Sa)-A}{K_m}\right]^{\frac{1}{r}}$$

the values of X and Y represented by In,Sa,H,p,q and r are obtained according to the specific values of p,q and r,X>Y ≥ 0, Y>Z ≥ 0, Z is a value satisfying the actual physical condition

or if the saturation Sa and the intensity In in the color data in the HSaln format at the input device side are acquired according to the formulae below,

$$Gl = K_m Min(X,Y,Z)^r + A, \quad Cl = K_M\left[(X-Gl)^p + (Y-Gl)^p + (Z-Gl)^p\right]^{\frac{1}{q}} + B, \quad In = Cl + Gl, \quad Sa = \frac{Cl}{In}$$

$K_m$ and $K_M$ are positive real numbers, p, q and r are nonzero real numbers, $In \geq Gl \geq 0, A \geq 0, B \geq 0$

acquiring the color data in the XYZ format at the output device side according to the following formulae:

$$h = [\frac{H}{120^\circ}], \quad [\bullet] \text{ is a round symbol with respect to } \bullet, \quad H \in [0^\circ, 360^\circ), h = 0,1,2$$

if $h = 0,$

$$X = \frac{\left(\frac{InSa-B}{K_M}\right)^{\frac{q}{p}}\sin(120^\circ-H)}{\left[\sin^p(120^\circ-H)+\sin^p(H)\right]^{\frac{1}{p}}} + \left[\frac{In(1-Sa)-A}{K_m}\right]^{\frac{1}{r}}, Y = \frac{\left(\frac{InSa-B}{K_M}\right)^{\frac{q}{p}}\sin(H)}{\left[\sin^p(H)+\sin^p(120^\circ-H)\right]^{\frac{1}{p}}} + \left[\frac{In(1-Sa)-A}{K_m}\right]^{\frac{1}{r}}, Z = \left[\frac{In(1-Sa)-A}{K_m}\right]^{\frac{1}{r}}$$

if $h = 1,$

$$X = \left[\frac{In(1-Sa)-A}{K_m}\right]^{\frac{1}{r}}, Y = \frac{\left(\frac{InSa-B}{K_M}\right)^{\frac{q}{p}}\sin(240^\circ-H)}{\left[\sin^p(H-120^\circ)+\sin^p(240^\circ-H)\right]^{\frac{1}{p}}} + \left[\frac{In(1-Sa)-A}{K_m}\right]^{\frac{1}{r}}, Z = \frac{\left(\frac{InSa-B}{K_M}\right)^{\frac{q}{p}}\sin(H-120^\circ)}{\left[\sin^p(H-120^\circ)+\sin^p(240^\circ-H)\right]^{\frac{1}{p}}} + \left[\frac{In(1-Sa)-A}{K_m}\right]^{\frac{1}{r}}$$

if $h = 2,$

$$X = \frac{\left(\frac{InSa-B}{K_M}\right)^{\frac{q}{p}}\sin(H-240^\circ)}{\left[\sin^p(-H)+\sin^p(H-240^\circ)\right]^{\frac{1}{p}}} + \left[\frac{In(1-Sa)-A}{K_m}\right]^{\frac{1}{r}}, Y = \left[\frac{In(1-Sa)-A}{K_m}\right]^{\frac{1}{r}}, Z = \frac{\left(\frac{InSa-B}{K_M}\right)^{\frac{q}{p}}\sin(-H)}{\left[\sin^p(H-240^\circ)+\sin^p(-H)\right]^{\frac{1}{p}}} + \left[\frac{In(1-Sa)-A}{K_m}\right]^{\frac{1}{r}}$$

**15.** The method according to claim 14, after converting the color data in the HSaIn format into color data in an XYZ format at the output device side, further comprising:

converting the color data in the XYZ format at the output device side into color data in a color space of the output device.

**16.** The method according to claim 15, wherein the image format in the color space of the output device is in a UVW format; and
the converting the color data in the XYZ format into color data in a color space of the output device comprises:

converting the color data in the XYZ format at the output device side into color data in a UVW format according to the following formulae 21-28:

$$\begin{bmatrix} U_2 \\ V_2 \\ W_2 \end{bmatrix} = \begin{bmatrix} \dfrac{\sin(120^0-\alpha_2)}{\sin(60^0)} & 0 & \dfrac{\sin(\gamma_2)}{\sin(60^0)} \\ \dfrac{\sin(\alpha_2)}{\sin(60^0)} & \dfrac{\sin(120^0-\beta_2)}{\sin(60^0)} & 0 \\ 0 & \dfrac{\sin(\beta_2)}{\sin(60^0)} & \dfrac{\sin(120^0-\gamma_2)}{\sin(60^0)} \end{bmatrix}^{-1} \times \begin{bmatrix} X \\ Y \\ Z \end{bmatrix} \qquad \text{(Formula 21)}$$

in Formula 21, $\alpha_2 > 0$, $\beta_2 > 0$, $\gamma_2 > 0$;

$$\begin{bmatrix} U_2 \\ V_2 \\ W_2 \end{bmatrix} = \begin{bmatrix} \dfrac{\sin(120^{0}-\alpha_2)}{\sin(60^{0})} & 0 & 0 \\[2mm] \dfrac{\sin(\alpha_2)}{\sin(60^{0})} & \dfrac{\sin(120^{0}-\beta_2)}{\sin(60^{0})} & \dfrac{\sin(-\gamma_2)}{\sin(60^{0})} \\[2mm] 0 & \dfrac{\sin(\beta_2)}{\sin(60^{0})} & \dfrac{\sin(120^{0}+\gamma_2)}{\sin(60^{0})} \end{bmatrix}^{-1} \times \begin{bmatrix} X \\ Y \\ Z \end{bmatrix}$$ (Formula 22)

in Formula 22, $\alpha_2{>}0$, $\beta_2{>}0$, $\gamma_2{<}0$;

$$\begin{bmatrix} U_2 \\ V_2 \\ W_2 \end{bmatrix} = \begin{bmatrix} \dfrac{\sin(120^{0}-\alpha_2)}{\sin(60^{0})} & \dfrac{\sin(-\beta_2)}{\sin(60^{0})} & \dfrac{\sin(\gamma_2)}{\sin(60^{0})} \\[2mm] \dfrac{\sin(\alpha_2)}{\sin(60^{0})} & \dfrac{\sin(120^{0}+\beta_2)}{\sin(60^{0})} & 0 \\[2mm] 0 & 0 & \dfrac{\sin(120^{0}-\gamma_2)}{\sin(60^{0})} \end{bmatrix}^{-1} \times \begin{bmatrix} X \\ Y \\ Z \end{bmatrix}$$ (Formula 23)

in Formula 23, $\alpha_2{>}0$, $\beta_2{<}0$, $\gamma_2{>}0$;

$$\begin{bmatrix} U_2 \\ V_2 \\ W_2 \end{bmatrix} = \begin{bmatrix} \dfrac{\sin(120^{0}-\alpha_2)}{\sin(60^{0})} & \dfrac{\sin(-\beta_2)}{\sin(60^{0})} & 0 \\[2mm] \dfrac{\sin(\alpha_2)}{\sin(60^{0})} & \dfrac{\sin(120^{0}+\beta_2)}{\sin(60^{0})} & \dfrac{\sin(-\gamma_2)}{\sin(60^{0})} \\[2mm] 0 & 0 & \dfrac{\sin(120^{0}+\gamma_2)}{\sin(60^{0})} \end{bmatrix}^{-1} \times \begin{bmatrix} X \\ Y \\ Z \end{bmatrix}$$ (Formula 24)

in Formula 24, $\alpha_2{>}0$, $\beta_2{<}0$, $\gamma_2{<}0$;

$$\begin{bmatrix} U_2 \\ V_2 \\ W_2 \end{bmatrix} = \begin{bmatrix} \dfrac{\sin(120^{0}+\alpha_2)}{\sin(60^{0})} & 0 & \dfrac{\sin(\gamma_2)}{\sin(60^{0})} \\[2mm] 0 & \dfrac{\sin(120^{0}-\beta_2)}{\sin(60^{0})} & 0 \\[2mm] \dfrac{\sin(-\alpha_2)}{\sin(60^{0})} & \dfrac{\sin(\beta_2)}{\sin(60^{0})} & \dfrac{\sin(120^{0}-\gamma_2)}{\sin(60^{0})} \end{bmatrix}^{-1} \times \begin{bmatrix} X \\ Y \\ Z \end{bmatrix}$$ (Formula 25)

in Formula 25, $\alpha_2{<}0$, $\beta_2{>}0$, $\gamma_2{>}0$;

$$\begin{bmatrix} U_2 \\ V_2 \\ W_2 \end{bmatrix} = \begin{bmatrix} \dfrac{\sin(120^0+\alpha_2)}{\sin(60^0)} & 0 & 0 \\ 0 & \dfrac{\sin(120^0-\beta_2)}{\sin(60^0)} & \dfrac{\sin(-\gamma_2)}{\sin(60^0)} \\ \dfrac{\sin(-\alpha_2)}{\sin(60^0)} & \dfrac{\sin(\beta_2)}{\sin(60^0)} & \dfrac{\sin(120^0+\gamma_2)}{\sin(60^0)} \end{bmatrix}^{-1} \times \begin{bmatrix} X \\ Y \\ Z \end{bmatrix}$$

(Formula 26)

in Formula 26, $\alpha_2<0$, $\beta_2>0$, $\gamma_2<0$;

$$\begin{bmatrix} U_2 \\ V_2 \\ W_2 \end{bmatrix} = \begin{bmatrix} \dfrac{\sin(120^0+\alpha_2)}{\sin(60^0)} & \dfrac{\sin(-\beta_2)}{\sin(60^0)} & \dfrac{\sin(\gamma_2)}{\sin(60^0)} \\ 0 & \dfrac{\sin(120^0+\beta_2)}{\sin(60^0)} & 0 \\ \dfrac{\sin(-\alpha_2)}{\sin(60^0)} & 0 & \dfrac{\sin(120^0-\gamma_2)}{\sin(60^0)} \end{bmatrix}^{-1} \times \begin{bmatrix} X \\ Y \\ Z \end{bmatrix}$$

(Formula 27)

in Formula 27, $\alpha_2>0$, $\beta_2<0$, $\gamma_2>0$;

$$\begin{bmatrix} U_2 \\ V_2 \\ W_2 \end{bmatrix} = \begin{bmatrix} \dfrac{\sin(120^0+\alpha_2)}{\sin(60^0)} & \dfrac{\sin(-\beta_2)}{\sin(60^0)} & 0 \\ 0 & \dfrac{\sin(120^0+\beta_2)}{\sin(60^0)} & \dfrac{\sin(-\gamma_2)}{\sin(60^0)} \\ \dfrac{\sin(-\alpha_2)}{\sin(60^0)} & 0 & \dfrac{\sin(120^0+\gamma_2)}{\sin(60^0)} \end{bmatrix}^{-1} \times \begin{bmatrix} X \\ Y \\ Z \end{bmatrix}$$

(Formula 28)

in Formula 28, $\alpha_2<0$, $\beta_2<0$, $\gamma_2<0$;

wherein in the formulae 21-28, $\alpha_2$ is a hue deviation angle between $\overline{U_2}$ and $\vec{i}$ ; $\beta_2$ is a hue deviation angle between $\vec{V_2}$ and $\vec{j}$ ; $\gamma_2$ is a hue deviation angle between $\overline{W_2}$ and $\overline{k}$, the values of $U_2$, $V_2$ and $W_2$ are the color data in the UVW format of the output device obtained after the conversion; the values of X, Y and Z in the formulae 21-28 are the color data in the XYZ format;

$\overline{U_2}$, $\vec{V_2}$ and $\overline{W_2}$ are UVW channel color data of the output device to represent chromatic vector data within the chromatic plane.

17. The method according to claim 15, wherein the image format in the color space of the output device is in a multichannel format; and
the converting the color data in the XYZ format into color data in a color space of the output device comprises:

converting the color data in the XYZ format into color data $C_1$, $C_2$, ..., $C_n$ in a multichannel format according to characterized hue data $\alpha_1$, $\alpha_2$, ..., $\alpha_n$ of the respective channels $C_1$, $C_2$, ..., $C_n$ in the color space of the device and a conversion relationship from predefined $x\vec{i}$, $y\vec{j}$ and $z\overline{k}$ of the output device to chromatic vectors

$\overline{C_1}, \overline{C_2}, \cdots, \overline{C_n}$ within the chromatic plane.

**18.** A method of managing color data based on color data in an HSaIn format in an HSaIn color appearance color space, comprising:

acquiring color data in an XYZ format in a CIEXYZ color space at an input device side;
converting the acquired color data in the XYZ format into color data in an XYZ format in a CIEXYZ color appearance color space;
converting the color data in the XYZ format in the CIEXYZ color appearance color space into color data in an HSaIn format in an HSaIn color appearance color space at the input device side;
wherein the HSaIn color appearance color space is a color space based on a CIEXYZ Cartesian color appearance color space, of a color appearance attribute, and described by a cylindrical coordinate system, and is composed of a chromatic plane and a gray axis passing through the origin of the chromatic plane and perpendicular to the chromatic plane;
wherein the chromatic plane is a plane of the CIEXYZ Cartesian color appearance color space X+Y+Z=K, where K is a real constant; an XYZ axis of the CIEXYZ Cartesian color appearance color space performs a projection along a direction of a straight line X=Y=Z on a plane X+Y+Z=K to obtain three projection axes that are 120° with respect to one another within the chromatic plane,

and unit vectors in the directions of the projection axes are $\vec{i}$, $\vec{j}$ and $\vec{k}$;
wherein the gray axis is a number axis composed of the straight line X=Y=Z of the CIEXYZ Cartesian color appearance color space, a numerical value on the number axis represents a gray Gl value in the HSaIn color appearance color space, a length of a chromatic vector parallel to the chromatic plane represents a chromatic CI value in the HSaIn color appearance color space, and a polar angle of the chromatic vector represents a hue angle H in the HSaIn color appearance color space;
wherein the color data in the HSaIn format is in a format of the color data in the HSaIn color appearance color space, and comprises a hue H, a saturation Sa, and an intensity In in the HSaIn color appearance color space.

**19.** The method according to claim 18, wherein the converting the acquired color data in the XYZ format into color data in an XYZ format in a CIEXYZ color appearance color space comprises:

converting the color data in the XYZ format into color appearance color data $R_a$', $G_a$', $B_a$' in an RGB format at the input device side under a predefined observation condition according to a technical standard CIECAM02;
obtaining three color characteristic data $R_a$', $G_a$', $B_a$', i.e., hue deviation angles $\alpha_a$, $\beta_a$ and $\gamma_a$ within the chromatic plane, using characteristic hue values of cone response chromatograms of $R_a$', $G_a$' and $B_a$';
performing a conversion into color data $X_a$, $Y_a$, $Z_a$ in an XYZ format in an XYZ color appearance color space according to $R_a$', $G_a$' and $B_a$' and the hue deviation angles $\alpha_a$, $\beta_a$ and $\gamma_a$.

**20.** The method according to claim 19, wherein performing a conversion into color data $X_a$, $Y_a$, $Z_a$ in an XYZ format in a CIEXYZ color appearance color space according to $R_a$', $G_a$' and $B_a$' and the hue deviation angles $\alpha_a$, $\beta_a$ and $\gamma_a$ comprises:

converting $R_a$', $G_a$' and $B_a$' into color data in an XYZ format in the CIEXYZ color appearance color space according to the following formulae 60-67:

$$\begin{bmatrix} X_a \\ Y_a \\ Z_a \end{bmatrix} = \begin{bmatrix} \dfrac{\sin(120^0 - \alpha_a)}{\sin(60^0)} & 0 & \dfrac{\sin(\gamma_a)}{\sin(60^0)} \\ \dfrac{\sin(\alpha_a)}{\sin(60^0)} & \dfrac{\sin(120^0 - \beta_a)}{\sin(60^0)} & 0 \\ 0 & \dfrac{\sin(\beta_a)}{\sin(60^0)} & \dfrac{\sin(120^0 - \gamma_a)}{\sin(60^0)} \end{bmatrix} \times \begin{bmatrix} R_a^{'} \\ G_a^{'} \\ B_a^{'} \end{bmatrix}$$

(Formula 60)

in Formula 60, $\alpha_a > 0$, $\beta_a > 0$, $\gamma_a > 0$;

$$
\begin{bmatrix} X_a \\ Y_a \\ Z_a \end{bmatrix} = \begin{bmatrix} \dfrac{\sin(120^0 - \alpha_a)}{\sin(60^0)} & 0 & 0 \\ \dfrac{\sin(\alpha_a)}{\sin(60^0)} & \dfrac{\sin(120^0 - \beta_a)}{\sin(60^0)} & \dfrac{\sin(-\gamma_a)}{\sin(60^0)} \\ 0 & \dfrac{\sin(\beta_a)}{\sin(60^0)} & \dfrac{\sin(120^0 + \gamma_a)}{\sin(60^0)} \end{bmatrix} \times \begin{bmatrix} R_a^{'} \\ G_a^{'} \\ B_a^{'} \end{bmatrix}
$$

(Formula 61)

in Formula 61, $\alpha_a > 0$, $\beta_a > 0$, $\gamma_a < 0$;

$$
\begin{bmatrix} X_a \\ Y_a \\ Z_a \end{bmatrix} = \begin{bmatrix} \dfrac{\sin(120^0 - \alpha_a)}{\sin(60^0)} & \dfrac{\sin(-\beta_a)}{\sin(60^0)} & \dfrac{\sin(\gamma_a)}{\sin(60^0)} \\ \dfrac{\sin(\alpha_a)}{\sin(60^0)} & \dfrac{\sin(120^0 + \beta_a)}{\sin(60^0)} & 0 \\ 0 & 0 & \dfrac{\sin(120^0 - \gamma_a)}{\sin(60^0)} \end{bmatrix} \times \begin{bmatrix} R_a^{'} \\ G_a^{'} \\ B_a^{'} \end{bmatrix}
$$

(Formula 62)

in Formula 62, $\alpha_a > 0$, $\beta_a < 0$, $\gamma_a > 0$;

$$
\begin{bmatrix} X_a \\ Y_a \\ Z_a \end{bmatrix} = \begin{bmatrix} \dfrac{\sin(120^0 - \alpha_a)}{\sin(60^0)} & \dfrac{\sin(-\beta_a)}{\sin(60^0)} & 0 \\ \dfrac{\sin(\alpha_a)}{\sin(60^0)} & \dfrac{\sin(120^0 + \beta_a)}{\sin(60^0)} & \dfrac{\sin(-\gamma_a)}{\sin(60^0)} \\ 0 & 0 & \dfrac{\sin(120^0 + \gamma_a)}{\sin(60^0)} \end{bmatrix} \times \begin{bmatrix} R_a^{'} \\ G_a^{'} \\ B_a^{'} \end{bmatrix}
$$

(Formula 63)

in Formula 63, $\alpha_a > 0$, $\beta_a < 0$, $\gamma_a < 0$;

$$
\begin{bmatrix} X_a \\ Y_a \\ Z_a \end{bmatrix} = \begin{bmatrix} \dfrac{\sin(120^0 + \alpha_a)}{\sin(60^0)} & 0 & \dfrac{\sin(\gamma_a)}{\sin(60^0)} \\ 0 & \dfrac{\sin(120^0 - \beta_a)}{\sin(60^0)} & 0 \\ \dfrac{\sin(-\alpha_a)}{\sin(60^0)} & \dfrac{\sin(\beta_a)}{\sin(60^0)} & \dfrac{\sin(120^0 - \gamma_a)}{\sin(60^0)} \end{bmatrix} \times \begin{bmatrix} R_a^{'} \\ G_a^{'} \\ B_a^{'} \end{bmatrix}
$$

(Formula 64)

in Formula 64, $\alpha_a < 0$, $\beta_a > 0$, $\gamma_a > 0$;

$$\begin{bmatrix} X_a \\ Y_a \\ Z_a \end{bmatrix} = \begin{bmatrix} \dfrac{\sin(120^0 + \alpha_a)}{\sin(60^0)} & 0 & 0 \\[2ex] 0 & \dfrac{\sin(120^0 - \beta_a)}{\sin(60^0)} & \dfrac{\sin(-\gamma_a)}{\sin(60^0)} \\[2ex] \dfrac{\sin(-\alpha_a)}{\sin(60^0)} & \dfrac{\sin(\beta_a)}{\sin(60^0)} & \dfrac{\sin(120^0 + \gamma_a)}{\sin(60^0)} \end{bmatrix} \times \begin{bmatrix} R_a^{'} \\ G_a^{'} \\ B_a^{'} \end{bmatrix}$$

(Formula 65)

in Formula 65, $\alpha_a < 0$, $\beta_a > 0$, $\gamma_a < 0$;

$$\begin{bmatrix} X_a \\ Y_a \\ Z_a \end{bmatrix} = \begin{bmatrix} \dfrac{\sin(120^0 + \alpha_a)}{\sin(60^0)} & \dfrac{\sin(-\beta_a)}{\sin(60^0)} & \dfrac{\sin(\gamma_a)}{\sin(60^0)} \\[2ex] 0 & \dfrac{\sin(120^0 + \beta_a)}{\sin(60^0)} & 0 \\[2ex] \dfrac{\sin(-\alpha_a)}{\sin(60^0)} & 0 & \dfrac{\sin(120^0 - \gamma_a)}{\sin(60^0)} \end{bmatrix} \times \begin{bmatrix} R_a^{'} \\ G_a^{'} \\ B_a^{'} \end{bmatrix}$$

(Formula 66)

in Formula 66, $\alpha_a < 0$, $\beta_a < 0$, $\gamma_a > 0$;

$$\begin{bmatrix} X_a \\ Y_a \\ Z_a \end{bmatrix} = \begin{bmatrix} \dfrac{\sin(120^0 + \alpha_a)}{\sin(60^0)} & \dfrac{\sin(-\beta_a)}{\sin(60^0)} & 0 \\[2ex] 0 & \dfrac{\sin(120^0 + \beta_a)}{\sin(60^0)} & \dfrac{\sin(-\gamma_a)}{\sin(60^0)} \\[2ex] \dfrac{\sin(-\alpha_a)}{\sin(60^0)} & 0 & \dfrac{\sin(120^0 + \gamma_a)}{\sin(60^0)} \end{bmatrix} \times \begin{bmatrix} R_a^{'} \\ G_a^{'} \\ B_a^{'} \end{bmatrix}$$

(Formula 67)

in Formula 67, $\alpha_a < 0$, $\beta_a < 0$, $\gamma_a < 0$;

wherein the values of $R_a$', $G_a$' and $B_a$' in the above formulae 60-67 are the color data in the RGB format; the values of $X_a$, $Y_a$ and $Z_a$ in the formulae 60-67 are the converted color data in the

CIEXYZ color appearance color space; $\alpha_a$ is a hue deviation angle between $\vec{R_a}$ and $\vec{i}$; $\beta_a$ is a hue deviation

angle between $\vec{G_a}$ and $\vec{j}$; $\gamma_a$ is a hue deviation angle between $\vec{B_a}$ and $\vec{k}$; $R_a$', $G_a$' and $B_a$' are modules of

the chromatic vectors $\vec{R_a}$, $\vec{G_a}$, $\vec{B_a}$ within the chromatic plane.

21. The method according to claim 19, wherein the converting the color data in the XYZ format in the CIEXYZ color appearance color space into color data in an HSaln format in an HSaln color appearance color space at the input device comprises:

acquiring the hue H in the color data in the HSaln format at the input device side according to the following formula:

$$H = \begin{cases} \arccos\left(\dfrac{2X_a - Y_a - Z_a}{2\sqrt{(X_a - Y_a)^2 + (Y_a - Z_a)^2 + (X_a - Y_a)(Y_a - Z_a)}}\right), & Y_a \geq Z_a \\[4mm] 2\pi - \arccos\left(\dfrac{2X_a - Y_a - Z_a}{2\sqrt{(X_a - Y_a)^2 + (Y_a - Z_a)^2 + (X_a - Y_a)(Y_a - Z_a)}}\right), & Y_a < Z_a \\[4mm] \text{undefined}, & X_a = Y_a = Z_a \end{cases} \quad \text{(Formula 2)}$$

wherein the tristimulus values $X_a$, $Y_a$, $Z_a$ are the color data in the XYZ format, i.e., the color data in the CIEXYZ Cartesian color appearance color space, and respectively represent numerical values on the X, Y and Z coordinate axes in the CIEXYZ Cartesian color space.

22. The method according to claim 21, wherein the converting the color data in the XYZ format in the color appearance color space into color data in an HSaln format in an HSaln color appearance color space at the input device further comprises:

acquiring the saturation Sa and the intensity In in the color data in the HSaln format at the input device side according to the following formulae and based on the color data in the XYZ format:

$$Gl = K_m \left[ Min(\overline{X, Y, Z}) \right]^p + A, \quad In = K_M \left[ Max(\overline{X, Y, Z}) \right]^q + B, \quad Cl = In - Gl, \quad Sa = \frac{Cl}{In}$$

$K_m$ and $K_M$ are positive real numbers, $In \geq Gl \geq 0, A \geq 0, B \geq 0, p$ and $q$ are nonzero real numbers

or

$$Gl = K_m \left[ Min(X, Y, Z) \right]^p + A, \quad In = \frac{1}{3} K_M (X + Y + Z)^q + B, \quad Cl = In - Gl, \quad Sa = \frac{Cl}{In}$$

$K_m$ and $K_M$ are positive real numbers, $K_M > K_m, In \geq Gl \geq 0, A \geq 0, B \geq 0, p$ and $q$ are nonzero real numbers

or

$$Gl = K_m Min(X, Y, Z)^p + A, \quad In = \frac{1}{2} K_M \left[ Max(X, Y, Z) + Min(X, Y, Z) \right]^q + B, \quad Cl = In - Gl, \quad Sa = \frac{Cl}{In}$$

$K_m$ and $K_M$ are positive real numbers, $K_M > K_m, In \geq Gl \geq 0, A \geq 0, B \geq 0, p$ and $q$ are nonzero real numbers

or

$$Gl = K_m Min(X, Y, Z)^p + A, \quad Cl = K_M \left| X\vec{i} + Y\vec{j} + Z\vec{k} \right|^m + B, \quad In = Gl + Cl, \quad Sa = \frac{Cl}{In}$$

$K_m$ and $K_M$ are positive real numbers, $p$ and $m$ are nonzero real numbers, $In \geq Gl \geq 0, A \geq 0, B \geq 0$

or

$$Gl = K_m Min(X, Y, Z)^r + A, \quad In = K_M \left[ X^p + Y^p + Z^p \right]^{\frac{1}{q}} + B, \quad Cl = In - Gl, \quad Sa = \frac{Cl}{In}$$

$K_m$ and $K_M$ are positive real numbers, $K_M > K_m > 0, p, q$ and $r$ are nonzero real numbers, $In \geq Gl \geq 0, A \geq 0, B \geq 0$

or

$$Gl = K_m Min(X,Y,Z)^r + A, \quad Cl = K_M \left[ (X-Gl)^p + (Y-Gl)^p + (Z-Gl)^p \right]^{\frac{1}{q}} + B, \quad In = Cl + Gl, \quad Sa = \frac{Cl}{In}$$

$K_m$ and $K_M$ are positive real numbers, $K_M > K_m > 0$, $p$, $q$ and $r$ are nonzero real numbers, $In \geq Gl \geq 0, A \geq 0, B \geq 0$

23. The method according to claim 18, wherein the acquiring color data in an XYZ format in a CIEXYZ color space at an input device side comprises:

    acquiring color data of a chromatic image of a chromatic scene from the input device;
    converting the acquired color data into color data in an XYZ format at the input device side according to color characteristic data of the input device.

24. The method according to claim 23, wherein the data of the chromatic image of the chromatic scene acquired from the input device is in a format in a color space of a multichannel device;
    the converting the acquired color data into color data in an XYZ format at the input device side according to color characteristic data of the input device comprises:

    obtaining color data of respective channels to represent chromatic vectors within the chromatic plane according to color characteristic data of the input device, i.e., characterized hue deviation angles of the respective channels, in combination with values of the color data of the respective channels; wherein the characterized hue deviation angles are respectively hue deviation angles of

    characterized hue angles of the respective channels of the device relative to adjacent polar angles $\vec{i}, \vec{j}, \vec{k}$ within the chromatic plane;
    decomposing the chromatic vectors of the respective channels of the device within the chromatic plane into ones in the directions $\vec{i}, \vec{j}, \vec{k}$ according to a vector decomposition rule and

    performing a linear addition in the directions $\vec{i}, \vec{j}, \vec{k}$ respectively to thereby obtain data to serve as the color data in the XYZ format.

25. The method according to claim 23, wherein the color data of the chromatic image of the chromatic scene acquired from the input device is in a UVW format; and
    the converting the acquired color data into color data in an XYZ format at the input device side according to color characteristic data of the input device comprises:

    converting the color data in the UVW format acquired from the input device into color data in an XYZ format at the input device side according to color characteristic data $\alpha_1$, $\beta_1$, $\gamma_1$ of the input device and based on the following formulae 3-10, wherein the UVW format is a format represented by intensity numerical values after characterization of light intensity values perceived by a color sensor of the device at three different spectral sections:

$$\begin{bmatrix} X \\ Y \\ Z \end{bmatrix} = \begin{bmatrix} \dfrac{\sin(120^0 - \alpha_1)}{\sin(60^0)} & 0 & \dfrac{\sin(\gamma_1)}{\sin(60^0)} \\[3mm] \dfrac{\sin(\alpha_1)}{\sin(60^0)} & \dfrac{\sin(120^0 - \beta_1)}{\sin(60^0)} & 0 \\[3mm] 0 & \dfrac{\sin(\beta_1)}{\sin(60^0)} & \dfrac{\sin(120^0 - \gamma_1)}{\sin(60^0)} \end{bmatrix} \times \begin{bmatrix} U_1 \\ V_1 \\ W_1 \end{bmatrix} \qquad \text{(Formula 3)}$$

in Formula 3, $\alpha_1 > 0$, $\beta_1 > 0$, $\gamma_1 > 0$;

$$\begin{bmatrix} X \\ Y \\ Z \end{bmatrix} = \begin{bmatrix} \dfrac{\sin(120^\circ - \alpha_1)}{\sin(60^\circ)} & 0 & 0 \\[2ex] \dfrac{\sin(\alpha_1)}{\sin(60^\circ)} & \dfrac{\sin(120^\circ - \beta_1)}{\sin(60^\circ)} & \dfrac{\sin(-\gamma_1)}{\sin(60^\circ)} \\[2ex] 0 & \dfrac{\sin(\beta_1)}{\sin(60^\circ)} & \dfrac{\sin(120^\circ + \gamma_1)}{\sin(60^\circ)} \end{bmatrix} \times \begin{bmatrix} U_1 \\ V_1 \\ W_1 \end{bmatrix}$$ (Formula 4)

in Formula 4, $\alpha_1 > 0$, $\beta_1 > 0$, $\gamma_1 < 0$;

$$\begin{bmatrix} X \\ Y \\ Z \end{bmatrix} = \begin{bmatrix} \dfrac{\sin(120^\circ - \alpha_1)}{\sin(60^\circ)} & \dfrac{\sin(-\beta_1)}{\sin(60^\circ)} & \dfrac{\sin(\gamma_1)}{\sin(60^\circ)} \\[2ex] \dfrac{\sin(\alpha_1)}{\sin(60^\circ)} & \dfrac{\sin(120^\circ + \beta_1)}{\sin(60^\circ)} & 0 \\[2ex] 0 & 0 & \dfrac{\sin(120^\circ - \gamma_1)}{\sin(60^\circ)} \end{bmatrix} \times \begin{bmatrix} U_1 \\ V_1 \\ W_1 \end{bmatrix}$$ (Formula 5)

in Formula 5, $\alpha_1 > 0$, $\beta_1 < 0$, $\gamma_1 > 0$;

$$\begin{bmatrix} X \\ Y \\ Z \end{bmatrix} = \begin{bmatrix} \dfrac{\sin(120^\circ - \alpha_1)}{\sin(60^\circ)} & \dfrac{\sin(-\beta_1)}{\sin(60^\circ)} & 0 \\[2ex] \dfrac{\sin(\alpha_1)}{\sin(60^\circ)} & \dfrac{\sin(120^\circ + \beta_1)}{\sin(60^\circ)} & \dfrac{\sin(-\gamma_1)}{\sin(60^\circ)} \\[2ex] 0 & 0 & \dfrac{\sin(120^\circ + \gamma_1)}{\sin(60^\circ)} \end{bmatrix} \times \begin{bmatrix} U_1 \\ V_1 \\ W_1 \end{bmatrix}$$ (Formula 6)

in Formula 6, $\alpha_1 > 0$, $\beta_1 < 0$, $\gamma_1 < 0$;

$$\begin{bmatrix} X \\ Y \\ Z \end{bmatrix} = \begin{bmatrix} \dfrac{\sin(120^\circ + \alpha_1)}{\sin(60^\circ)} & 0 & \dfrac{\sin(\gamma_1)}{\sin(60^\circ)} \\[2ex] 0 & \dfrac{\sin(120^\circ - \beta_1)}{\sin(60^\circ)} & 0 \\[2ex] \dfrac{\sin(-\alpha_1)}{\sin(60^\circ)} & \dfrac{\sin(\beta_1)}{\sin(60^\circ)} & \dfrac{\sin(120^\circ - \gamma_1)}{\sin(60^\circ)} \end{bmatrix} \times \begin{bmatrix} U_1 \\ V_1 \\ W_1 \end{bmatrix}$$ (Formula 7)

in Formula 7, $\alpha_1 < 0$, $\beta_1 > 0$, $\gamma_1 > 0$;

$$
\begin{bmatrix} X \\ Y \\ Z \end{bmatrix} = \begin{bmatrix} \dfrac{\sin(120^\circ + \alpha_1)}{\sin(60^\circ)} & 0 & 0 \\[2ex] 0 & \dfrac{\sin(120^\circ - \beta_1)}{\sin(60^\circ)} & \dfrac{\sin(-\gamma_1)}{\sin(60^\circ)} \\[2ex] \dfrac{\sin(-\alpha_1)}{\sin(60^\circ)} & \dfrac{\sin(\beta_1)}{\sin(60^\circ)} & \dfrac{\sin(120^\circ + \gamma_1)}{\sin(60^\circ)} \end{bmatrix} \times \begin{bmatrix} U_1 \\ V_1 \\ W_1 \end{bmatrix}
$$

(Formula 8)

in Formula 8, $\alpha_1 < 0$, $\beta_1 > 0$, $\gamma_1 < 0$;

$$
\begin{bmatrix} X \\ Y \\ Z \end{bmatrix} = \begin{bmatrix} \dfrac{\sin(120^\circ + \alpha_1)}{\sin(60^\circ)} & \dfrac{\sin(-\beta_1)}{\sin(60^\circ)} & \dfrac{\sin(\gamma_1)}{\sin(60^\circ)} \\[2ex] 0 & \dfrac{\sin(120^\circ + \beta_1)}{\sin(60^\circ)} & 0 \\[2ex] \dfrac{\sin(-\alpha_1)}{\sin(60^\circ)} & 0 & \dfrac{\sin(120^\circ - \gamma_1)}{\sin(60^\circ)} \end{bmatrix} \times \begin{bmatrix} U_1 \\ V_1 \\ W_1 \end{bmatrix}
$$

(Formula 9)

in Formula 9, $\alpha_1 < 0$, $\beta_1 < 0$, $\gamma_1 > 0$;

$$
\begin{bmatrix} X \\ Y \\ Z \end{bmatrix} = \begin{bmatrix} \dfrac{\sin(120^\circ + \alpha_1)}{\sin(60^\circ)} & \dfrac{\sin(-\beta_1)}{\sin(60^\circ)} & 0 \\[2ex] 0 & \dfrac{\sin(120^\circ + \beta_1)}{\sin(60^\circ)} & \dfrac{\sin(-\gamma_1)}{\sin(60^\circ)} \\[2ex] \dfrac{\sin(-\alpha_1)}{\sin(60^\circ)} & 0 & \dfrac{\sin(120^\circ + \gamma_1)}{\sin(60^\circ)} \end{bmatrix} \times \begin{bmatrix} U_1 \\ V_1 \\ W_1 \end{bmatrix}
$$

(Formula 10)

in the formula 10, $\alpha_1 < 0$, $\beta_1 < 0$, $\gamma_1 < 0$;

wherein the values of $U_1$, $V_1$ and $W_1$ in the above formulae 3-10 are the characterized color data in the UVW format of the input device; $\alpha_1$ is a hue deviation angle between $\overline{U_1}$ and $\vec{i}$; $\beta_1$ is a hue deviation angle between

$\vec{V_1}$ and $\vec{j}$; $\gamma_1$ is a hue deviation angle between $\vec{W_1}$ and $\vec{k}$; $\overline{U_1}$, $\vec{V_1}$ and $\vec{W_1}$ are characterized UVW channel color data of the input device to represent chromatic vectors within the chromatic plane.

26. The method according to claim 22, further comprising a step of: mapping the color data in the HSaIn format in the HSaIn color appearance color space at the input device side according to a mapping relationship between a color gamut of the input device and a color gamut of the output device to obtain the color data in the HSaIn format in the HSaIn color appearance color space at the output device side, which comprises:

determining an intensity mapping relationship $In_{LUT}$ and a saturation mapping relationship $Sa_{LUT}$ under an Iso-hue plane according to the gamuts of the input device and the output device, a color distribution range of an image and a color representation intention;
performing a color data mapping of the image from the input device side to the output device side according to the intensity mapping relationship $In_{LUT}$ and the saturation mapping relationship $Sa_{LUT}$ to obtain the color data in the HSaIn format in the HSaIn color appearance color space at the output device side.

27. The method according to claim 26, further comprising: converting the color data in the HSaIn format in the HSaIn color appearance color space at the output device side into color data in an XYZ format in the CIEXYZ color appearance color appearance color space, which comprises:

if the saturation Sa and the intensity In in the color data in the HSaIn format in the HSaIn color appearance color space at the input device side are acquired according to the formulae below,

$$Gl = K_m \left[ Min(X,Y,Z) \right]^p + A, \quad In = K_M \left[ Max(X,Y,Z) \right]^q + B, \quad Cl = In - Gl, \quad Sa = \frac{Cl}{In}$$

$K_m$ and $K_M$ are positive real numbers, $In \geq Gl \geq 0, A \geq 0, B \geq 0, p$ and $q$ are nonzero real numbers acquiring the color data in the XYZ format at the output device side according to the following formulae:

$$\begin{cases} H' = \dfrac{H}{60^\circ}, h = [H'], [\bullet] \text{ is a round symbol with respect to } \bullet, \ H \in [0^\circ, 360^\circ), h = 0,1,2,3,4,5 \\[2mm] X = \left(\dfrac{In-B}{K_M}\right)^{\frac{1}{q}}, Y = \left(\dfrac{In-B}{K_M}\right)^{\frac{1}{q}} \dfrac{\sin H}{\sin(120^\circ - H)} + \left(\dfrac{In(1-Sa)-A}{K_m}\right)^{\frac{1}{p}} \dfrac{\sin(120^\circ - H) - \sin H}{\sin(120^\circ - H)}, Z = \left(\dfrac{In(1-Sa)-A}{K_m}\right)^{\frac{1}{p}}, \qquad h=0 \\[4mm] X = \left(\dfrac{In-B}{K_M}\right)^{\frac{1}{q}} \dfrac{\sin(120^\circ - H)}{\sin H} + \left(\dfrac{In(1-Sa)-A}{K_m}\right)^{\frac{1}{p}} \dfrac{\sin H - \sin(120^\circ - H)}{\sin H}, Y = \left(\dfrac{In-B}{K_M}\right)^{\frac{1}{q}}, Z = \left(\dfrac{In(1-Sa)-A}{K_m}\right)^{\frac{1}{p}}, \qquad h=1 \\[4mm] X = \left(\dfrac{In(1-Sa)-A}{K_m}\right)^{\frac{1}{p}}, Y = \left(\dfrac{In-B}{K_M}\right)^{\frac{1}{q}}, Z = \left(\dfrac{In-B}{K_M}\right)^{\frac{1}{q}} \dfrac{\sin(H-120^\circ)}{\sin(240^\circ - H)} + \left(\dfrac{In(1-Sa)-A}{K_m}\right)^{\frac{1}{p}} \dfrac{\sin(240^\circ - H) - \sin(H-120^\circ)}{\sin(240^\circ - H)}, \qquad h=2 \\[4mm] X = \left(\dfrac{In(1-Sa)-A}{K_m}\right)^{\frac{1}{p}}, Y = \left(\dfrac{In-B}{K_M}\right)^{\frac{1}{q}} \dfrac{\sin(240^\circ - H)}{\sin(H-120^\circ)} + \left(\dfrac{In(1-Sa)-A}{K_m}\right)^{\frac{1}{p}} \dfrac{\sin(H-120^\circ) - \sin(240^\circ - H)}{\sin(H-120^\circ)}, Z = \left(\dfrac{In-B}{K_M}\right)^{\frac{1}{q}}, \qquad h=3 \\[4mm] X = \left(\dfrac{In-B}{K_M}\right)^{\frac{1}{q}} \dfrac{\sin(H-240^\circ)}{\sin(-H)} + \left(\dfrac{In(1-Sa)-A}{K_m}\right)^{\frac{1}{p}} \dfrac{\sin(-H) - \sin(H-240^\circ)}{\sin(-H)}, Y = \left(\dfrac{In(1-Sa)-A}{K_m}\right)^{\frac{1}{p}}, Z = \left(\dfrac{In-B}{K_M}\right)^{\frac{1}{q}}, \qquad h=4 \\[4mm] X = \left(\dfrac{In-B}{K_M}\right)^{\frac{1}{q}}, Y = \left(\dfrac{In(1-Sa)-A}{K_m}\right)^{\frac{1}{p}}, Z = \left(\dfrac{In-B}{K_M}\right)^{\frac{1}{q}} \dfrac{\sin(-H)}{\sin(H-240^\circ)} + \left(\dfrac{In(1-Sa)-A}{K_m}\right)^{\frac{1}{p}} \dfrac{\sin(H-240^\circ) - \sin(-H)}{\sin(H-240^\circ)}, \qquad h=5 \end{cases}$$

or if the saturation Sa and the intensity In in the color data in the HSaIn format at the input device side are acquired according to the formulae below,

$$Gl = K_m \left[ Min(X,Y,Z) \right]^p + A, \quad In = \frac{1}{3} K_M (X+Y+Z)^q + B, \quad Cl = In - Gl, \quad Sa = \frac{Cl}{In}$$

$K_m$ and $K_M$ are positive real numbers, $K_M > K_m, In \geq Gl \geq 0, A \geq 0, B \geq 0, p$ and $q$ are nonzero real numbers acquiring the color data in the XYZ format at the output device side according to the following formulae:

when $0° \leq H < 120°$

$$X = \left[\frac{3In - B}{K_M}\right]^{\frac{1}{q}} \frac{\sin(120° - H)}{\sin(H) + \sin(120° - H)} - \left[\frac{In(1 - Sa) - A}{K_m}\right]^{\frac{1}{p}} \frac{2\sin(120° - H) - \sin(H)}{\sin(H) + \sin(120° - H)}$$

$$Y = \left[\frac{3In - B}{K_M}\right]^{\frac{1}{q}} \frac{\sin(H)}{\sin(H) + \sin(120° - H)} - \left[\frac{In(1 - Sa) - A}{K_m}\right]^{\frac{1}{p}} \frac{2\sin(H) - \sin(120° - H)}{\sin(H) + \sin(120° - H)}$$

$$Z = \left[\frac{In(1 - Sa) - A}{K_m}\right]^{\frac{1}{p}}$$

when $120° \leq H < 240°$

$$X = \left[\frac{In(1 - Sa) - A}{K_m}\right]^{\frac{1}{p}},$$

$$Y = \left[\frac{3In - B}{K_M}\right]^{\frac{1}{q}} \frac{\sin(240° - H)}{\sin(H - 120°) + \sin(240° - H)} - \left[\frac{In(1 - Sa) - A}{K_m}\right]^{\frac{1}{p}} \frac{2\sin(240° - H) - \sin(H - 120°)}{\sin(H - 120°) + \sin(240° - H)}$$

$$Z = \left[\frac{3In - B}{K_M}\right]^{\frac{1}{q}} \frac{\sin(H - 120°)}{\sin(H - 120°) + \sin(240° - H)} - \left[\frac{In(1 - Sa) - A}{K_m}\right]^{\frac{1}{p}} \frac{2\sin(H - 120°) - \sin(240° - H)}{\sin(H - 120°) + \sin(240° - H)}$$

when $240° \leq H < 360°$

$$X = \left[\frac{3In - B}{K_M}\right]^{\frac{1}{q}} \frac{\sin(H - 240°)}{\sin(H - 240°) + \sin(-H)} - \left[\frac{In(1 - Sa) - A}{K_m}\right]^{\frac{1}{p}} \frac{2\sin(H - 240°) - \sin(-H)}{\sin(H - 240°) + \sin(-H)}$$

$$Y = \left[\frac{In(1 - Sa) - A}{K_m}\right]^{\frac{1}{p}}$$

$$Z = \left[\frac{3In - B}{K_M}\right]^{\frac{1}{q}} \frac{\sin(-H)}{\sin(H - 240°) + \sin(-H)} - \left[\frac{In(1 - Sa) - A}{K_m}\right]^{\frac{1}{p}} \frac{2\sin(-H) - \sin(H - 240°)}{\sin(H - 240°) + \sin(-H)}$$

or if the saturation Sa and the intensity In in the color data in the HSaIn format at the input device side are acquired according to the formulae below,

$$Gl = K_m Min(X, Y, Z)^p + A, \quad In = \frac{1}{2} K_M \left[Max(X, Y, Z) + Min(X, Y, Z)\right]^q + B, \quad Cl = In - Gl, \quad Sa = \frac{Cl}{In}$$

$K_m$ and $K_M$ are positive real numbers, $K_M > K_m$, $In \geq Gl \geq 0$, $A \geq 0$, $B \geq 0$, $p$ and $q$ are nonzero real numbers acquiring the color data in the XYZ format at the output device side according to the following formulae:

$$H' = \frac{H}{60°}, h = [H'], [\bullet] \text{ is a round symbol with respect to } \bullet, \ H \in [0, 360°), h = 0, 1, 2, 3, 4, 5$$

$$X = \left[2\frac{In-B}{K_M}\right]^{\frac{1}{q}} - \left[\frac{In(1-Sa)-A}{K_m}\right]^{\frac{1}{p}}, Y = \left[2\frac{In-B}{K_M}\right]^{\frac{1}{q}}\frac{\sin H}{\sin(120°-H)} + \left[\frac{In(1-Sa)-A}{K_m}\right]^{\frac{1}{p}}\frac{\sin(120°-H)-2\sin H}{\sin(120°-H)}, Z = \left[\frac{In(1-Sa)-A}{K_m}\right]^{\frac{1}{p}}, \qquad h=0$$

$$X = \left[2\frac{In-B}{K_M}\right]^{\frac{1}{q}}\frac{\sin(120°-H)}{\sin H} + \left[\frac{In(1-Sa)-A}{K_m}\right]^{\frac{1}{p}}\frac{\sin H-2\sin(120°-H)}{\sin H}, Y = \left[2\frac{In-B}{K_M}\right]^{\frac{1}{q}} - \left[\frac{In(1-Sa)-A}{K_m}\right]^{\frac{1}{p}}, Z = \left[\frac{In(1-Sa)-A}{K_m}\right]^{\frac{1}{p}}, \qquad h=1$$

$$X = \left[\frac{In(1-Sa)-A}{K_m}\right]^{\frac{1}{p}}, Y = \left[2\frac{In-B}{K_M}\right]^{\frac{1}{q}} - \left[\frac{In(1-Sa)-A}{K_m}\right]^{\frac{1}{p}}, Z = \left[2\frac{In-B}{K_M}\right]^{\frac{1}{q}}\frac{\sin(H-120°)}{\sin(240°-H)} + \left[\frac{In(1-Sa)-A}{K_m}\right]^{\frac{1}{p}}\frac{\sin(240°-H)-2\sin(H-120°)}{\sin(240°-H)}, \quad h=2$$

$$X = \left[\frac{In(1-Sa)-A}{K_m}\right]^{\frac{1}{p}}, Y = \left[2\frac{In-B}{K_M}\right]^{\frac{1}{q}}\frac{\sin(240°-H)}{\sin(H-120°)} + \left[\frac{In(1-Sa)-A}{K_m}\right]^{\frac{1}{p}}\frac{\sin(H-120°)-2\sin(240°-H)}{\sin(H-120°)}, Z = \left[2\frac{In-B}{K_M}\right]^{\frac{1}{q}} - \left[\frac{In(1-Sa)-A}{K_m}\right]^{\frac{1}{p}}, \quad h=3$$

$$X = \left[2\frac{In-B}{K_M}\right]^{\frac{1}{q}}\frac{\sin(H-240°)}{\sin(-H)} + \left[\frac{In(1-Sa)-A}{K_m}\right]^{\frac{1}{p}}\frac{\sin(-H)-2\sin(H-240°)}{\sin(-H)}, Y = \left[\frac{In(1-Sa)-A}{K_m}\right]^{\frac{1}{p}}, Z = \left[2\frac{In-B}{K_M}\right]^{\frac{1}{q}} - \left[\frac{In(1-Sa)-A}{K_m}\right]^{\frac{1}{p}}, \qquad h=4$$

$$X = \left[2\frac{In-B}{K_M}\right]^{\frac{1}{q}} - \left[\frac{In(1-Sa)-A}{K_m}\right]^{\frac{1}{p}}, Y = \left[\frac{In(1-Sa)-A}{K_m}\right]^{\frac{1}{p}}, Z = \left[2\frac{In-B}{K_M}\right]^{\frac{1}{q}}\frac{\sin(-H)}{\sin(H-240°)} + \left[\frac{In(1-Sa)-A}{K_m}\right]^{\frac{1}{p}}\frac{\sin(H-240°)-2\sin(-H)}{\sin(H-240°)}, \qquad h=5$$

or if the saturation Sa and the intensity In in the color data in the HSaIn format at the input device side are acquired according to the formulae below,

$$Gl = K_m Min(X, Y, Z)^p + A, \qquad Cl = K_M \left| X\vec{i} + Y\vec{j} + Z\vec{k} \right|^m + B, m是实数, \quad In = Gl + Cl, \quad Sa = \frac{Cl}{In}$$

$K_m$ and $K_M$ are positive real numbers, $p$ and $m$ are nonzero real numbers, $In \geq Gl \geq 0, A \geq 0, B \geq 0$

acquiring the color data in the XYZ format at the output device side according to the following formulae:

$$h = [\frac{H}{120°}], \quad [\bullet] \text{ is a round symbol with respect to } \bullet, \ H \in [0°, 360°), h = 0, 1, 2$$

if $h = 0$,

$$X = \left(\frac{SaIn-B}{K_M}\right)^{\frac{1}{m}}\left[\cos(H) + \frac{\sqrt{3}}{3}\sin(H)\right] + \left[\frac{(1-Sa)In-A}{K_m}\right]^{\frac{1}{p}}, Y = \frac{2\sqrt{3}}{3}\sin(H)\left(\frac{SaIn-B}{K_M}\right)^{\frac{1}{m}} + \left[\frac{(1-Sa)In-A}{K_m}\right]^{\frac{1}{p}}, Z = \left[\frac{(1-Sa)In-A}{K_m}\right]^{\frac{1}{p}}$$

if $h = 1$,

$$X = \left[\frac{(1-Sa)In-A}{K_m}\right]^{\frac{1}{p}}, Y = \left[\frac{(1-Sa)In-A}{K_m}\right]^{\frac{1}{p}} - \left(\frac{SaIn-B}{K_M}\right)^{\frac{1}{m}}\left[\cos(H) - \frac{\sqrt{3}}{3}\sin(H)\right], Z = \left[\frac{(1-Sa)In-A}{K_m}\right]^{\frac{1}{p}} - \left(\frac{SaIn-B}{K_M}\right)^{\frac{1}{m}}\left[\cos(H) + \frac{\sqrt{3}}{3}\sin(H)\right]$$

if $h = 2$,

$$X = \left(\frac{SaIn-B}{K_M}\right)^{\frac{1}{m}}\left[\cos(H) - \frac{\sqrt{3}}{3}\sin(H)\right] + \left[\frac{(1-Sa)In-A}{K_m}\right]^{\frac{1}{p}}, Y = \left[\frac{(1-Sa)In-A}{K_m}\right]^{\frac{1}{p}}, Z = \left[\frac{(1-Sa)In-A}{K_m}\right]^{\frac{1}{p}} - \frac{2\sqrt{3}}{3}\sin(H)\left(\frac{SaIn-B}{K_M}\right)^{\frac{1}{m}}$$

or if the saturation Sa and the intensity In in the color data in the HSaIn format at the input device side are acquired according to the formulae below,

$$Gl = K_m Min(X,Y,Z)^r + A, \quad In = K_M \left[ X^p + Y^p + Z^p \right]^{\frac{1}{q}} + B, \quad Cl = In - Gl, \quad Sa = \frac{Cl}{In}$$

$K_m$ and $K_M$ are positive real numbers, $K_M > K_m > 0$, $p$, $q$ and $r$ are nonzero real numbers, $In \geq Gl \geq 0, A \geq 0, B \geq 0$

acquiring the color data in the XYZ format at the output device side according to the following formulae:

$$Gl = K_m Min(X,Y,Z)^r + A, \quad In = K_M \left[ X^p + Y^p + Z^p \right]^{\frac{1}{q}} + B, \quad Cl = In - Gl, \quad Sa = \frac{Cl}{In}$$

$K_m$ and $K_M$ are positive real numbers,

$$h = [\frac{H}{120^\circ}], \quad [\bullet] \text{ is a round symbol with respect to } \bullet, \quad H \in [0^\circ, 360^\circ), h = 0, 1, 2$$

if $h = 0$,

then $Z = \left[\dfrac{In(1-Sa)-A}{K_m}\right]^{\frac{1}{r}}$

$$\left[\frac{\sin(120^\circ - H)}{\sin H}Y + \frac{\sin H - \sin(120^\circ - H)}{\sin H}\left[\frac{In(1-Sa)-A}{K_m}\right]^{\frac{1}{r}}\right]^p + Y^p = \left(\frac{In-B}{K_M}\right)^q - \left[\frac{In(1-Sa)-A}{K_m}\right]^{\frac{p}{r}}$$

$$X = \frac{\sin(120^\circ - H)}{\sin H}Y + \frac{\sin H - \sin(120^\circ - H)}{\sin H}\left[\frac{In(1-Sa)-A}{K_m}\right]^{\frac{1}{r}}$$

the values of $X$ and $Y$ represented by $In, Sa, H, p, q$ and $r$ are obtained according to the specific values of $p, q$ and $r$, $X > Y \geq 0, Y > Z \geq 0$, $Z$ is a value satisfying the actual physical condition

if $h = 1$,

then $X = \left[\dfrac{In(1-Sa)-A}{K_m}\right]^{\frac{1}{r}}$

$$\left[\frac{\sin(H-120^\circ)}{\sin(240^\circ - H)}Y + \frac{\sin(240^\circ - H) - \sin(H-120^\circ)}{\sin(240^\circ - H)}\left[\frac{In(1-Sa)-A}{K_m}\right]^{\frac{1}{r}}\right]^p + Y^p = \left(\frac{In-B}{K_M}\right)^q - \left[\frac{In(1-Sa)-A}{K_m}\right]^{\frac{p}{r}}$$

$$Z = \frac{\sin(H-120^\circ)}{\sin(240^\circ - H)}Y + \frac{\sin(240^\circ - H) - \sin(H-120^\circ)}{\sin(240^\circ - H)}\left[\frac{In(1-Sa)-A}{K_m}\right]^{\frac{1}{r}}$$

the values of $X$ and $Y$ represented by $In, Sa, H, p, q$ and $r$ are obtained according to the specific values of $p, q$ and $r$, $X > Y \geq 0, Y > Z \geq 0$, $Z$ is a value satisfying the actual physical condition

if $h = 2$,

then $Y = \left[\dfrac{In(1-Sa)-A}{K_m}\right]^{\frac{1}{r}}$

$$\left[\frac{\sin(-H)}{\sin(H-240^\circ)}X + \frac{\sin(H-240^\circ) - \sin(-H)}{\sin(H-240^\circ)}\left[\frac{In(1-Sa)-A}{K_m}\right]^{\frac{1}{r}}\right]^p + X^p = \left(\frac{In-B}{K_M}\right)^q - \left[\frac{In(1-Sa)-A}{K_m}\right]^{\frac{p}{r}}$$

$$Z = \frac{\sin(-H)}{\sin(H-240^\circ)}X + \frac{\sin(H-240^\circ) - \sin(-H)}{\sin(H-240^\circ)}\left[\frac{In(1-Sa)-A}{K_m}\right]^{\frac{1}{r}}$$

the values of $X$ and $Y$ represented by $In, Sa, H, p, q$ and $r$ are obtained according to the specific values of $p, q$ and $r$, $X > Y \geq 0, Y > Z \geq 0$, $Z$ is a value satisfying the actual physical condition

or if the saturation Sa and the intensity In in the color data in the HSaIn format at the input device side are acquired according to the formulae below,

$$Gl = K_m Min(X,Y,Z)^r + A, \quad Cl = K_M \left[ (X-Gl)^p + (Y-Gl)^p + (Z-Gl)^p \right]^{\frac{1}{q}} + B, \quad In = Cl + Gl, \quad Sa = \frac{Cl}{In}$$

$K_m$ and $K_M$ are positive real numbers, $p$, $q$ and $r$ are nonzero real numbers, $In \geq Gl \geq 0, A \geq 0, B \geq 0$

acquiring the color data in the XYZ format at the output device side according to the following formulae:

$$h = [\frac{H}{120^\circ}], \quad [\bullet] \text{ is a round symbol with respect to } \bullet, \quad H \in [0^\circ, 360^\circ), h = 0,1,2$$

if $h = 0$,

$$X = \frac{\left(\frac{InSa-B}{K_M}\right)^{\frac{q}{p}} \sin(120^\circ - H)}{\left[\sin^p(120^\circ - H) + \sin^p(H)\right]^{\frac{1}{p}}} + \left[\frac{In(1-Sa)-A}{K_m}\right]^{\frac{1}{r}}, Y = \frac{\left(\frac{InSa-B}{K_M}\right)^{\frac{q}{p}} \sin(H)}{\left[\sin^p(H) + \sin^p(120^\circ - H)\right]^{\frac{1}{p}}} + \left[\frac{In(1-Sa)-A}{K_m}\right]^{\frac{1}{r}}, Z = \left[\frac{In(1-Sa)-A}{K_m}\right]^{\frac{1}{r}}$$

if $h = 1$,

$$X = \left[\frac{In(1-Sa)-A}{K_m}\right]^{\frac{1}{r}}, Y = \frac{\left(\frac{InSa-B}{K_M}\right)^{\frac{q}{p}} \sin(240^\circ - H)}{\left[\sin^p(H-120^\circ) + \sin^p(240^\circ - H)\right]^{\frac{1}{p}}} + \left[\frac{In(1-Sa)-A}{K_m}\right]^{\frac{1}{r}}, Z = \frac{\left(\frac{InSa-B}{K_M}\right)^{\frac{q}{p}} \sin(H-120^\circ)}{\left[\sin^p(H-120^\circ) + \sin^p(240^\circ - H)\right]^{\frac{1}{p}}} + \left[\frac{In(1-Sa)-A}{K_m}\right]^{\frac{1}{r}}$$

if $h = 2$,

$$X = \frac{\left(\frac{InSa-B}{K_M}\right)^{\frac{q}{p}} \sin(H-240^\circ)}{\left[\sin^p(-H) + \sin^p(H-240^\circ)\right]^{\frac{1}{p}}} + \left[\frac{In(1-Sa)-A}{K_m}\right]^{\frac{1}{r}}, Y = \left[\frac{In(1-Sa)-A}{K_m}\right]^{\frac{1}{r}}, Z = \frac{\left(\frac{InSa-B}{K_M}\right)^{\frac{q}{p}} \sin(-H)}{\left[\sin^p(H-240^\circ) + \sin^p(-H)\right]^{\frac{1}{p}}} + \left[\frac{In(1-Sa)-A}{K_m}\right]^{\frac{1}{r}}$$

**28.** The method according to claim 27, further comprising converting the color data in the XYZ format in the CIEXYZ color appearance color space at the output side into color data in an image format in the color space of the output device;

acquiring the hue deviation angles $\alpha a, \beta_a, \gamma_a$ of $R_a'$, $G_a'$ and $B_a'$ relative to $\vec{i}$, $\vec{j}$ and $\vec{k}$ respectively using spectrum characteristic data of $R_a'$, $G_a'$ and $B_a'$, and converting color appearance color data $X_a$, $Y_a$, $Z_a$ into color appearance color data $R_a'$, $G_a'$, $B_a'$ according to the following formulae 71-78:

$$\begin{bmatrix} R_a' \\ G_a' \\ B_a' \end{bmatrix} = \begin{bmatrix} \frac{\sin(120^0 - \alpha_a)}{\sin(60^0)} & 0 & \frac{\sin(\gamma_a)}{\sin(60^0)} \\ \frac{\sin(\alpha_a)}{\sin(60^0)} & \frac{\sin(120^0 - \beta_a)}{\sin(60^0)} & 0 \\ 0 & \frac{\sin(\beta_a)}{\sin(60^0)} & \frac{\sin(120^0 - \gamma_a)}{\sin(60^0)} \end{bmatrix}^{-1} \times \begin{bmatrix} X_a \\ Y_a \\ Z_a \end{bmatrix} \quad \text{(Formula 71)}$$

in Formula 71, $\alpha_a > 0$, $\beta_a > 0$, $\gamma_a > 0$;

$$
\begin{bmatrix} R_a^{'} \\ G_a^{'} \\ B_a^{'} \end{bmatrix} = \begin{bmatrix} \dfrac{\sin(120^{\circ} - \alpha_a)}{\sin(60^{\circ})} & 0 & 0 \\[3mm] \dfrac{\sin(\alpha_a)}{\sin(60^{\circ})} & \dfrac{\sin(120^{\circ} - \beta_a)}{\sin(60^{\circ})} & \dfrac{\sin(-\gamma_a)}{\sin(60^{\circ})} \\[3mm] 0 & \dfrac{\sin(\beta_a)}{\sin(60^{\circ})} & \dfrac{\sin(120^{\circ} + \gamma_a)}{\sin(60^{\circ})} \end{bmatrix}^{-1} \times \begin{bmatrix} X_a \\ Y_a \\ Z_a \end{bmatrix}
$$

(Formula 72)

in Formula 72, $\alpha_a > 0$, $\beta_a > 0$, $\gamma_a < 0$;

$$
\begin{bmatrix} R_a^{'} \\ G_a^{'} \\ B_a^{'} \end{bmatrix} = \begin{bmatrix} \dfrac{\sin(120^{\circ} - \alpha_a)}{\sin(60^{\circ})} & \dfrac{\sin(-\beta_a)}{\sin(60^{\circ})} & \dfrac{\sin(\gamma_a)}{\sin(60^{\circ})} \\[3mm] \dfrac{\sin(\alpha_a)}{\sin(60^{\circ})} & \dfrac{\sin(120^{\circ} + \beta_a)}{\sin(60^{\circ})} & 0 \\[3mm] 0 & 0 & \dfrac{\sin(120^{\circ} - \gamma_a)}{\sin(60^{\circ})} \end{bmatrix}^{-1} \times \begin{bmatrix} X_a \\ Y_a \\ Z_a \end{bmatrix}
$$

(Formula 73)

in Formula 73, $\alpha_a > 0$, $\beta_a < 0$, $\gamma_a > 0$;

$$
\begin{bmatrix} R_a^{'} \\ G_a^{'} \\ B_a^{'} \end{bmatrix} = \begin{bmatrix} \dfrac{\sin(120^{\circ} - \alpha_a)}{\sin(60^{\circ})} & \dfrac{\sin(-\beta_a)}{\sin(60^{\circ})} & 0 \\[3mm] \dfrac{\sin(\alpha_a)}{\sin(60^{\circ})} & \dfrac{\sin(120^{\circ} + \beta_a)}{\sin(60^{\circ})} & \dfrac{\sin(-\gamma_a)}{\sin(60^{\circ})} \\[3mm] 0 & 0 & \dfrac{\sin(120^{\circ} + \gamma_a)}{\sin(60^{\circ})} \end{bmatrix}^{-1} \times \begin{bmatrix} X_a \\ Y_a \\ Z_a \end{bmatrix}
$$

(Formula 74)

in Formula 74, $\alpha_a > 0$, $\beta_a < 0$, $\gamma_a < 0$;

$$
\begin{bmatrix} R_a^{'} \\ G_a^{'} \\ B_a^{'} \end{bmatrix} = \begin{bmatrix} \dfrac{\sin(120^{\circ} + \alpha_a)}{\sin(60^{\circ})} & 0 & \dfrac{\sin(\gamma_a)}{\sin(60^{\circ})} \\[3mm] 0 & \dfrac{\sin(120^{\circ} - \beta_a)}{\sin(60^{\circ})} & 0 \\[3mm] \dfrac{\sin(-\alpha_a)}{\sin(60^{\circ})} & \dfrac{\sin(\beta_a)}{\sin(60^{\circ})} & \dfrac{\sin(120^{\circ} - \gamma_a)}{\sin(60^{\circ})} \end{bmatrix}^{-1} \times \begin{bmatrix} X_a \\ Y_a \\ Z_a \end{bmatrix}
$$

(Formula 75)

in Formula 75, $\alpha_a < 0$, $\beta_a > 0$, $\gamma_a > 0$;

$$\begin{bmatrix} R_a^{'} \\ G_a^{'} \\ B_a^{'} \end{bmatrix} = \begin{bmatrix} \dfrac{\sin(120^0 + \alpha_a)}{\sin(60^0)} & 0 & 0 \\ 0 & \dfrac{\sin(120^0 - \beta_a)}{\sin(60^0)} & \dfrac{\sin(-\gamma_a)}{\sin(60^0)} \\ \dfrac{\sin(-\alpha_a)}{\sin(60^0)} & \dfrac{\sin(\beta_a)}{\sin(60^0)} & \dfrac{\sin(120^0 + \gamma_a)}{\sin(60^0)} \end{bmatrix}^{-1} \times \begin{bmatrix} X_a \\ Y_a \\ Z_a \end{bmatrix}$$

(Formula 76)

in Formula 76, $\alpha_a < 0$, $\beta_a > 0$, $\gamma_a < 0$;

$$\begin{bmatrix} R_a^{'} \\ G_a^{'} \\ B_a^{'} \end{bmatrix} = \begin{bmatrix} \dfrac{\sin(120^0 + \alpha_a)}{\sin(60^0)} & \dfrac{\sin(-\beta_a)}{\sin(60^0)} & \dfrac{\sin(\gamma_a)}{\sin(60^0)} \\ 0 & \dfrac{\sin(120^0 + \beta_a)}{\sin(60^0)} & 0 \\ \dfrac{\sin(-\alpha_a)}{\sin(60^0)} & 0 & \dfrac{\sin(120^0 - \gamma_a)}{\sin(60^0)} \end{bmatrix}^{-1} \times \begin{bmatrix} X_a \\ Y_a \\ Z_a \end{bmatrix}$$

(Formula 77)

in Formula 77, $\alpha_a > 0$, $\beta_a < 0$, $y_a > 0$;

$$\begin{bmatrix} R_a^{'} \\ G_a^{'} \\ B_a^{'} \end{bmatrix} = \begin{bmatrix} \dfrac{\sin(120^0 + \alpha_a)}{\sin(60^0)} & \dfrac{\sin(-\beta_a)}{\sin(60^0)} & 0 \\ 0 & \dfrac{\sin(120^0 + \beta_a)}{\sin(60^0)} & \dfrac{\sin(-\gamma_a)}{\sin(60^0)} \\ \dfrac{\sin(-\alpha_a)}{\sin(60^0)} & 0 & \dfrac{\sin(120^0 + \gamma_a)}{\sin(60^0)} \end{bmatrix}^{-1} \times \begin{bmatrix} X_a \\ Y_a \\ Z_a \end{bmatrix}$$

(Formula 78)

in Formula 78, $\alpha_a < 0$, $\beta_a < 0$, $\gamma_a < 0$;

wherein in Formulae 71-78, $\alpha_a$ is a hue deviation angle between $\vec{R_a^{'}}$ and $\vec{i}$; $\beta_a$ is a hue deviation angle between $\vec{G_a^{'}}$ and $\vec{j}$; $\gamma_a$ is a hue deviation angle between $\vec{B_a^{'}}$ and $\vec{k}$, the values of $R_a$', $G_a$' and $B_a$' are color appearance color data in combination with an observation condition obtained after the conversion; the values of $X_a$, $Y_a$ and $Z_a$ in the formulae 71-78 are the color data in the XYZ format in the CIEXYZ color appearance color space; $\vec{R_a^{'}}$, $\vec{G_a^{'}}$ and $\vec{B_a^{'}}$ are the color appearance color data in combination with the observation condition to represent chromatic vectors within the chromatic plane.

29. The method according to claim 28, further comprising:

the format of the color data in the color space of the output device being a UVW format;
converting the acquired color data in the XYZ format at the output device side into color data in an image format in the color space of the output device according to color characteristic data of the output device, which comprises:

converting the color data in the XYZ format at the output device side into color data in a UVW format according to the following formulae 21-28:

$$\begin{bmatrix} U_2 \\ V_2 \\ W_2 \end{bmatrix} = \begin{bmatrix} \dfrac{\sin(120^\circ - \alpha_2)}{\sin(60^\circ)} & 0 & \dfrac{\sin(\gamma_2)}{\sin(60^\circ)} \\ \dfrac{\sin(\alpha_2)}{\sin(60^\circ)} & \dfrac{\sin(120^\circ - \beta_2)}{\sin(60^\circ)} & 0 \\ 0 & \dfrac{\sin(\beta_2)}{\sin(60^\circ)} & \dfrac{\sin(120^\circ - \gamma_2)}{\sin(60^\circ)} \end{bmatrix}^{-1} \times \begin{bmatrix} X \\ Y \\ Z \end{bmatrix}$$

(Formula 21)

in Formula 21, $\alpha_2 > 0$, $\beta_2 > 0$, $\gamma_2 > 0$;

$$\begin{bmatrix} U_2 \\ V_2 \\ W_2 \end{bmatrix} = \begin{bmatrix} \dfrac{\sin(120^\circ - \alpha_2)}{\sin(60^\circ)} & 0 & 0 \\ \dfrac{\sin(\alpha_2)}{\sin(60^\circ)} & \dfrac{\sin(120^\circ - \beta_2)}{\sin(60^\circ)} & \dfrac{\sin(-\gamma_2)}{\sin(60^\circ)} \\ 0 & \dfrac{\sin(\beta_2)}{\sin(60^\circ)} & \dfrac{\sin(120^\circ + \gamma_2)}{\sin(60^\circ)} \end{bmatrix}^{-1} \times \begin{bmatrix} X \\ Y \\ Z \end{bmatrix}$$

(Formula 22)

in Formula 22, $\alpha_2 > 0$, $\beta_2 > 0$, $\gamma_2 < 0$;

$$\begin{bmatrix} U_2 \\ V_2 \\ W_2 \end{bmatrix} = \begin{bmatrix} \dfrac{\sin(120^\circ - \alpha_2)}{\sin(60^\circ)} & \dfrac{\sin(-\beta_2)}{\sin(60^\circ)} & \dfrac{\sin(\gamma_2)}{\sin(60^\circ)} \\ \dfrac{\sin(\alpha_2)}{\sin(60^\circ)} & \dfrac{\sin(120^\circ + \beta_2)}{\sin(60^\circ)} & 0 \\ 0 & 0 & \dfrac{\sin(120^\circ - \gamma_2)}{\sin(60^\circ)} \end{bmatrix}^{-1} \times \begin{bmatrix} X \\ Y \\ Z \end{bmatrix}$$

(Formula 23)

in Formula 23, $\alpha_2 > 0$, $\beta_2 < 0$, $\gamma_2 > 0$;

$$\begin{bmatrix} U_2 \\ V_2 \\ W_2 \end{bmatrix} = \begin{bmatrix} \dfrac{\sin(120^\circ - \alpha_2)}{\sin(60^\circ)} & \dfrac{\sin(-\beta_2)}{\sin(60^\circ)} & 0 \\ \dfrac{\sin(\alpha_2)}{\sin(60^\circ)} & \dfrac{\sin(120^\circ + \beta_2)}{\sin(60^\circ)} & \dfrac{\sin(-\gamma_2)}{\sin(60^\circ)} \\ 0 & 0 & \dfrac{\sin(120^\circ + \gamma_2)}{\sin(60^\circ)} \end{bmatrix}^{-1} \times \begin{bmatrix} X \\ Y \\ Z \end{bmatrix}$$

(Formula 24)

in Formula 24, $\alpha_2 > 0$, $\beta_2 < 0$, $\gamma_2 < 0$;

$$\begin{bmatrix} U_2 \\ V_2 \\ W_2 \end{bmatrix} = \begin{bmatrix} \dfrac{\sin(120^0 + \alpha_2)}{\sin(60^0)} & 0 & \dfrac{\sin(\gamma_2)}{\sin(60^0)} \\ 0 & \dfrac{\sin(120^0 - \beta_2)}{\sin(60^0)} & 0 \\ \dfrac{\sin(-\alpha_2)}{\sin(60^0)} & \dfrac{\sin(\beta_2)}{\sin(60^0)} & \dfrac{\sin(120^0 - \gamma_2)}{\sin(60^0)} \end{bmatrix}^{-1} \times \begin{bmatrix} X \\ Y \\ Z \end{bmatrix}$$

(Formula 25)

in Formula 25, $\alpha_2 > 0$, $\beta_2 > 0$, $\gamma_2 > 0$;

$$\begin{bmatrix} U_2 \\ V_2 \\ W_2 \end{bmatrix} = \begin{bmatrix} \dfrac{\sin(120^0 + \alpha_2)}{\sin(60^0)} & 0 & 0 \\ 0 & \dfrac{\sin(120^0 - \beta_2)}{\sin(60^0)} & \dfrac{\sin(-\gamma_2)}{\sin(60^0)} \\ \dfrac{\sin(-\alpha_2)}{\sin(60^0)} & \dfrac{\sin(\beta_2)}{\sin(60^0)} & \dfrac{\sin(120^0 + \gamma_2)}{\sin(60^0)} \end{bmatrix}^{-1} \times \begin{bmatrix} X \\ Y \\ Z \end{bmatrix}$$

(Formula 26)

in Formula 26, $\alpha_2 < 0$, $\beta_2 > 0$, $\gamma_2 < 0$;

$$\begin{bmatrix} U_2 \\ V_2 \\ W_2 \end{bmatrix} = \begin{bmatrix} \dfrac{\sin(120^0 + \alpha_2)}{\sin(60^0)} & \dfrac{\sin(-\beta_2)}{\sin(60^0)} & \dfrac{\sin(\gamma_2)}{\sin(60^0)} \\ 0 & \dfrac{\sin(120^0 + \beta_2)}{\sin(60^0)} & 0 \\ \dfrac{\sin(-\alpha_2)}{\sin(60^0)} & 0 & \dfrac{\sin(120^0 - \gamma_2)}{\sin(60^0)} \end{bmatrix}^{-1} \times \begin{bmatrix} X \\ Y \\ Z \end{bmatrix}$$

(Formula 27)

in Formula 27, $\alpha_2 > 0$, $\beta_2 < 0$, $\gamma_2 > 0$;

$$\begin{bmatrix} U_2 \\ V_2 \\ W_2 \end{bmatrix} = \begin{bmatrix} \dfrac{\sin(120^0 + \alpha_2)}{\sin(60^0)} & \dfrac{\sin(-\beta_2)}{\sin(60^0)} & 0 \\ 0 & \dfrac{\sin(120^0 + \beta_2)}{\sin(60^0)} & \dfrac{\sin(-\gamma_2)}{\sin(60^0)} \\ \dfrac{\sin(-\alpha_2)}{\sin(60^0)} & 0 & \dfrac{\sin(120^0 + \gamma_2)}{\sin(60^0)} \end{bmatrix}^{-1} \times \begin{bmatrix} X \\ Y \\ Z \end{bmatrix}$$

(Formula 28)

in Formula 28, $\alpha_2 < 0$, $\beta_2 < 0$, $\gamma_2 < 0$;

wherein in the formulae 21-28, $\alpha_2$ is a hue deviation angle between $\overrightarrow{U_2}$ and $\vec{i}$ ; $\beta_2$ is a hue deviation angle between $\vec{V_2}$ and $\vec{j}$ ; $\gamma_2$ is a hue deviation angle between $\overrightarrow{W_2}$ and $\vec{k}$, the values of $U_2$, $V_2$ and $W_2$ are the color data in the UVW format of the output device obtained after the conversion; the values of X, Y and Z in the formulae 21-28 are the color data in the XYZ format; $\overrightarrow{U_2}$, $\vec{V_2}$ and $\overrightarrow{W_2}$ are UVW channel color data of the output device to represent chromatic vectors within the chromatic plane.

30. The method according to claim 28, further comprising:

the format of the color data in the color space of the output device being a multichannel format;
converting the color data in the XYZ format at the output device side into color data in a multichannel format in the color space of the device;
obtaining the color data $C_1$, $C_2$, ..., $C_n$ in the multichannel format according to characterized hue data $\alpha_1$, $\alpha_2$, ..., $\alpha_n$ of the respective channels $C_1$, $C_2$, ..., $C_n$ in the color space of the multichannel device and a conversion relationship from predefined XYZ of the output device to chromatic vectors $\overline{C_1}, \overline{C_2}, \cdots, \overline{C_n}$ within the chromatic plane.

31. A method of managing color data based on color data in an HSaIn format in an HSaIn color appearance color space, comprising:

acquiring color data in an HSaIn format in an HSaIn color appearance color space at an output device side;
converting the color data in the HSaIn format in the HSaIn color appearance color space into color data in an XYZ format in a CIEXYZ color appearance color space at the output device side;
converting the color data in the XYZ format in the CIEXYZ color appearance color space into color image data in an XYZ format at the output device side;
wherein the HSaIn color appearance color space is a color space based on a CIEXYZ Cartesian color appearance color space, of a color appearance attribute, and described by a cylindrical coordinate system, and is composed of a chromatic plane and a gray axis passing through the origin of the chromatic plane and perpendicular to the chromatic plane;
wherein the chromatic plane is a plane of the CIEXYZ Cartesian color appearance color space X+Y+Z=K, where K is a real constant; an XYZ axis of the CIEXYZ Cartesian color appearance color space performs a projection along a direction of a straight line X=Y=Z on a plane X+Y+Z=K to obtain three projection axes that are 120° with respect to one another within the chromatic plane, and unit vectors in the directions of the projection axes are $\vec{i}$, $\vec{j}$ and $\vec{k}$;
wherein the gray axis is a number axis composed of the straight line X=Y=Z of the CIEXYZ Cartesian color appearance color space, a numerical value on the number axis represents a gray GI value in the HSaIn color appearance color space, a length of a chromatic vector parallel to the chromatic plane represents a chromatic CI value in the HSaIn color appearance color space, and a polar angle of the chromatic vector represents a hue angle H in the HSaIn color appearance color space;
wherein the color data in the HSaIn format is in a format of the color data in the HSaIn color appearance color space, and comprises a hue H, a saturation Sa, and an intensity In in the HSaIn color space.

32. The method according to claim 31, wherein the relationship between the hue H and the tristimulus values $X_a$, $Y_a$ and $Z_a$ in the CIEXYZ color appearance color space is as follows:

$$H = \begin{cases} \arccos\left( \dfrac{2X_a - Y_a - Z_a}{2\sqrt{(X_a - Y_a)^2 + (Y_a - Z_a)^2 + (X_a - Y_a)(Y_a - Z_a)}} \right), & Y_a \geq Z_a \\ 2\pi - \arccos\left( \dfrac{2X_a - Y_a - Z_a}{2\sqrt{(X_a - Y_a)^2 + (Y_a - Z_a)^2 + (X_a - Y_a)(Y_a - Z_a)}} \right), & Y_a < Z_a \\ \text{undefined}, & X_a = Y_a = Z_a \end{cases}$$

(Formula 2)

wherein the tristimulus values $X_a$, $Y_a$, $Z_a$ are the color data in the XYZ format, i.e., the color data in the CIEXYZ Cartesian color appearance color space, and respectively represent numerical values on the X, Y and Z coordinate axes in the CIEXYZ Cartesian color space.

33. The method according to claim 32, wherein the saturation Sa and the intensity In in the color data in the HSaIn format are respectively as follows:

$$Gl = K_m \left[ Min\left(X,Y,Z\right) \right]^p + A, \quad In = K_M \left[ Max\left(X,Y,Z\right) \right]^q + B, \quad Cl = In - Gl, \quad Sa = \frac{Cl}{In}$$

$K_m$ and $K_M$ are positive real numbers, $In \geq Gl \geq 0, A \geq 0, B \geq 0, p$ and $q$ are nonzero real numbers

or

$$Gl = K_m \left[ Min\left(X,Y,Z\right) \right]^p + A, \quad In = \frac{1}{3} K_M \left(X + Y + Z\right)^q + B, \quad Cl = In - Gl, \quad Sa = \frac{Cl}{In}$$

$K_m$ and $K_M$ are positive real numbers, $K_M > K_m, In \geq Gl \geq 0, A \geq 0, B \geq 0, p$ and $q$ are nonzero real numbers

or

$$Gl = K_m Min(X,Y,Z)^p + A, \quad In = \frac{1}{2} K_M \left[ Max(X,Y,Z) + Min(X,Y,Z) \right]^q + B, \quad Cl = In - Gl, \quad Sa = \frac{Cl}{In}$$

$K_m$ and $K_M$ are positive real numbers, $K_M > K_m, In \geq Gl \geq 0, A \geq 0, B \geq 0, p$ and $q$ are nonzero real numbers

or

$$Gl = K_m Min(X,Y,Z)^p + A, \quad Cl = K_M \left| X\vec{i} + Y\vec{j} + Z\vec{k} \right|^m + B, \quad In = Gl + Cl, \quad Sa = \frac{Cl}{In}$$

$K_m$ and $K_M$ are positive real numbers, $p$ and $m$ are nonzero real numbers, $In \geq Gl \geq 0, A \geq 0, B \geq 0$

or

$$Gl = K_m Min(X,Y,Z)^r + A, \quad In = K_M \left[ X^p + Y^p + Z^p \right]^{\frac{1}{q}} + B, \quad Cl = In - Gl, \quad Sa = \frac{Cl}{In}$$

$K_m$ and $K_M$ are positive real numbers, $K_M > K_m > 0, p, q$ and $r$ are nonzero real numbers, $In \geq Gl \geq 0, A \geq 0, B \geq 0$

$$Gl = K_m Min(X,Y,Z)^r + A, \quad Cl = K_M \left[ (X - Gl)^p + (Y - Gl)^p + (Z - Gl)^p \right]^{\frac{1}{q}} + B, \quad In = Cl + Gl, \quad Sa = \frac{Cl}{In}$$

$K_m$ and $K_M$ are positive real numbers, $K_M > K_m > 0, p, q$ and $r$ are nonzero real numbers, $In \geq Gl \geq 0, A \geq 0, B \geq 0$

**34.** The method according to claim 33, wherein converting the color data in the HSaIn format in the HSaIn color appearance color space into color data in an XYZ format in an XYZ color appearance color space at the output device side comprises:

if the saturation Sa and the intensity In in the color data in the HSaIn format in the HSaIn color appearance color space at the input device are acquired according to the formulae below,

$$Gl = K_m \left[ Min\left(X,Y,Z\right) \right]^p + A, \quad In = K_M \left[ Max\left(X,Y,Z\right) \right]^q + B, \quad Cl = In - Gl, \quad Sa = \frac{Cl}{In}$$

$K_m$ and $K_M$ are positive real numbers, $In \geq Gl \geq 0, A \geq 0, B \geq 0, p$ and $q$ are nonzero real numbers acquiring the color data in the XYZ format at the output device side according to the following formulae:

$$
\begin{cases}
H' = \dfrac{H}{60^\circ}, h = \left[ H' \right], \left[ \bullet \right] \text{ is a round symbol with respect to } \bullet, \ H \in [0^\circ, 360^\circ), h = 0,1,2,3,4,5 \\[4mm]
X = \left( \dfrac{In - B}{K_M} \right)^{\frac{1}{q}}, Y = \left( \dfrac{In - B}{K_M} \right)^{\frac{1}{q}} \dfrac{\sin H}{\sin(120^\circ - H)} + \left( \dfrac{In(1-Sa)-A}{K_m} \right)^{\frac{1}{p}} \dfrac{\sin(120^\circ - H) - \sin H}{\sin(120^\circ - H)}, Z = \left( \dfrac{In(1-Sa)-A}{K_m} \right)^{\frac{1}{p}}, \quad & h = 0 \\[4mm]
X = \left( \dfrac{In - B}{K_M} \right)^{\frac{1}{q}} \dfrac{\sin(120^\circ - H)}{\sin H} + \left( \dfrac{In(1-Sa)-A}{K_m} \right)^{\frac{1}{p}} \dfrac{\sin H - \sin(120^\circ - H)}{\sin H}, Y = \left( \dfrac{In - B}{K_M} \right)^{\frac{1}{q}}, Z = \left( \dfrac{In(1-Sa)-A}{K_m} \right)^{\frac{1}{p}}, \quad & h = 1 \\[4mm]
X = \left( \dfrac{In(1-Sa)-A}{K_m} \right)^{\frac{1}{p}}, Y = \left( \dfrac{In - B}{K_M} \right)^{\frac{1}{q}}, Z = \left( \dfrac{In - B}{K_M} \right)^{\frac{1}{q}} \dfrac{\sin(H - 120^\circ)}{\sin(240^\circ - H)} + \left( \dfrac{In(1-Sa)-A}{K_m} \right)^{\frac{1}{p}} \dfrac{\sin(240^\circ - H) - \sin(H - 120^\circ)}{\sin(240^\circ - H)}, \quad & h = 2 \\[4mm]
X = \left( \dfrac{In(1-Sa)-A}{K_m} \right)^{\frac{1}{p}}, Y = \left( \dfrac{In - B}{K_M} \right)^{\frac{1}{q}} \dfrac{\sin(240^\circ - H)}{\sin(H - 120^\circ)} + \left( \dfrac{In(1-Sa)-A}{K_m} \right)^{\frac{1}{p}} \dfrac{\sin(H - 120^\circ) - \sin(240^\circ - H)}{\sin(H - 120^\circ)}, Z = \left( \dfrac{In - B}{K_M} \right)^{\frac{1}{q}}, \quad & h = 3 \\[4mm]
X = \left( \dfrac{In - B}{K_M} \right)^{\frac{1}{q}} \dfrac{\sin(H - 240^\circ)}{\sin(-H)} + \left( \dfrac{In(1-Sa)-A}{K_m} \right)^{\frac{1}{p}} \dfrac{\sin(-H) - \sin(H - 240^\circ)}{\sin(-H)}, Y = \left( \dfrac{In(1-Sa)-A}{K_m} \right)^{\frac{1}{p}}, Z = \left( \dfrac{In - B}{K_M} \right)^{\frac{1}{q}}, \quad & h = 4 \\[4mm]
X = \left( \dfrac{In - B}{K_M} \right)^{\frac{1}{q}}, Y = \left( \dfrac{In(1-Sa)-A}{K_m} \right)^{\frac{1}{p}}, Z = \left( \dfrac{In - B}{K_M} \right)^{\frac{1}{q}} \dfrac{\sin(-H)}{\sin(H - 240^\circ)} + \left( \dfrac{In(1-Sa)-A}{K_m} \right)^{\frac{1}{p}} \dfrac{\sin(H - 240^\circ) - \sin(-H)}{\sin(H - 240^\circ)}, \quad & h = 5
\end{cases}
$$

or if the saturation Sa and the intensity In in the color data in the HSaIn format at the input device side are acquired according to the formulae below,

$$
Gl = K_m \left[ Min(X, Y, Z) \right]^p + A, \quad In = \frac{1}{3} K_M (X + Y + Z)^q + B, \quad Cl = In - Gl, \quad Sa = \frac{Cl}{In}
$$

$K_m$ and $K_M$ are positive real numbers, $K_M > K_m$, $In \geq Gl \geq 0, A \geq 0, B \geq 0$, $p$ and $q$ are nonzero real numbers acquiring the color data in the XYZ format at the output device side according to the following formulae:

when $0^\circ \leq H < 120^\circ$

$$
X = \left[ \frac{3In - B}{K_M} \right]^{\frac{1}{q}} \frac{\sin(120^\circ - H)}{\sin(H) + \sin(120^\circ - H)} - \left[ \frac{In(1 - Sa) - A}{K_m} \right]^{\frac{1}{p}} \frac{2\sin(120^\circ - H) - \sin(H)}{\sin(H) + \sin(120^\circ - H)}
$$

$$
Y = \left[ \frac{3In - B}{K_M} \right]^{\frac{1}{q}} \frac{\sin(H)}{\sin(H) + \sin(120^\circ - H)} - \left[ \frac{In(1 - Sa) - A}{K_m} \right]^{\frac{1}{p}} \frac{2\sin(H) - \sin(120^\circ - H)}{\sin(H) + \sin(120^\circ - H)}
$$

$$
Z = \left[ \frac{In(1 - Sa) - A}{K_m} \right]^{\frac{1}{p}}
$$

**EP 2 830 314 A1**

when $120° \leq H < 240°$

$$X = \left[ \frac{In(1-Sa)-A}{K_m} \right]^{\frac{1}{p}},$$

$$Y = \left[ \frac{3In-B}{K_M} \right]^{\frac{1}{q}} \frac{\sin(240°-H)}{\sin(H-120°)+\sin(240°-H)} - \left[ \frac{In(1-Sa)-A}{K_m} \right]^{\frac{1}{p}} \frac{2\sin(240°-H)-\sin(H-120°)}{\sin(H-120°)+\sin(240°-H)}$$

$$Z = \left[ \frac{3In-B}{K_M} \right]^{\frac{1}{q}} \frac{\sin(H-120°)}{\sin(H-120°)+\sin(240°-H)} - \left[ \frac{In(1-Sa)-A}{K_m} \right]^{\frac{1}{p}} \frac{2\sin(H-120°)-\sin(240°-H)}{\sin(H-120°)+\sin(240°-H)}$$

when $240° \leq H < 360°$

$$X = \left[ \frac{3In-B}{K_M} \right]^{\frac{1}{q}} \frac{\sin(H-240°)}{\sin(H-240°)+\sin(-H)} - \left[ \frac{In(1-Sa)-A}{K_m} \right]^{\frac{1}{p}} \frac{2\sin(H-240°)-\sin(-H)}{\sin(H-240°)+\sin(-H)}$$

$$Y = \left[ \frac{In(1-Sa)-A}{K_m} \right]^{\frac{1}{p}}$$

$$Z = \left[ \frac{3In-B}{K_M} \right]^{\frac{1}{q}} \frac{\sin(-H)}{\sin(H-240°)+\sin(-H)} - \left[ \frac{In(1-Sa)-A}{K_m} \right]^{\frac{1}{p}} \frac{2\sin(-H)-\sin(H-240°)}{\sin(H-240°)+\sin(-H)}$$

or if the saturation Sa and the intensity In in the color data in the HSaIn format at the input device side are acquired according to the formulae below,

$$Gl = K_m Min(X,Y,Z)^p + A, \quad In = \frac{1}{2}K_M \left[ Max(X,Y,Z) + Min(X,Y,Z) \right]^q + B, \quad Cl = In - Gl, \quad Sa = \frac{Cl}{In}$$

$K_m$ and $K_M$ are positive real numbers, $K_M > K_m$, $In \geq Gl \geq 0$, $A \geq 0$, $B \geq 0$, $p$ and $q$ are nonzero real numbers acquiring the color data in the XYZ format at the output device side according to the following formulae:

75

$$H' = \frac{H}{60^\circ}, h = [H'], [\bullet] \text{ is a round symbol with respect to } \bullet, \ H \in [0, 360^\circ), h = 0,1,2,3,4,5$$

$$X = \left[2\frac{In-B}{K_M}\right]^{\frac{1}{q}} - \left[\frac{In(1-Sa)-A}{K_m}\right]^{\frac{1}{p}}, Y = \left[2\frac{In-B}{K_M}\right]^{\frac{1}{q}}\frac{\sin H}{\sin(120^\circ-H)} + \left[\frac{In(1-Sa)-A}{K_m}\right]^{\frac{1}{p}}\frac{\sin(120^\circ-H)-2\sin H}{\sin(120^\circ-H)}, Z = \left[\frac{In(1-Sa)-A}{K_m}\right]^{\frac{1}{p}}, \qquad h=0$$

$$X = \left[2\frac{In-B}{K_M}\right]^{\frac{1}{q}}\frac{\sin(120^\circ-H)}{\sin H} + \left[\frac{In(1-Sa)-A}{K_m}\right]^{\frac{1}{p}}\frac{\sin H-2\sin(120^\circ-H)}{\sin H}, Y = \left[2\frac{In-B}{K_M}\right]^{\frac{1}{q}} - \left[\frac{In(1-Sa)-A}{K_m}\right]^{\frac{1}{p}}, Z = \left[\frac{In(1-Sa)-A}{K_m}\right]^{\frac{1}{p}}, \qquad h=1$$

$$X = \left[\frac{In(1-Sa)-A}{K_m}\right]^{\frac{1}{p}}, Y = \left[2\frac{In-B}{K_M}\right]^{\frac{1}{q}} - \left[\frac{In(1-Sa)-A}{K_m}\right]^{\frac{1}{p}}, Z = 2\left[\frac{In-B}{K_M}\right]^{\frac{1}{q}}\frac{\sin(H-120^\circ)}{\sin(240^\circ-H)} + \left[\frac{In(1-Sa)-A}{K_m}\right]^{\frac{1}{p}}\frac{\sin(240^\circ-H)-2\sin(H-120^\circ)}{\sin(240^\circ-H)}, \quad h=2$$

$$X = \left[\frac{In(1-Sa)-A}{K_m}\right]^{\frac{1}{p}}, Y = 2\left[\frac{In-B}{K_M}\right]^{\frac{1}{q}}\frac{\sin(240^\circ-H)}{\sin(H-120^\circ)} + \left[\frac{In(1-Sa)-A}{K_m}\right]^{\frac{1}{p}}\frac{\sin(H-120^\circ)-2\sin(240^\circ-H)}{\sin(H-120^\circ)}, Z = 2\left[\frac{In-B}{K_M}\right]^{\frac{1}{q}} - \left[\frac{In(1-Sa)-A}{K_m}\right]^{\frac{1}{p}}, \quad h=3$$

$$X = 2\left[\frac{In-B}{K_M}\right]^{\frac{1}{q}}\frac{\sin(H-240^\circ)}{\sin(-H)} + \left[\frac{In(1-Sa)-A}{K_m}\right]^{\frac{1}{p}}\frac{\sin(-H)-2\sin(H-240^\circ)}{\sin(-H)}, Y = \left[\frac{In(1-Sa)-A}{K_m}\right]^{\frac{1}{p}}, Z = 2\left[\frac{In-B}{K_M}\right]^{\frac{1}{q}} - \left[\frac{In(1-Sa)-A}{K_m}\right]^{\frac{1}{p}}, \qquad h=4$$

$$X = 2\left[\frac{In-B}{K_M}\right]^{\frac{1}{q}} - \left[\frac{In(1-Sa)-A}{K_m}\right]^{\frac{1}{p}}, Y = \left[\frac{In(1-Sa)-A}{K_m}\right]^{\frac{1}{p}}, Z = 2\left[\frac{In-B}{K_M}\right]^{\frac{1}{q}}\frac{\sin(-H)}{\sin(H-240^\circ)} + \left[\frac{In(1-Sa)-A}{K_m}\right]^{\frac{1}{p}}\frac{\sin(H-240^\circ)-2\sin(-H)}{\sin(H-240^\circ)}, \qquad h=5$$

or if the saturation Sa and the intensity In in the color data in the HSaIn format at the input device side are acquired according to the formulae below,

$$Gl = K_m Min(X,Y,Z)^p + A, \qquad Cl = K_M\left|X\vec{i}+Y\vec{j}+Z\vec{k}\right|^m + B, \quad In = Gl + Cl, \quad Sa = \frac{Cl}{In}$$

$K_m$ and $K_M$ are positive real numbers, $p$ and $m$ are nonzero real numbers, $In \geq Gl \geq 0, A \geq 0, B \geq 0$

acquiring the color data in the XYZ format at the output device side according to the following formulae:

$$h = [\frac{H}{120^\circ}], \quad [\bullet] \text{ is a round symbol with respect to } \bullet, \ H \in [0^\circ, 360^\circ), h = 0,1,2$$

if $h = 0$,

$$X = \left(\frac{SaIn-B}{K_M}\right)^{\frac{1}{m}}\left[\cos(H)+\frac{\sqrt{3}}{3}\sin(H)\right] + \left[\frac{(1-Sa)In-A}{K_m}\right]^{\frac{1}{p}}, Y = \frac{2\sqrt{3}}{3}\sin(H)\left(\frac{SaIn-B}{K_M}\right)^{\frac{1}{m}} + \left[\frac{(1-Sa)In-A}{K_m}\right]^{\frac{1}{p}}, Z = \left[\frac{(1-Sa)In-A}{K_m}\right]^{\frac{1}{p}}$$

if $h = 1$,

$$X = \left[\frac{(1-Sa)In-A}{K_m}\right]^{\frac{1}{p}}, Y = \left[\frac{(1-Sa)In-A}{K_m}\right]^{\frac{1}{p}} - \left(\frac{SaIn-B}{K_M}\right)^{\frac{1}{m}}\left[\cos(H)-\frac{\sqrt{3}}{3}\sin(H)\right], Z = \left[\frac{(1-Sa)In-A}{K_m}\right]^{\frac{1}{p}} - \left(\frac{SaIn-B}{K_M}\right)^{\frac{1}{m}}\left[\cos(H)+\frac{\sqrt{3}}{3}\sin(H)\right]$$

if $h = 2$,

$$X = \left(\frac{SaIn-B}{K_M}\right)^{\frac{1}{m}}\left[\cos(H)-\frac{\sqrt{3}}{3}\sin(H)\right] + \left[\frac{(1-Sa)In-A}{K_m}\right]^{\frac{1}{p}}, Y = \left[\frac{(1-Sa)In-A}{K_m}\right]^{\frac{1}{p}}, Z = \left[\frac{(1-Sa)In-A}{K_m}\right]^{\frac{1}{p}} - \frac{2\sqrt{3}}{3}\sin(H)\left(\frac{SaIn-B}{K_M}\right)^{\frac{1}{m}}$$

or if the saturation Sa and the intensity In in the color data in the HSaIn format at the input device side are acquired according to the formulae below,

$$Gl = K_m Min(X,Y,Z)^r + A, \quad In = K_M \left[ X^p + Y^p + Z^p \right]^{\frac{1}{q}} + B, \quad Cl = In - Gl, \quad Sa = \frac{Cl}{In}$$

$K_m$ and $K_M$ are positive real numbers, $K_M > K_m > 0$, $p$, $q$ and $r$ are nonzero real numbers, $In \geq Gl \geq 0, A \geq 0, B \geq 0$

acquiring the color data in the XYZ format at the output device side according to the following formulae:

$$h = [\frac{H}{120^\circ}], \quad \left[ \bullet \right] \text{ is a round symbol with respect to } \bullet, \quad H \in [0^\circ, 360^\circ), h = 0, 1, 2$$

if $h = 0$,

then $Z = \left[ \dfrac{In(1-Sa)-A}{K_m} \right]^{\frac{1}{r}}$

$$\left[ \frac{\sin(120^\circ - H)}{\sin H} Y + \frac{\sin H - \sin(120^\circ - H)}{\sin H} \left[ \frac{In(1-Sa)-A}{K_m} \right]^{\frac{1}{r}} \right]^p + Y^p = \left( \frac{In-B}{K_M} \right)^q - \left[ \frac{In(1-Sa)-A}{K_m} \right]^{\frac{p}{r}}$$

$$X = \frac{\sin(120^\circ - H)}{\sin H} Y + \frac{\sin H - \sin(120^\circ - H)}{\sin H} \left[ \frac{In(1-Sa)-A}{K_m} \right]^{\frac{1}{r}}$$

the values of $X$ and $Y$ represented by $In, Sa, H, p, q$ and $r$ are obtained according to the specific values of $p, q$ and $r, X > Y \geq 0, Y > Z \geq 0,$ $Z$ is a value satisfying the actual physical condition

if $h=1$,

then $X = \left[ \dfrac{In(1-Sa)-A}{K_m} \right]^{\frac{1}{r}}$

$$\left[ \frac{\sin(H-120°)}{\sin(240°-H)}Y + \frac{\sin(240°-H)-\sin(H-120°)}{\sin(240°-H)}\left[ \frac{In(1-Sa)-A}{K_m} \right]^{\frac{1}{r}} \right]^{p} + Y^{p} = \left( \frac{In-B}{K_M} \right)^{q} - \left[ \frac{In(1-Sa)-A}{K_m} \right]^{\frac{p}{r}}$$

$$Z = \frac{\sin(H-120°)}{\sin(240°-H)}Y + \frac{\sin(240°-H)-\sin(H-120°)}{\sin(240°-H)}\left[ \frac{In(1-Sa)-A}{K_m} \right]^{\frac{1}{r}}$$

the values of $X$ and $Y$ represented by $In, Sa, H, p, q$ and $r$ are obtained according to the specific values of $p, q$ and $r$,

$X > Y \geq 0, Y > Z \geq 0$, $Z$ is a value satisfying the actual physical condition

if $h=2$,

then $Y = \left[ \dfrac{In(1-Sa)-A}{K_m} \right]^{\frac{1}{r}}$

$$\left[ \frac{\sin(-H)}{\sin(H-240°)}X + \frac{\sin(H-240°)-\sin(-H)}{\sin(H-240°)}\left[ \frac{In(1-Sa)-A}{K_m} \right]^{\frac{1}{r}} \right]^{p} + X^{p} = \left( \frac{In-B}{K_M} \right)^{q} - \left[ \frac{In(1-Sa)-A}{K_m} \right]^{\frac{p}{r}}$$

$$Z = \frac{\sin(-H)}{\sin(H-240°)}X + \frac{\sin(H-240°)-\sin(-H)}{\sin(H-240°)}\left[ \frac{In(1-Sa)-A}{K_m} \right]^{\frac{1}{r}}$$

the values of $X$ and $Y$ represented by $In, Sa, H, p, q$ and $r$ are obtained according to the specific values of $p, q$ and $r$,

$X > Y \geq 0, Y > Z \geq 0$, $Z$ is a value satisfying the actual physical condition

or if the saturation Sa and the intensity In in the color data in the HSaIn format at the input device side are acquired according to the formulae below,

$$Gl = K_m Min(X,Y,Z)^r + A, \quad Cl = K_M \left[ (X-Gl)^p + (Y-Gl)^p + (Z-Gl)^p \right]^{\frac{1}{q}} + B, \quad In = Cl + Gl, \quad Sa = \frac{Cl}{In}$$

$K_m$ and $K_M$ are positive real numbers, $p$, $q$ and $r$ are nonzero real numbers, $In \geq Gl \geq 0, A \geq 0, B \geq 0$

acquiring the color data in the XYZ format at the output device side according to the following formulae:

$$h = [\frac{H}{120^\circ}], \quad [\bullet] \text{ is a round symbol with respect to } \bullet, \; H \in [0^\circ, 360^\circ), h = 0, 1, 2$$

if $h = 0$,

$$X = \frac{\left(\frac{InSa - B}{K_M}\right)^{\frac{q}{p}} \sin(120^\circ - H)}{\left[\sin^p(120^\circ - H) + \sin^p(H)\right]^{\frac{1}{p}}} + \left[\frac{In(1 - Sa) - A}{K_m}\right]^{\frac{1}{r}}, \; Y = \frac{\left(\frac{InSa - B}{K_M}\right)^{\frac{q}{p}} \sin(H)}{\left[\sin^p(H) + \sin^p(120^\circ - H)\right]^{\frac{1}{p}}} + \left[\frac{In(1 - Sa) - A}{K_m}\right]^{\frac{1}{r}}, \; Z = \left[\frac{In(1 - Sa) - A}{K_m}\right]^{\frac{1}{r}}$$

if $h = 1$,

$$X = \left[\frac{In(1 - Sa) - A}{K_m}\right]^{\frac{1}{r}}, \; Y = \frac{\left(\frac{InSa - B}{K_M}\right)^{\frac{q}{p}} \sin(240^\circ - H)}{\left[\sin^p(H - 120^\circ) + \sin^p(240^\circ - H)\right]^{\frac{1}{p}}} + \left[\frac{In(1 - Sa) - A}{K_m}\right]^{\frac{1}{r}}, \; Z = \frac{\left(\frac{InSa - B}{K_M}\right)^{\frac{q}{p}} \sin(H - 120^\circ)}{\left[\sin^p(H - 120^\circ) + \sin^p(240^\circ - H)\right]^{\frac{1}{p}}} + \left[\frac{In(1 - Sa) - A}{K_m}\right]^{\frac{1}{r}}$$

if $h = 2$,

$$X = \frac{\left(\frac{InSa - B}{K_M}\right)^{\frac{q}{p}} \sin(H - 240^\circ)}{\left[\sin^p(-H) + \sin^p(H - 240^\circ)\right]^{\frac{1}{p}}} + \left[\frac{In(1 - Sa) - A}{K_m}\right]^{\frac{1}{r}}, \; Y = \left[\frac{In(1 - Sa) - A}{K_m}\right]^{\frac{1}{r}}, \; Z = \frac{\left(\frac{InSa - B}{K_M}\right)^{\frac{q}{p}} \sin(-H)}{\left[\sin^p(H - 240^\circ) + \sin^p(-H)\right]^{\frac{1}{p}}} + \left[\frac{In(1 - Sa) - A}{K_m}\right]^{\frac{1}{r}}$$

**35.** The method according to claim 34, wherein the converting the color data in the XYZ format in the CIEXYZ color appearance color space into color image data in an XYZ format at the output device side comprises:

acquiring the hue deviation angles $\alpha_a$, $\beta_a$ and $\gamma_a$ of the chromatic vectors $\vec{R_a}$, $\vec{G_a}$, $\vec{B_a}$ within the chromatic plane relative to $\vec{i}$, $\vec{j}$ and $\vec{k}$ respectively using spectrum characteristic data of $R_a$', $G_a$' and $B_a$', and converting color data $X_a$, $Y_a$, $Z_a$ in the CIEXYZ color appearance color space into color appearance color data $R_a$', $G_a$', $B_a$' according to the following formulae 71-78:

$$\begin{bmatrix} R_a' \\ G_a' \\ B_a' \end{bmatrix} = \begin{bmatrix} \dfrac{\sin(120^0 - \alpha_a)}{\sin(60^0)} & 0 & \dfrac{\sin(\gamma_a)}{\sin(60^0)} \\ \dfrac{\sin(\alpha_a)}{\sin(60^0)} & \dfrac{\sin(120^0 - \beta_a)}{\sin(60^0)} & 0 \\ 0 & \dfrac{\sin(\beta_a)}{\sin(60^0)} & \dfrac{\sin(120^0 - \gamma_a)}{\sin(60^0)} \end{bmatrix}^{-1} \times \begin{bmatrix} X_a \\ Y_a \\ Z_a \end{bmatrix}$$

(Formula 71)

in Formula 71, $\alpha_a > 0$, $\beta_a > 0$, $\gamma_a > 0$;

$$\begin{bmatrix} R_a' \\ G_a' \\ B_a' \end{bmatrix} = \begin{bmatrix} \dfrac{\sin(120^0 - \alpha_a)}{\sin(60^0)} & 0 & 0 \\ \dfrac{\sin(\alpha_a)}{\sin(60^0)} & \dfrac{\sin(120^0 - \beta_a)}{\sin(60^0)} & \dfrac{\sin(-\gamma_a)}{\sin(60^0)} \\ 0 & \dfrac{\sin(\beta_a)}{\sin(60^0)} & \dfrac{\sin(120^0 + \gamma_a)}{\sin(60^0)} \end{bmatrix}^{-1} \times \begin{bmatrix} X_a \\ Y_a \\ Z_a \end{bmatrix}$$

(Formula 72)

in Formula 72, $\alpha_a > 0$, $\beta_a > 0$, $\gamma_a < 0$;

$$
\begin{bmatrix} R_a' \\ G_a' \\ B_a' \end{bmatrix} = \begin{bmatrix} \dfrac{\sin(120^0 - \alpha_a)}{\sin(60^0)} & \dfrac{\sin(-\beta_a)}{\sin(60^0)} & \dfrac{\sin(\gamma_a)}{\sin(60^0)} \\[2mm] \dfrac{\sin(\alpha_a)}{\sin(60^0)} & \dfrac{\sin(120^0 + \beta_a)}{\sin(60^0)} & 0 \\[2mm] 0 & 0 & \dfrac{\sin(120^0 - \gamma_a)}{\sin(60^0)} \end{bmatrix}^{-1} \times \begin{bmatrix} X_a \\ Y_a \\ Z_a \end{bmatrix}
$$

(Formula 73)

in Formula 73, $\alpha_a > 0$, $\beta_a < 0$, $\gamma_a > 0$;

$$
\begin{bmatrix} R_a' \\ G_a' \\ B_a' \end{bmatrix} = \begin{bmatrix} \dfrac{\sin(120^0 - \alpha_a)}{\sin(60^0)} & \dfrac{\sin(-\beta_a)}{\sin(60^0)} & 0 \\[2mm] \dfrac{\sin(\alpha_a)}{\sin(60^0)} & \dfrac{\sin(120^0 + \beta_a)}{\sin(60^0)} & \dfrac{\sin(-\gamma_a)}{\sin(60^0)} \\[2mm] 0 & 0 & \dfrac{\sin(120^0 + \gamma_a)}{\sin(60^0)} \end{bmatrix}^{-1} \times \begin{bmatrix} X_a \\ Y_a \\ Z_a \end{bmatrix}
$$

(Formula 74)

in Formula 74, $\alpha_a > 0$, $\beta_a < 0$, $\gamma_a < 0$;

$$
\begin{bmatrix} R_a' \\ G_a' \\ B_a' \end{bmatrix} = \begin{bmatrix} \dfrac{\sin(120^0 + \alpha_a)}{\sin(60^0)} & 0 & \dfrac{\sin(\gamma_a)}{\sin(60^0)} \\[2mm] 0 & \dfrac{\sin(120^0 - \beta_a)}{\sin(60^0)} & 0 \\[2mm] \dfrac{\sin(-\alpha_a)}{\sin(60^0)} & \dfrac{\sin(\beta_a)}{\sin(60^0)} & \dfrac{\sin(120^0 - \gamma_a)}{\sin(60^0)} \end{bmatrix}^{-1} \times \begin{bmatrix} X_a \\ Y_a \\ Z_a \end{bmatrix}
$$

(Formula 75)

in Formula 75, $\alpha_a < 0$, $\beta_a > 0$, $\gamma_a > 0$;

$$
\begin{bmatrix} R_a' \\ G_a' \\ B_a' \end{bmatrix} = \begin{bmatrix} \dfrac{\sin(120^0 + \alpha_a)}{\sin(60^0)} & 0 & 0 \\[2mm] 0 & \dfrac{\sin(120^0 - \beta_a)}{\sin(60^0)} & \dfrac{\sin(-\gamma_a)}{\sin(60^0)} \\[2mm] \dfrac{\sin(-\alpha_a)}{\sin(60^0)} & \dfrac{\sin(\beta_a)}{\sin(60^0)} & \dfrac{\sin(120^0 + \gamma_a)}{\sin(60^0)} \end{bmatrix}^{-1} \times \begin{bmatrix} X_a \\ Y_a \\ Z_a \end{bmatrix}
$$

(Formula 76)

in Formula 76, $\alpha_a < 0$, $\beta_a > 0$, $\gamma_a < 0$;

$$
\begin{bmatrix} R_a^{'} \\ G_a^{'} \\ B_a^{'} \end{bmatrix} = \begin{bmatrix} \dfrac{\sin(120^0 + \alpha_a)}{\sin(60^0)} & \dfrac{\sin(-\beta_a)}{\sin(60^0)} & \dfrac{\sin(\gamma_a)}{\sin(60^0)} \\ 0 & \dfrac{\sin(120^0 + \beta_a)}{\sin(60^0)} & 0 \\ \dfrac{\sin(-\alpha_a)}{\sin(60^0)} & 0 & \dfrac{\sin(120^0 - \gamma_a)}{\sin(60^0)} \end{bmatrix}^{-1} \times \begin{bmatrix} X_a \\ Y_a \\ Z_a \end{bmatrix}
$$

(Formula 77)

in Formula 77, $\alpha_a > 0$, $\beta_a < 0$, $\gamma_a > 0$;

$$
\begin{bmatrix} R_a^{'} \\ G_a^{'} \\ B_a^{'} \end{bmatrix} = \begin{bmatrix} \dfrac{\sin(120^0 + \alpha_a)}{\sin(60^0)} & \dfrac{\sin(-\beta_a)}{\sin(60^0)} & 0 \\ 0 & \dfrac{\sin(120^0 + \beta_a)}{\sin(60^0)} & \dfrac{\sin(-\gamma_a)}{\sin(60^0)} \\ \dfrac{\sin(-\alpha_a)}{\sin(60^0)} & 0 & \dfrac{\sin(120^0 + \gamma_a)}{\sin(60^0)} \end{bmatrix}^{-1} \times \begin{bmatrix} X_a \\ Y_a \\ Z_a \end{bmatrix}
$$

(Formula 78)

in Formula 78, $\alpha_a < 0$, $\beta_a < 0$, $\gamma_a < 0$;

wherein in Formulae 71-78, $\alpha_a$ is a hue deviation angle between $\overrightarrow{R_a^{'}}$ and $\vec{i}$ ; $\beta_a$ is a hue deviation angle between $\overrightarrow{G_a^{'}}$ and $\vec{J}$ ; $\gamma_a$ is a hue deviation angle between $\overrightarrow{B_a^{'}}$ and $\overline{k}$, the values of $R_a$', $G_a$' and $B_a$' are color appearance color data in combination with an observation condition obtained after the conversion; the values of $X_a$, $Y_a$ and $Z_a$ in the formulae 71-78 are the color data in the XYZ format in the XYZ color appearance color space; $\overrightarrow{R_a^{'}}$, $\overrightarrow{G_a^{'}}$ and $\overrightarrow{B_a^{'}}$ are the color appearance color data in combination with the observation condition to represent chromatic vectors within the chromatic plane;
converting the color data $R_a$', $G_a$', $B_a$' into color data in an XYZ format in the CIEXYZ color space at the output device side according to a technical standard CIECAM02.

36. The method according to claim 31, after the step of converting the color data in the XYZ format in the CIEXYZ color appearance color space into color image data in an XYZ format at the output device side, further comprising:

converting the color data in the XYZ format at the output device side into color data in a UVW format according to the following formulae 21-28:

$$
\begin{bmatrix} U_2 \\ V_2 \\ W_2 \end{bmatrix} = \begin{bmatrix} \dfrac{\sin(120^0 - \alpha_2)}{\sin(60^0)} & 0 & \dfrac{\sin(\gamma_2)}{\sin(60^0)} \\ \dfrac{\sin(\alpha_2)}{\sin(60^0)} & \dfrac{\sin(120^0 - \beta_2)}{\sin(60^0)} & 0 \\ 0 & \dfrac{\sin(\beta_2)}{\sin(60^0)} & \dfrac{\sin(120^0 - \gamma_2)}{\sin(60^0)} \end{bmatrix}^{-1} \times \begin{bmatrix} X \\ Y \\ Z \end{bmatrix}
$$

(Formula 21)

in Formula 21, $\alpha_2 > 0$, $\beta_2 > 0$, $\gamma_2 > 0$;

$$\begin{bmatrix} U_2 \\ V_2 \\ W_2 \end{bmatrix} = \begin{bmatrix} \dfrac{\sin(120^0 - \alpha_2)}{\sin(60^0)} & 0 & 0 \\ \dfrac{\sin(\alpha_2)}{\sin(60^0)} & \dfrac{\sin(120^0 - \beta_2)}{\sin(60^0)} & \dfrac{\sin(-\gamma_2)}{\sin(60^0)} \\ 0 & \dfrac{\sin(\beta_2)}{\sin(60^0)} & \dfrac{\sin(120^0 + \gamma_2)}{\sin(60^0)} \end{bmatrix}^{-1} \times \begin{bmatrix} X \\ Y \\ Z \end{bmatrix}$$

(Formula 22)

in Formula 22, $\alpha_2 > 0$, $\beta_2 > 0$, $\gamma_2 < 0$;

$$\begin{bmatrix} U_2 \\ V_2 \\ W_2 \end{bmatrix} = \begin{bmatrix} \dfrac{\sin(120^0 - \alpha_2)}{\sin(60^0)} & \dfrac{\sin(-\beta_2)}{\sin(60^0)} & \dfrac{\sin(\gamma_2)}{\sin(60^0)} \\ \dfrac{\sin(\alpha_2)}{\sin(60^0)} & \dfrac{\sin(120^0 + \beta_2)}{\sin(60^0)} & 0 \\ 0 & 0 & \dfrac{\sin(120^0 - \gamma_2)}{\sin(60^0)} \end{bmatrix}^{-1} \times \begin{bmatrix} X \\ Y \\ Z \end{bmatrix}$$

(Formula 23)

in Formula 23, $\alpha_2 > 0$, $\beta_2 < 0$, $\gamma_2 > 0$;

$$\begin{bmatrix} U_2 \\ V_2 \\ W_2 \end{bmatrix} = \begin{bmatrix} \dfrac{\sin(120^0 - \alpha_2)}{\sin(60^0)} & \dfrac{\sin(-\beta_2)}{\sin(60^0)} & 0 \\ \dfrac{\sin(\alpha_2)}{\sin(60^0)} & \dfrac{\sin(120^0 + \beta_2)}{\sin(60^0)} & \dfrac{\sin(-\gamma_2)}{\sin(60^0)} \\ 0 & 0 & \dfrac{\sin(120^0 + \gamma_2)}{\sin(60^0)} \end{bmatrix}^{-1} \times \begin{bmatrix} X \\ Y \\ Z \end{bmatrix}$$

(Formula 24)

in Formula 24, $\alpha_2 > 0$, $\beta_2 < 0$, $\gamma_2 < 0$;

$$\begin{bmatrix} U_2 \\ V_2 \\ W_2 \end{bmatrix} = \begin{bmatrix} \dfrac{\sin(120^0 + \alpha_2)}{\sin(60^0)} & 0 & \dfrac{\sin(\gamma_2)}{\sin(60^0)} \\ 0 & \dfrac{\sin(120^0 - \beta_2)}{\sin(60^0)} & 0 \\ \dfrac{\sin(-\alpha_2)}{\sin(60^0)} & \dfrac{\sin(\beta_2)}{\sin(60^0)} & \dfrac{\sin(120^0 - \gamma_2)}{\sin(60^0)} \end{bmatrix}^{-1} \times \begin{bmatrix} X \\ Y \\ Z \end{bmatrix}$$

(Formula 25)

in Formula 25, $\alpha_2 < 0$, $\beta_2 > 0$, $\gamma_2 > 0$;

$$\begin{bmatrix} U_2 \\ V_2 \\ W_2 \end{bmatrix} = \begin{bmatrix} \dfrac{\sin(120^0 + \alpha_2)}{\sin(60^0)} & 0 & 0 \\ 0 & \dfrac{\sin(120^0 - \beta_2)}{\sin(60^0)} & \dfrac{\sin(-\gamma_2)}{\sin(60^0)} \\ \dfrac{\sin(-\alpha_2)}{\sin(60^0)} & \dfrac{\sin(\beta_2)}{\sin(60^0)} & \dfrac{\sin(120^0 + \gamma_2)}{\sin(60^0)} \end{bmatrix}^{-1} \times \begin{bmatrix} X \\ Y \\ Z \end{bmatrix}$$

(Formula 26)

in Formula 26, $\alpha_2 < 0$, $\beta_2 > 0$, $\gamma_2 < 0$;

$$\begin{bmatrix} U_2 \\ V_2 \\ W_2 \end{bmatrix} = \begin{bmatrix} \dfrac{\sin(120^0 + \alpha_2)}{\sin(60^0)} & \dfrac{\sin(-\beta_2)}{\sin(60^0)} & \dfrac{\sin(\gamma_2)}{\sin(60^0)} \\ 0 & \dfrac{\sin(120^0 + \beta_2)}{\sin(60^0)} & 0 \\ \dfrac{\sin(-\alpha_2)}{\sin(60^0)} & 0 & \dfrac{\sin(120^0 - \gamma_2)}{\sin(60^0)} \end{bmatrix}^{-1} \times \begin{bmatrix} X \\ Y \\ Z \end{bmatrix}$$

(Formula 27)

in Formula 27, $\alpha_2 > 0$, $\beta_2 < 0$, $\gamma_2 > 0$;

$$\begin{bmatrix} U_2 \\ V_2 \\ W_2 \end{bmatrix} = \begin{bmatrix} \dfrac{\sin(120^0 + \alpha_2)}{\sin(60^0)} & \dfrac{\sin(-\beta_2)}{\sin(60^0)} & 0 \\ 0 & \dfrac{\sin(120^0 + \beta_2)}{\sin(60^0)} & \dfrac{\sin(-\gamma_2)}{\sin(60^0)} \\ \dfrac{\sin(-\alpha_2)}{\sin(60^0)} & 0 & \dfrac{\sin(120^0 + \gamma_2)}{\sin(60^0)} \end{bmatrix}^{-1} \times \begin{bmatrix} X \\ Y \\ Z \end{bmatrix}$$

(Formula 28)

in Formula 28, $\alpha_2 < 0$, $\beta_2 < 0$, $\gamma_2 < 0$;

wherein in the formulae 21-28, $\alpha_2$ is a hue deviation angle between $\overrightarrow{U_2}$ and $\vec{i}$ ; $\beta_2$ is a hue deviation angle between $\vec{V_2}$ and $\vec{j}$ ; $\gamma_2$ is a hue deviation angle between $\overrightarrow{W_2}$ and $\vec{k}$, the values of $U_2$, $V_2$ and $W_2$ are the color data in the UVW format of the output device obtained after the conversion; the values of X, Y and Z in the formulae 21-28 are the color data in the XYZ format at the output device; $\overrightarrow{U_2}$, $\vec{V_2}$ and $\overrightarrow{W_2}$ are UVW channel color data of the output device to represent chromatic vectors within the chromatic plane.

37. The method according to claim 31, after the step of converting the color data in the XYZ format in the CIEXYZ color appearance color space into color image data in an XYZ format at the output device side, further comprising:

obtaining the color data $C_1$, $C_2$, ..., $C_n$ in the multichannel format according to characterized hue data $\alpha_1$, $\alpha_2$, ..., $\alpha_n$ of the respective channels $C_1$, $C_2$, ..., $C_n$ in the color space of the multichannel device and a conversion relationship from predefined color data in an XYZ format at the output device side to chromatic vectors $\overline{C_1}, \overline{C_2}, \cdots, \overline{C_n}$ within the chromatic plane.

38. A method of managing color data between a color space of a device and a CIEXYZ Cartesian color space, comprising:

acquiring color data of a chromatic image of a chromatic scene from an input device;
converting the acquired color data into color data in an XYZ format at an input device side according to color characteristic data of the input device.

39. The method according to claim 38, wherein the color data of the chromatic image of the chromatic scene acquired from the input device is in a UVW format; and

the converting the acquired color data into color data in an XYZ format at the input device side according to color characteristic data of the input device comprises:

converting the color data in the UVW format acquired from the input device into color data in an XYZ format at the input device side according to color characteristic data $\alpha_1$, $\beta_1$, $\gamma_1$ of the input device and based on the following formulae 3-10, wherein the UVW format is a format represented by intensity numerical values after characterization of light intensity values perceived by a color sensor of the device at three different spectral sections:

$$\begin{bmatrix} X \\ Y \\ Z \end{bmatrix} = \begin{bmatrix} \dfrac{\sin(120^0 - \alpha_1)}{\sin(60^0)} & 0 & \dfrac{\sin(\gamma_1)}{\sin(60^0)} \\ \dfrac{\sin(\alpha_1)}{\sin(60^0)} & \dfrac{\sin(120^0 - \beta_1)}{\sin(60^0)} & 0 \\ 0 & \dfrac{\sin(\beta_1)}{\sin(60^0)} & \dfrac{\sin(120^0 - \gamma_1)}{\sin(60^0)} \end{bmatrix} \times \begin{bmatrix} U_1 \\ V_1 \\ W_1 \end{bmatrix} \qquad \text{(Formula 3)}$$

in Formula 3, $\alpha_1 > 0$, $\beta_1 > 0$, $\gamma_1 > 0$;

$$\begin{bmatrix} X \\ Y \\ Z \end{bmatrix} = \begin{bmatrix} \dfrac{\sin(120^0 - \alpha_1)}{\sin(60^0)} & 0 & 0 \\ \dfrac{\sin(\alpha_1)}{\sin(60^0)} & \dfrac{\sin(120^0 - \beta_1)}{\sin(60^0)} & \dfrac{\sin(-\gamma_1)}{\sin(60^0)} \\ 0 & \dfrac{\sin(\beta_1)}{\sin(60^0)} & \dfrac{\sin(120^0 + \gamma_1)}{\sin(60^0)} \end{bmatrix} \times \begin{bmatrix} U_1 \\ V_1 \\ W_1 \end{bmatrix} \qquad \text{(Formula 4)}$$

in Formula 4, $\alpha_1 > 0$, $\beta_1 > 0$, $\gamma_1 < 0$;

$$\begin{bmatrix} X \\ Y \\ Z \end{bmatrix} = \begin{bmatrix} \dfrac{\sin(120^0 - \alpha_1)}{\sin(60^0)} & \dfrac{\sin(-\beta_1)}{\sin(60^0)} & \dfrac{\sin(\gamma_1)}{\sin(60^0)} \\ \dfrac{\sin(\alpha_1)}{\sin(60^0)} & \dfrac{\sin(120^0 + \beta_1)}{\sin(60^0)} & 0 \\ 0 & 0 & \dfrac{\sin(120^0 - \gamma_1)}{\sin(60^0)} \end{bmatrix} \times \begin{bmatrix} U_1 \\ V_1 \\ W_1 \end{bmatrix} \qquad \text{(Formula 5)}$$

in Formula 5, $\alpha_1 > 0$, $\beta_1 < 0$, $\gamma_1 > 0$;

$$
\begin{bmatrix} X \\ Y \\ Z \end{bmatrix} = \begin{bmatrix} \dfrac{\sin(120^0 - \alpha_1)}{\sin(60^0)} & \dfrac{\sin(-\beta_1)}{\sin(60^0)} & 0 \\[2ex] \dfrac{\sin(\alpha_1)}{\sin(60^0)} & \dfrac{\sin(120^0 + \beta_1)}{\sin(60^0)} & \dfrac{\sin(-\gamma_1)}{\sin(60^0)} \\[2ex] 0 & 0 & \dfrac{\sin(120^0 + \gamma_1)}{\sin(60^0)} \end{bmatrix} \times \begin{bmatrix} U_1 \\ V_1 \\ W_1 \end{bmatrix}
$$

(Formula 6)

in Formula 6, $\alpha_1 > 0$, $\beta_1 < 0$, $\gamma_1 < 0$;

$$
\begin{bmatrix} X \\ Y \\ Z \end{bmatrix} = \begin{bmatrix} \dfrac{\sin(120^0 + \alpha_1)}{\sin(60^0)} & 0 & \dfrac{\sin(\gamma_1)}{\sin(60^0)} \\[2ex] 0 & \dfrac{\sin(120^0 - \beta_1)}{\sin(60^0)} & 0 \\[2ex] \dfrac{\sin(-\alpha_1)}{\sin(60^0)} & \dfrac{\sin(\beta_1)}{\sin(60^0)} & \dfrac{\sin(120^0 - \gamma_1)}{\sin(60^0)} \end{bmatrix} \times \begin{bmatrix} U_1 \\ V_1 \\ W_1 \end{bmatrix}
$$

(Formula 7)

in Formula 7, $\alpha_1 < 0$, $\beta_1 > 0$, $\gamma_1 > 0$;

$$
\begin{bmatrix} X \\ Y \\ Z \end{bmatrix} = \begin{bmatrix} \dfrac{\sin(120^0 + \alpha_1)}{\sin(60^0)} & 0 & 0 \\[2ex] 0 & \dfrac{\sin(120^0 - \beta_1)}{\sin(60^0)} & \dfrac{\sin(-\gamma_1)}{\sin(60^0)} \\[2ex] \dfrac{\sin(-\alpha_1)}{\sin(60^0)} & \dfrac{\sin(\beta_1)}{\sin(60^0)} & \dfrac{\sin(120^0 + \gamma_1)}{\sin(60^0)} \end{bmatrix} \times \begin{bmatrix} U_1 \\ V_1 \\ W_1 \end{bmatrix}
$$

(Formula 8)

in Formula 8, $\alpha_1 < 0$, $\beta_1 > 0$, $\gamma_1 < 0$;

$$
\begin{bmatrix} X \\ Y \\ Z \end{bmatrix} = \begin{bmatrix} \dfrac{\sin(120^0 + \alpha_1)}{\sin(60^0)} & \dfrac{\sin(-\beta_1)}{\sin(60^0)} & \dfrac{\sin(\gamma_1)}{\sin(60^0)} \\[2ex] 0 & \dfrac{\sin(120^0 + \beta_1)}{\sin(60^0)} & 0 \\[2ex] \dfrac{\sin(-\alpha_1)}{\sin(60^0)} & 0 & \dfrac{\sin(120^0 - \gamma_1)}{\sin(60^0)} \end{bmatrix} \times \begin{bmatrix} U_1 \\ V_1 \\ W_1 \end{bmatrix}
$$

(Formula 9)

$$Y\vec{j}$$

120°

120°

$$X\vec{i}$$

120°

$$Z\vec{k}$$

Fig.1

Input device side        mapping        Output device side

Color space of device    XYZ      HSaln                HSaln      XYZ      Color space of device

220

222

224

2201

HSaln mapping

2241

Fig. 2

Input device side              mapping            Output device side

| Color space of device | XYZ color space | XYZ color appearance color space | HSaln color appearance color space | | HSaln color appearance color space | XYZ color appearance color space | XYZ color space | Color space of device |

320          322         324

3201      3202      HSaln mapping     3241      3241

Fig. 3

Input device side       mapping      Output device side

| Color space of device | XYZ color space | | XYZ color space | Color space of deive |

410        422        412

HSaln mapping

Fig. 4

Fig.5

Fig.6

Fig.7

Fig.8

Fig.9

Fig. 7

EP 2 830 314 A1

Fig.10

Fig.11

Fig.12

Fig.13

89

# INTERNATIONAL SEARCH REPORT

| | International application No. |
|---|---|
| | PCT/CN2013/072711 |

**A. CLASSIFICATION OF SUBJECT MATTER**

H04N 9/64 (2006.01) i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, CNKI, VEN: color, colour, space, XYZ, UVW, HIS, HSaln, HGlCl, transform, convert, map

**C. DOCUMENTS CONSIDERED TO BE RELEVANT**

| Category* | Citation of document, with indication, where appropriate, of the relevant passages | Relevant to claim No. |
|---|---|---|
| X | CN 101621703 A (BEIJING CE OPEN SOURCE SOFTWARE CO LTD) 06 January 2010 (06.01.2010) description, page 2, lines 9-15 | 38, 41 |
| A | CN 102119532 A (INTEL CORP.) 06 July 2011 (06.07.2011) the whole document | 1-44 |
| A | CN 101778299 A (UNIV QINGDAO) 14 July 2010 (14.07.2010) the whole document | 1-44 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 June 2013 (03.06.2013) | 27 June 2013 (27.06.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>PAN, Yun<br><br>Telephone No. (86-10)62411505 |

Form PCT/ISA /210 (second sheet) (July 2009)

## INTERNATIONAL SEARCH REPORT
### Information on patent family members

| | | International application No. |
|---|---|---|
| | | PCT/CN2013/072711 |

| Patent Documents referred in the Report | Publication Date | Patent Family | Publication Date |
|---|---|---|---|
| CN 101621703 A | 06.01.2010 | CN 101621703 B | 21.12.2011 |
| CN 102119532 A | 06.07.2011 | WO 2010006015 A2 | 14.01.2010 |
| | | KR 1244576 B1 | 25.03.2013 |
| | | US 2010008427 A1 | 14.01.2010 |
| | | JP 2011527862 A | 04.11.2011 |
| | | KR 20110036612 A | 07.04.2011 |
| | | DE 112009001679 T5 | 19.05.2011 |
| | | JP 5180374 B2 | 10.04.2013 |
| | | WO 2010006015 A3 | 15.04.2010 |
| | | GB 2473781 A | 23.03.2011 |
| | | GB 2473781 B | 20.03.2013 |
| CN 101778299 A | 14.07.2010 | None | |

Form PCT/ISA /210 (patent family annex) (July 2009)